(19) Europäisches Patentamt
European Patent Office
Office européen des brevets

(11) Veröffentlichungsnummer: **0 040 806**
**B1**

(12) # EUROPÄISCHE PATENTSCHRIFT

(45) Veröffentlichungstag der Patentschrift: **19.09.84**

(51) Int. Cl.³: **C 09 B 62/04,** C 09 B 62/503, C 07 D 251/46, C 07 D 251/50

(21) Anmeldenummer: **81103860.3**

(22) Anmeldetag: **20.05.81**

(54) **Wasserlösliche farbige Verbindungen, Verfahren zu deren Herstellung und ihre Verwendung als Farbstoffe.**

(30) Priorität: **24.05.80 DE 3019936**

(43) Veröffentlichungstag der Anmeldung: **02.12.81 Patentblatt 81/48**

(45) Bekanntmachung des Hinweises auf die Patenterteilung: **19.09.84 Patentblatt 84/38**

(84) Benannte Vertragsstaaten: **CH DE FR GB IT LI**

(56) Entgegenhaltungen:
**DE - B - 1 265 698**
**FR - A - 2 437 426**

**CHEMICAL ABSTRACTS, Band 78, Nr. 24, 18. Juni 1973, Seite 52, Nr. 148950r, Columbus, Ohio, U.S.A.**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Meininger, Fritz, Dr., Loreleistrasse 7, D-6230 Frankfurt am Main 80 (DE)**
Erfinder: **Otten, Joachim, Dr., *, (verstorben) (DE)**

**EP 0 040 806 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung liegt auf dem technischen Gebiet der faserreaktiven Farbstoffe.

Aus der deutschen Offenlegungsschrift 29 27 102 sind Azofarbstoffe bekannt, die einen faserreaktiven Rest aus der Vinylsulfonreihe und als einen weiteren faserreaktiven Rest einen Monofluortriazinylrest enthalten. Die beschriebenen Farbstoffe besitzen jedoch gewisse anwendungstechnische Mängel, so daß sie verschiedenen Anforderungen nicht vollauf genügen.

Ähnliche Azofarbstoffe sind aus der französischen Patentanmeldungs-Veröffentlichung Nr. 24 37 426 bekannt. Ebenso sind in der deutschen Auslegeschrift Nr. 12 65 698 Azofarbstoffe beschrieben, die einen faserreaktiven Rest der Vinylsulfonreihe und als einen weiteren faserreaktiven Rest einen Monochlortriazinylrest enthalten. In allen diesen bekannten Azofarbstoffen sind die beiden Reaktivreste nicht an unterschiedlichen Stellen an den Farbstoffchromophor gebunden, sondern in der Weise, daß der Chromophor über eine Aminogruppe durch den Halogenotriazinylrest substituiert ist, der wiederum über eine Phenylamino- oder Naphthylaminogruppe mit dem faserreaktiven Rest der Vinylsulfonreihe verknüpft ist.

Mit der vorliegenden Erfindung wurden nunmehr neue wertvolle wasserlösliche, sulfogruppenhaltige Verbindungen mit faserreaktiven Farbstoffeigenschaften gefunden, die diesen bekannten Farbstoffen teilweise isomer sind oder sich zusätzlich durch den Austausch des Chloratoms durch das Fluoratom im Triazinrest unterscheiden. In überraschender Weise besitzen diejenigen den bekannten Azoverbindungen konstitutionell am nächsten liegenden Azoverbindungen eine deutlich erhöhte Farbstärke bei Anwendung in einem üblichen Klotz-Kurzverweil-Färbeverfahren und darüber hinaus im Vergleich zu einem isomeren Fluortriazinyl-Azofarbstoff der genannten französischen Patentanmeldungs-Veröffentlichung eine deutlich bessere Überfärbeechtheit.

Die neuen, erfindungsgemäßen Verbindungen entsprechen der nachstehenden allgemeinen Formel (1)

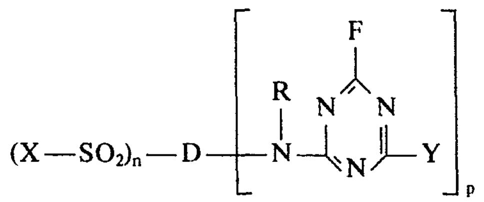

(1)

In dieser Formel (1) bedeuten:

- D ist der Rest eines organischen, vorzugsweise sulfogruppenhaltigen Farbstoffmoleküls;
- X ist die Vinyl-, die $\beta$-Thiosulfatoäthyl-, die $\beta$-Sulfatoäthyl- oder die $\beta$-Chloräthyl-Gruppe;
- R ist ein Wasserstoffatom oder eine Alkylgruppe von 1 bis 4 C-Atomen;
- n ist die Zahl 1 oder 2;
- p ist die Zahl 1 oder 2;
- Y ist ein Rest der Formel $-O-R^1$ oder der Formel $-S-R^1$ oder der Formel

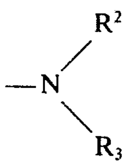

in welchen

- $R^1$ für einen gegebenenfalls substituierten Alkylrest von 1 bis 4 C-Atomen oder für einen gegebenenfalls substituierten aromatischen carbocyclischen oder aromatischen heterocyclischen Rest steht,
- $R^2$ ein Wasserstoffatom oder ein gegebenenfalls substituierter niederer aliphatischer Rest oder ein cycloaliphatischer Rest ist und
- $R^3$ ein Wasserstoffatom oder ein gegebenenfalls substituierter niederer aliphatischer Rest oder ein gegebenenfalls substituierter aromatischer carbocyclischer Rest oder eine niedere Alkoxygruppe oder die Cyangruppe oder die Gruppe der Formel $-CS-NH_2$ oder eine gegebenenfalls substituierte Aminogruppe bedeutet oder
- $R^2$ und $R^3$ zusammen mit dem Stickstoffatom einen niederes Alkylen und gegebenenfalls Heteroatome, wie beispielsweise ein Stickstoff- oder Sauerstoffatom, enthaltenden Ring bilden, wie beispielsweise einen Morpholin-, Piperidin- oder Piperazin-Ring.

Niedere aliphatische Reste sind niedere Alkyl- und Alkenylreste. Die in den obigen Definitionen verwendete Angabe »niedere« bedeutet hier wie im folgenden, daß der in der Gruppe enthaltene Alkyl- oder Alkylenrest aus 1 bis 4 C-Atomen und der Alkenylrest aus 2 bis 4 C-Atomen besteht.

Substituierte niedere Alkylreste sind beispielsweise Alkylgruppen von 1 bis 4 C-Atomen, die durch einen oder zwei Substituenten aus der Gruppe Acetylamino, Hydroxy, Sulfato, β-Sulfatoäthylsulfonyl, β-Thiosulfatoäthylsulfonyl, niederes Alkoxy, Sulfo, Carboxy, Phenyl, Naphthyl, durch Sulfo, Carboxy, β-Sulfatoäthylsulfonyl, β-Thiosulfatoäthylsulfonyl, Methyl, Äthyl, Methoxy, Äthoxy, Chlor, Sulfamoyl und/oder Carbamoyl substituiertes Phenyl und durch Sulfo, Carboxy, β-Sulfatoäthylsulfonyl, β-Thiosulfatoäthylsulfonyl, Sulfamoyl und/oder Carbamoyl substituiertes Naphthyl substituiert sind. – Ein cycloaliphatischer Rest ist beispielsweise der Cyclohexylrest. – Aromatische carbocyclische Reste sind vorzugsweise die Phenyl- und Naphthylreste; diese können beispielsweise durch Substituenten aus der Gruppe Carboxy, Sulfo, niederes Alkyl, niederes Alkoxy, Hydroxy, Chlor und β-Sulfatoäthylsulfonyl substituiert sein.

Gegebenenfalls substituierte Aminogruppen, die für den Formelrest $R^3$ stehen können, sind beispielsweise die Aminogruppe selbst, eine niedere Alkylamino-, eine Dialkylaminogruppe mit jeweils niederen Alkylresten, eine N-Methyl-N-phenylaminogruppe oder die Phenylaminogruppe oder eine im Phenylrest durch Substituenten aus der Gruppe Sulfo, Carboxy, Chlor, niederes Alkyl und niederes Alkoxy substituierte Phenylaminogruppe oder eine Gruppe der Formel

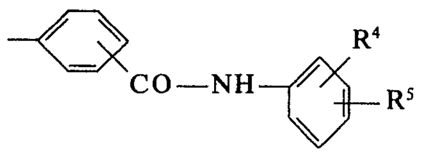

in welcher

$R^4$ ein Wasserstoffatom, ein Chloratom, eine Methyl- oder Methoxygruppe oder Nitrogruppe bedeutet und

$R^5$ für eine Sulfogruppe oder eine β-Sulfatoäthylsulfonyl- oder β-Thiosulfatoäthylsulfonylgruppe steht.

Der Formelrest D ist vorzugsweise der Rest eines wasserlöslichen, sulfogruppenhaltigen organischen Farbstoffes, wie insbesondere der eines sulfogruppenhaltigen Monoazofarbstoffes oder Disazofarbstoffes oder eines sulfogruppenhaltigen 1-Amino- oder 1-Anilino-anthrachinon-Farbstoffes, insbesondere 4-Phenylamino-1-amino-anthrachinon-2-sulfonsäure-Farbstoffderivates, oder der eines sulfogruppenhaltigen Phthalocyaninfarbstoffes, insbesondere Kupfer-oder Nickelphthalocyaninfarbstoffes, wobei die Sulfogruppe(n) bevorzugt am Phthalocyaninrest gebunden ist (sind), oder der eines sulfogruppenhaltigen metallhaltigen Formazanfarbstoffes, wie insbesondere Kupfer- oder Nickelformazanfarbstoffes, oder der eines sulfogruppenhaltigen metallhaltigen Azofarbstoffes, wie insbesondere Kupfer-, Chrom-, Kobalt- oder Nickel-Komplexes eines sulfogruppenhaltigen Mono- oder Disazofarbstoffes. Bevorzugt hiervon sind die erfindungsgemäßen wasserlöslichen Azo-, Metallkomplexazo- und Phthalocyanin-Verbindungen.

Als wasserlöslichmachende Gruppen enthält der Formelrest D bevorzugt eine oder mehrere, wie 2 bis 6, Sulfonsäure- und/oder Carbonsäuregruppen.

Die neuen farbigen Verbindungen der allgemeinen Formel (1) können in Form der freien Säure als auch in Form ihrer Salze vorliegen. Bevorzugt sind sie in Form der Salze, insbesondere der Alkali- und Erdalkalimetallsalze, insbesondere in Form der Natrium-, Kalium- und auch Calciumsalze. Sie finden bevorzugt in Form der Alkalimetallsalze Verwendung zum Färben und Bedrucken von Fasermaterialien.

Die vorliegende Erfindung betrifft weiterhin Verfahren zur Herstellung der neuen farbigen Verbindungen der allgemeinen Formel (1). Diese Verfahren sind dadurch gekennzeichnet, daß man eine Verbindung der allgemeinen Formel (2)

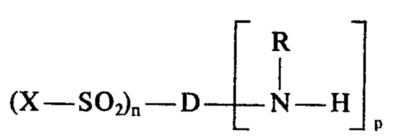

(2)

in welcher D, R, X, n und p die oben genannten Bedeutungen haben, mit einer Difluortriazin-Verbindung der allgemeinen Formel (3)

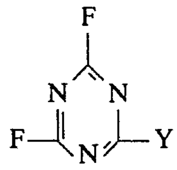

(3)

in welcher Y die obengenannte Bedeutung hat, unter Abspaltung eines Mols Fluorwasserstoff miteinander umsetzt, oder daß man
eine Verbindung der oben definierten allgemeinen Formel (2) zunächst mit 2,4,6-Trifluor-1,3,5-triazin (Cyanurfluorid) zur Difluortriazin-Verbindung der allgemeinen Formel (4)

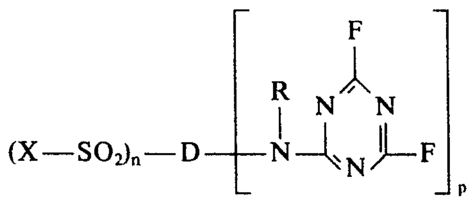

(4)

in welcher D, R, X, n und p die obengenannten Bedeutungen haben, umsetzt und diese Verbindung der Formel (4) nachfolgend mit der äquimolaren Menge eines Amins der allgemeinen Formel (5)

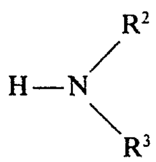

(5)

in welcher $R^2$ und $R^3$ die obengenannten Bedeutungen haben, umsetzt, oder daß man
eine Komponente des Farbstoffrestes D, wie ein Vorprodukt von D, die die oben definierte Gruppe der Formel $-SO_2-X$ ein- oder zweimal enthält, mit einer zweiten Komponente des Farbstoffmoleküls D, wie ein Vorprodukt davon, die den Monofluortriazinylaminorest der allgemeinen Formel (3a)

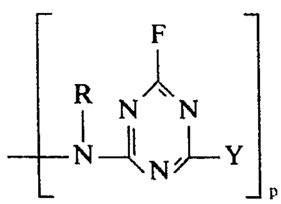

(3a)

mit R, Y und p der obengenannten Bedeutungen enthält, oder eine solche Komponente von D, wie ein Vorprodukt, die die Gruppe $-SO_2-X$ ein- oder zweimal und die Gruppe der Formel (3a) ein- oder zweimal enthält, mit einer zweiten Komponente von D, wie ein Vorprodukt, in an und für sich bekannter Weise, beispielsweise durch eine Kupplungsreaktion oder durch eine Kondensationsreaktion, umsetzt und gegebenenfalls während dieser Umsetzung oder anschließend eine Metallisierung mittels eines metallabgebenden Mittels analog bekannten Verfahrensweisen durchführt.

Solche Vorprodukte für die organischen Farbstoffmoleküle sind beispielsweise bekannte Diazokomponenten und Kupplungskomponenten, 1-Amino-4-brom-anthrachinon-2-sulfonsäure-Verbindungen, aromatische oder aliphatische primäre oder sekundäre Amine, Phthalocyaninsulfochloride, Aminophenyl-Verbindungen und Aminobenzoesäure-Verbindungen; solche Ausgangsverbindungen sind zahlreich in der Literatur zur Herstellung von an und für sich bekannten wasserlöslichen Farbstoffkörpern bekannt und ihre Reaktionsweisen beschrieben.

Die erfindungsgemäße Herstellungsweise der Umsetzung von den obigen Verbindungen der allgemeinen Formel (2) mit einer Verbindung der allgemeinen Formel (3) wird vorzugsweise in wäßriger Lösung bei einer Temperatur zwischen 0 und 50° C, insbesondere zwischen 15 und 20° C, und bei einem pH-Wert zwischen 4 und 8, vorzugsweise zwischen 5 und 7, durchgeführt. Die erfindungsgemäße Herstellungsweise der Umsetzung der obigen Verbindungen der allgemeinen Formel (2) mit Cyanurfluorid erfolgt vorzugsweise in wäßriger, neutraler bis saurer Lösung bei einer Temperatur zwischen 0 und 20° C, vorzugsweise bei 0 bis 5° C, und bei einem pH-Wert von 4 bis 6; die nachfolgende Umsetzung der Difluortriazinyl-Verbindung mit dem Amin der Formel (5) wird vorzugsweise in wäßriger, neutraler bis saurer Lösung bei einer Temperatur zwischen 0 und 50° C, vorzugsweise zwischen 10 und 40° C, durchgeführt.

Bevorzugte erfindungsgemäße Verbindungen entsprechend der allgemeinen Formel (1) sind beispielsweise die Monoazo- und Disazoverbindungen, in denen der Formelrest D für einen Rest der Formeln (6), (7), (8) oder (9) steht:

$$-[A-N=N-K_1]- \quad (6)$$

$$-[K_2-N=N-A_x]- \quad (7)$$

$$-[A-N=N-T-N=N-K_1]- \quad (8a)$$

$$-[A-N=N-K-N=N-A_x]- \quad (8b)$$

$$-[K_2-N=N-E-N=N-K_1]- \quad (9)$$

In diesen Formelresten bedeuten:

A ist als Rest einer Diazokomponente der Phenylenrest, der durch in der Azochemie übliche Substituenten, vorzugsweise 1 oder 2 Substituenten, substituiert sein kann, die vorzugsweise der Gruppe niederes Alkyl, wie Methyl und Äthyl, niederes Alkoxy, wie Methoxy und Äthoxy, Carboxy, gegebenenfalls substituiertes niederes Alkanoylamino, wie vorzugsweise Acetylamino, gegebenenfalls substituiertes Benzoylamino, wie vorzugsweise Benzoylamino und Sulfobenzoylamino, Phenylamino, Sulfophenylamino, Carbamoyl, durch niederes Alkyl und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom, Fluor, Trifluormethyl, Hydroxy und Sulfo angehören, oder

A ist ein Naphthylenrest, der durch in der Azochemie übliche Substituenten, vorzugsweise 1 oder 2 Substituenten, substituiert sein kann, die vorzugsweise der Gruppe Sulfo, Carboxy, Methyl, Äthyl, Methoxy, Äthoxy, gegebenenfalls substituiertes niederes Alkanoylamino, wie vorzugsweise Acetylamino, gegebenenfalls substituiertes Benzoylamino, wie vorzugsweise Benzoylamino und Sulfobenzoylamino, Chlor, Hydroxy und Nitro angehören;

A kann außerdem durch einen Phenylazo- oder Naphthylazo-Rest substituiert sein, wobei dessen Phenylrest durch 1 oder 2 Substituenten aus der Gruppe niederes Alkyl, niederes Alkoxy, Carboxy, Acetylamino, Benzoylamino, Carbamoyl, Sulfamoyl, Cyan, Nitro, Chlor, Brom, Trifluormethyl, Sulfo und der oben angegebenen Gruppe $-SO_2-X$ substituiert sein kann und dessen Naphthylrest durch 1, 2 oder 3 Sulfogruppen oder 1 oder 2 Sulfogruppen und der oben angegebenen Gruppe $-SO_2-X$ substituiert sein kann;

$A_x$ kann die verschiedenen, für A genannten Bedeutungen besitzen (wobei $A_x$ zu A gleich oder von A verschieden sein kann), jedoch mit der Abänderung, daß an $A_x$ der obengenannte Monofluortriazinylaminorest (anstelle der obengenannten Gruppe $-SO_2-X$) gebunden ist;

K ist der bivalente Rest einer bivalenten Kupplungskomponente, wie beispielsweise aus der Phenol-, Resorcin-, Phenylendiamin-, Dihydroxynaphthalin- oder Aminonaphthol-Reihe, vorzugsweise der 1-Hydroxy-8-amino-naphth-2,7-ylen-Rest oder 1-Amino-8-hydroxy-naphth-2,7-ylen-Rest, die in 3-, 5- und 6-Stellung bzw. in 3-, 4- und 6-Stellung durch 1 oder 2 Sulfogruppen substituiert sein können;

$K_1$ ist der Rest einer Kupplungskomponente der Benzol-, Naphthalin- oder Ketomethylen-Reihe, der durch in der Azochemie übliche Substituenten, insbesondere bevorzugt durch Hydroxy-, Amino-, Methyl-, Äthyl-, Methoxy- oder Äthoxygruppen, gegebenenfalls substituierte niedere Alkanoylaminogruppen, gegebenenfalls substituierte Benzoylaminogruppen und/oder Halogenatome, substituiert sein kann;

bevorzugt ist

$K_1$ als Rest einer Kupplungskomponente der 1-Hydroxy- oder 2-Hydroxynaphthylen-Rest, die durch 1 oder 2 Sulfonsäuregruppen substituiert sein können, oder

$K_1$ der 1-Amino- oder 2-Amino-naphthylen-Rest oder der Naphthylenrest, die durch 1 oder 2 Sulfonsäuregruppen und/oder eine Hydroxygruppe substituiert sein können, oder

$K_1$ der Rest des 5-Aminopyrazol-4-yls oder 5-Pyrazolon-4-yls, die in 3-Stellung durch Methyl, Carboxy, Carbamoyl, niederes Carbalkoxy, wie Carbomethoxy und Carbäthoxy, oder Phenyl substituiert sind und in 1-Stellung den Phenylkern oder Naphthylkern gebunden enthalten, wobei der Phenylrest durch 1 oder 2 Sulfonsäuregruppen und/oder 1 oder 2 Substituenten aus der Gruppe niederes Alkyl, niederes Alkoxy, Chlor, Brom, Nitro, gegebenenfalls substituiertes niederes Alkanoylamino, wie Acetylamino, gegebenenfalls substituiertes Benzoylamino und Carboxy und der Naphthylkern durch 1, 2 oder 3 Sulfogruppen und/oder einen Substituenten aus der Gruppe niederes Alkyl, niederes Alkoxy, Nitro, gegebenenfalls substituiertes niederes Alkanoylamino, wie Acetylamino, gegebenenfalls substituiertes Benzoylamino und Carboxy substituiert sein können und der Fluortriazinylaminorest an diesen Phenyl- oder Naphthylrest gebunden ist, oder

$K_1$ als Rest einer Kupplungskomponente der bivalente Acetoacetylanilid- oder -naphthylamid-Rest,

wobei der Phenylrest durch 1 oder 2 Substituenten substituiert sein kann, die der Gruppe niederes Alkyl, wie Methyl und Äthyl, niederes Alkoxy, wie Methoxy und Äthoxy, Carboxy, gegebenenfalls substituiertes niederes Alkanoylamino, wie Acetylamino, gegebenenfalls substituiertes Benzoylamino, Carbamoyl, durch niederes Alkyl und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom, Fluor, Trifluormethyl und Sulfo angehören, und der Naphthylrest durch 1 oder 2 Substituenten aus der Gruppe Sulfo, Carboxy, Methyl, Methoxy, Äthoxy, Chlor, Hydroxy oder Nitro substituiert sein kann und wobei der Fluortriazinylaminorest an den Phenyl- oder Naphthylrest gebunden ist, oder

$K_1$ der Rest einer Kupplungskomponente aus der 6-Hydroxypyridon(2)-Reihe oder

$K_1$ der p-Phenylrest, der durch 1 oder 2 Substituenten aus der Gruppe niederes Alkyl, niederes Alkoxy und Chlor oder durch eine Dimethylamino-, Diäthylamino-, Ureido-, oder Acetylaminogruppe substituiert sein kann;

$K_2$ kann die verschiedenen, für $K_1$ genannten Bedeutungen besitzen (wobei $K_2$ zu $K_1$ gleich oder von $K_1$ verschieden sein kann), jedoch mit der Abänderung, daß an $K_2$ die Gruppe der Formel $-SO_2-X$ (anstelle des erwähnten Monofluortriazinylaminorestes) ein- oder zweimal an den aromatischen Rest gebunden ist,

T ist der bivalente Rest einer Mittelkomponente, die beim Aufbau der Verbindungen zuerst als Kupplungskomponente, dann als Diazokomponente dienen kann, und bedeutet den Phenylenrest, der durch einen Substituenten aus der Gruppe niederes Alkyl, niederes Alkoxy, Chlor, gegebenenfalls substituiertes niederes Alkanoylamino, wie Acetylamino, gegebenenfalls substituiertes Benzoylamino, Amino, Methylamino, Äthylamino, Dimethylamino, Diäthylamino und Ureido substituiert sein kann, oder den Naphthylenrest, der durch eine Amino- oder Hydroxygruppe, die ortho- oder para-ständig zur ersten Azogruppe stehen, substituiert ist durch eine niedere Alkyl-, Nitro- oder Acetylaminogruppe und/oder durch 1 oder 2 Sulfonsäuregruppen substituiert sein kann, oder

T bedeutet den Rest der Formel

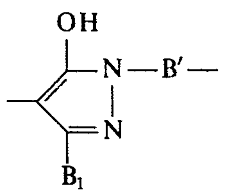

in welcher

$B_1$ für die Methyl- oder Carboxygruppe steht und

$B'$ den Phenylen- oder Naphthylenrest bedeutet, der noch durch 1 oder 2 Substituenten aus der Gruppe Sulfo, Carboxy, niederes Alkyl, niederes Alkoxy und Chlor substituiert sein kann;

E ist der Phenylenrest, der durch eine Sulfo- oder Methylgruppe substituiert sein kann, oder ist ein Rest der Formel

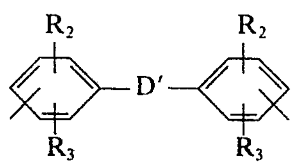

in welcher

$D'$ eine direkte Bindung ist oder für die Gruppe $-NH-CO-$, $-CO-NH-$, $-CO-$, $-SO_2-$, $-CH=CH-$, $-N=N-$, $-O-$ oder $-CH_2-$ steht,

$R_2$ ein Wasserstoffatom oder eine niedere Alkylgruppe, wie Methyl- oder Äthylgruppe, eine niedere Alkoxygruppe, wie Methoxy- oder Äthoxygruppe, ein Chlor- oder Bromatom oder eine Sulfonsäuregruppe ist und

$R_3$ ein Wasserstoffatom, eine niedere Alkylgruppe, wie Methyl- oder Äthylgruppe, eine niedere Alkoxygruppe, wie Methoxy- oder Äthoxygruppe, ein Chlor- oder Bromatom darstellt,

wobei in diesen Formelresten (6) bis (9) die Gruppen der Formeln $-SO_2-X$ und der Formel (3a) jeweils getrennt an A, $A_x$, $K_1$ und $K_2$ oder aber gegebenenfalls auch gleichzeitig an diesen Resten sitzen können und die Gruppe der Formel $-SO_2-X$ in den Disazoverbindungen auch an den Rest T gebunden sein kann und wobei die Formelreste A, $A_x$, K, $K_1$, $K_2$, T und E zusammen vorzugsweise zwei oder mehrere, insbesondere bevorzugt drei oder vier, Sulfonsäuregruppen enthalten.

Kupplungskomponenten, die den Rest $K_1$ enthalten und die zur Herstellung der erfindungsgemäßen

obengenannten Mono- oder Disazoverbindungen in die Synthese eingesetzt werden können, sind beispielsweise Verbindungen der allgemeinen Formeln (10a), (10b), (10c), (10d), (10e), (10f), (10g), (10h) und (10j):

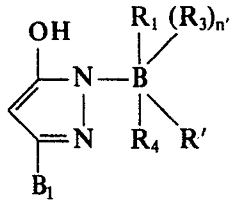

(10a)

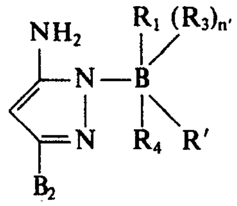

(10b)

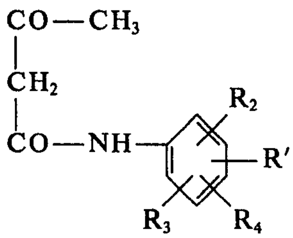

(10c)

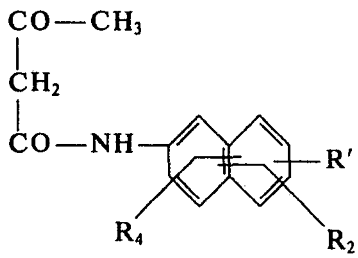

(10d)

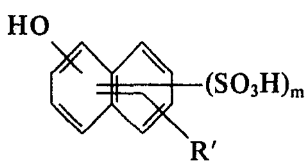

(10e)

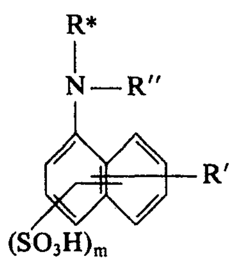

(10f)

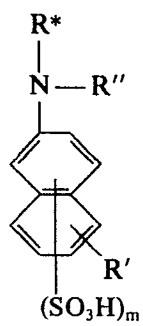

(10g)

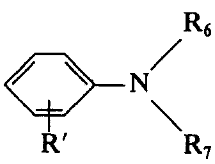

(10h)

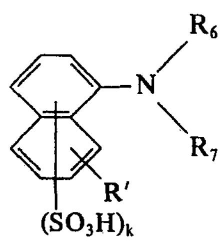

(10j)

In diesen Formeln bedeuten:

R' ist ein Rest der Formel $(X{-}SO_2)_n{-}$ mit X und n der obengenannten Bedeutungen oder ist der Monofluortriazinylamino-Rest der oben bezeichneten Formel (3a), vorzugsweise mit p gleich 1;

$R_1$ ist ein Wasserstoffatom, eine niedere Alkylgruppe, wie insbesondere eine Methyl- oder Äthylgruppe, eine niedere Alkoxygruppe, wie insbesondere eine Methoxy- oder Äthoxygruppe, ein Chlor- oder Bromatom, eine niedere Alkanoylaminogruppe, wie eine Acetylaminogruppe, oder eine Sulfonsäuregruppe;
$R_2$ ist ein Wasserstoffatom, eine niedere Alkylgruppe, wie insbesondere eine Methyl- oder Äthylgruppe, eine niedere Alkoxygruppe, wie insbesondere eine Methoxy- oder Äthoxygruppe, ein Chlor- oder Bromatom oder eine Sulfonsäuregruppe;
$R_3$ ist ein Wasserstoffatom, eine niedere Alkylgruppe, wie insbesondere die Methyl- oder Äthylgruppe, eine niedere Alkoxygruppe, wie insbesondere die Methoxy- oder Äthoxygruppe, ein Chlor- oder Bromatom;
$R_4$ ist ein Wasserstoffatom, eine niedere Alkylgruppe, wie insbesondere die Methyl- oder Äthylgruppe, eine niedere Alkoxygruppe, wie insbesondere die Methoxy- oder Äthoxygruppe, die Sulfonsäure- oder Carbonsäuregruppe,
wobei $R_1$, $R_2$, $R_3$ und $R_4$ gleich oder verschieden voneinander sein können;
n' ist die Zahl 1 oder 2;
B ist ein Benzol- oder Naphthalinkern;
$B_1$ ist eine niedere Alkylgruppe, bevorzugt Methylgruppe, eine Carboxygruppe, eine Carbomethoxy- oder Carbäthoxygruppe oder der Phenylrest;
$B_2$ ist eine niedere Alkylgruppe, bevorzugt die Methylgruppe, eine Carbomethoxy- oder Carbäthoxygruppe, eine Carbonamidgruppe oder ein Phenylrest, der durch 1 oder 2 Substituenten aus der Gruppe niederes Alkyl, niederes Alkoxy, Chlor, Brom und Sulfo substituiert sein kann,
wobei $R_1$, $R_3$, $R_4$ und $B_1$ bzw. $B_2$ gleich oder verschieden voneinander sein können;
R* ist ein Wasserstoffatom oder ein niederer Alkylrest;
R'' ist ein Wasserstoffatom, ein niederer Alkylrest oder ein Phenylrest, der durch 1 oder 2 Substituenten aus der Gruppe niederes Alkyl, niederes Alkoxy, Chlor, Brom und Sulfo substituiert sein kann,
wobei R* und R'' gleich oder verschieden voneinander sein können;
k ist die Zahl Null oder 1;
m steht für die Zahl Null, 1 oder 2;
$R_6$ ist ein Wasserstoffatom oder eine niedere Alkylgruppe, die durch eine Hydroxy-, Cyan-, Carboxy-, Sulfo-, Sulfato-, Carbomethoxy-, Carbäthoxy- oder Acetoxygruppe substituiert sein kann;
$R_7$ ist ein Wasserstoffatom oder eine niedere Alkylgruppe, die durch eine Hydroxy-, Cyan-, Carboxy-, Sulfo-, Sulfato-, Carbomethoxy-, Carbäthoxy- oder Acetoxygruppe substituiert sein kann, oder ein Benzylrest oder ein Phenylrest, der durch niederes Alkyl, niederes Alkoxy, Chlor und/oder Sulfo substituiert sein kann;
$R_8$ ist ein Wasserstoffatom oder eine niedere Alkylgruppe, die Methyl- oder Äthylgruppe, oder eine durch niederes Alkoxy oder Cyan substituierte niedere Alkylgruppe;
$R_9$ ist ein Wasserstoffatom, eine niedere Alkylgruppe, wie Methylgruppe, eine niedere Sulfoalkylgruppe, wie Sulfomethylengruppe, die Cyan- oder die Carbonamidgruppe,
wobei $R_1$, $R_6$, $R_7$, $R_8$ und $R_9$ gleich oder verschieden voneinander sein können.

Aromatische Amine, die als Diazokomponenten zur Herstellung der erfindungsgemäßen Farbstoffe eingesetzt werden können und die den Formelrest A in den obigen Formeln (6) bis (8) enthalten, sind beispielsweise Verbindungen der Formeln (10k) und (10m):

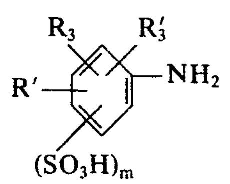

(10 k)

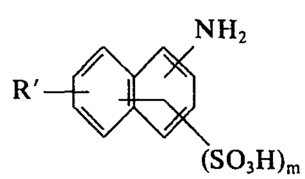

(10 m)

In diesen Formeln besitzen die Formelreste R', $R_2$, $R_3$ und m die obengenannten Bedeutungen und

$R_3'$ ist ein Wasserstoffatom, eine niedere Alkylgruppe, wie insbesondere die Methyl- oder Äthylgruppe, eine niedere Alkoxygruppe, wie insbesondere die Methoxy- oder Äthoxygruppe, ein Chlor- oder Bromatom oder eine Hydroxygruppe,
wobei $R_3$ und $R_3'$ gleich oder verschieden voneinander sein können.

Verbindungen, die sowohl als Diazokomponente als auch als Kupplungskomponente zur Herstellung der erfindungsgemäßen Disazofarbstoffe eingesetzt werden können und die den Formelrest T von Formel (8) enthalten, sind beispielsweise Verbindungen der allgemeinen Formeln (11a), (11b), (11c), (11d), (11e), (11f), (11g) und (11h):

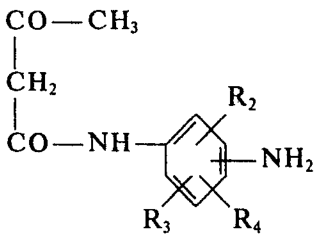

(11a)

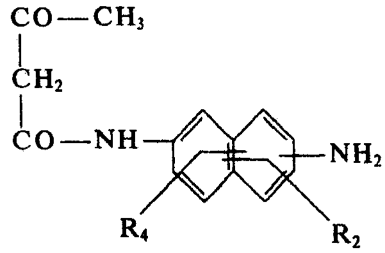

(11b)

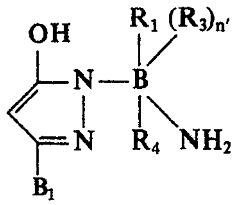

(11c)

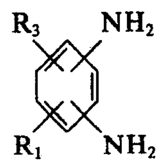

(11d)

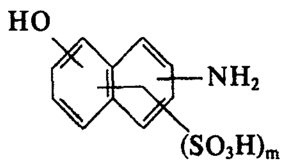

(11e)

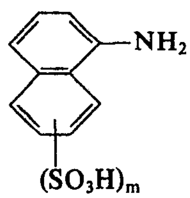

(11f)

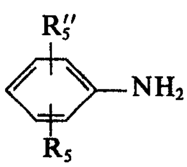

(11g)

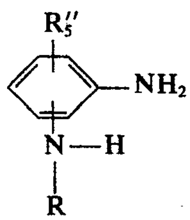

(11h)

in welchen B, $B_1$, $B_2$, $R_1$, $R_2$, $R_3$, $R_4$, m und n' die oben angegebenen Bedeutungen haben und

$R_5$ ein Wasserstoffatom, eine niedere Alkylgruppe, wie eine Methyl- oder Äthylgruppe, eine niedere Alkoxygruppe, wie eine Methoxy- oder Äthoxygruppe, ein Chlor- oder Bromatom ist,

$R_5''$ ein Wasserstoffatom, eine niedere Alkylgruppe, wie Methyl- oder Äthylgruppe, eine niedere Alkoxygruppe, wie Methoxy- oder Äthoxygruppe, ein Chlor- oder Bromatom, eine niedere Alkanoylaminogruppe, wie Acetylaminogruppe, oder eine Amino-, Ureido-, niedere Alkylsulfonylamino-, niedere Alkylamino- oder niedere Dialkylaminogruppe darstellt.

Aromatische Diamine, die keine faserreaktive Gruppe besitzen und als Tetrazokomponenten zur Herstellung der erfindungsgemäßen Disazofarbstoffe eingesetzt werden können und beispielsweise das Formelglied E von Formel (9) enthalten, sind beispielsweise Verbindungen der allgemeinen Formel (12)

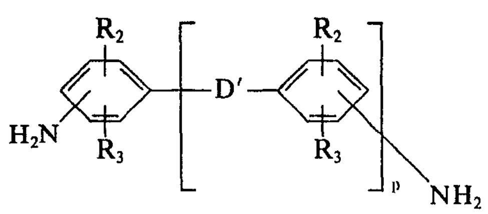

(12)

in welcher $R_2$, $R_3$ und D' die obengenannten Bedeutungen haben und p für die Zahl Null oder 1 steht.

Wertvolle erfindungsgemäße Verbindungen entsprechend der allgemeinen Formel (1) sind auch die Schwermetallkomplexverbindungen der obengenannten Monoazo- und Disazoverbindungen, beispielsweise entsprechend der allgemeinen Formeln (13a), (13b) und (13c)

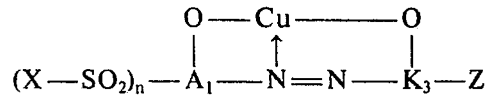

(13a)

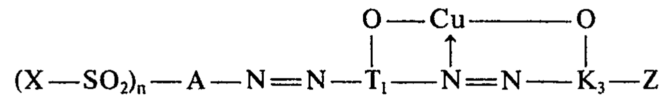

(13b)

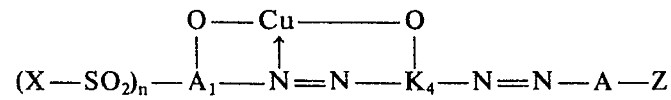

(13c)

sowie deren entsprechenden 1 : 2-Chromkomplex- und 1 : 2-Kobaltkomplex-Derivate. In diesen Formeln bedeuten:

A, X und n haben die obengenannten Bedeutungen;

$A_1$ ist der Benzolkern, der durch 1 oder 2 Substituenten substituiert sein kann, die der Gruppe niederes Alkyl, wie Methyl und Äthyl, niederes Alkoxy, wie Methoxy und Äthoxy, Carboxy, Phenylamino, Sulfobenzoylamino, Sulfophenylamino, Carbamoyl, durch niederes Alkyl und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom, Trifluormethyl und Sulfo angehören, oder der Naphthalinkern, der durch 1, 2 oder 3 Sulfonsäuregruppen und/oder eine Carboxy-, Methyl-, Methoxy-, Äthoxy-, Nitro- oder Acetylaminogruppe oder ein Chloratom substituiert sein kann, wobei in $A_1$ das komplexbildende Sauerstoffatom ortho-ständig zur Azogruppe gebunden ist, und

$K_3$ ist der Naphthalinkern, der durch 1 oder 2 Sulfonsäuregruppen substituiert sein kann, oder

$K_3$ ist der Rest des Pyrazol-4 bzw. 5-ylens, der in 3-Stellung durch Methyl, Carboxy, Carbamoyl, niederes Carbalkoxy, wie Carbomethoxy und Carbäthoxy, oder Phenyl substituiert sind und in 1-Stellung den Phenylkern oder Naphthylkern gebunden enthalten, wobei der Phenylrest durch 1 oder 2 Sulfonsäuregruppen und/oder 1 oder 2 Substituenten aus der Gruppe niederes Alkyl, niederes Alkoxy, Chlor, Brom, Nitro, Acetylamino und Carboxy und der Naphthylkern durch 1, 2 oder 3 Sulfogruppen und/oder einen Substituenten aus der Gruppe niederes Alkyl, niederes Alkoxy, Nitro, Acetylamino und Carboxy substituiert sein können, oder

$K_3$ steht als Rest einer Kupplungskomponente für den Acetoacetylanilid- oder -naphthylamid-Rest, wobei der Phenylrest durch 1 oder 2 Substituenten substituiert sein kann, die der Gruppe niederes Alkyl, wie Methyl und Äthyl, niederes Alkoxy, wie Methoxy und Äthoxy, Carboxy, Acetylamino, Benzoylamino, Carbamoyl, durch niederes Alkyl und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom, Trifluormethyl und Sulfo angehören, und der Naphthylrest durch 1 oder 2 Substituenten aus der Gruppe Sulfo, Carboxy, Methyl, Methoxy, Äthoxy, Chlor, Hydroxy oder Nitro substituiert sein kann;

wobei in $K_3$ das komplexbildende Sauerstoffatom ortho-ständig zur Azogruppe gebunden ist;

$T_1$ stellt als Mittelkomponente, die beim Aufbau der Farbstoffe zuerst als Kupplungskomponente, dann als Diazokomponente diente, den Benzolkern dar, der durch einen Substituenten aus der Gruppe niederes Alkyl, niederes Alkoxy, Chlor, Acetylamino, Dimethylamino, Diäthylamino und Ureido substituiert sein kann, oder den Napthalinkern dar, der durch niederes Alkyl, Nitro, Acetylamino oder Sulfo substituiert sein kann, oder den Rest der Formel

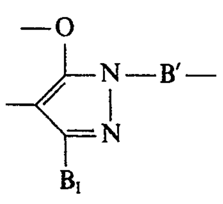

in welchen $B_1$ und B' die anfangs genannten Bedeutungen haben und in $T_1$ und $K_3$ die komplexbildenden Sauerstoffatome ortho-ständig zur Azogruppe gebunden sind;

$K_4$ steht als Rest der bifunktionellen Kupplungskomponente Aminonaphthol für den Naphthylenrest, der eine oder zwei Sulfogruppen gebunden enthalten kann und in welchem das komplexbildende Sauerstoffatom ortho-ständig zur Azogruppe gebunden ist;

Z steht für den oben definierten Rest der Formel (3a).

Aromatische Amine und Kupplungskomponenten, die zur Herstellung der obengenannten Metallkomplexverbindungen geeignet sind und die diese Formelreste enthalten, sind beispielsweise die anfangs erwähnten Verbindungen der allgemeinen Formeln (10) und (11), wobei die aromatischen Diazokomponenten in ortho-Stellung zur diazotierbaren Aminogruppe eine Hydroxygruppe oder ein Wasserstoffatom oder eine niedere Alkoxygruppe besitzen, die durch oxidative Kupferungsreaktion oder entalkylierende Kupferungsreaktion in eine Hydroxygruppe übergeführt werden können.

Aromatische Amine, die als Diazokomponenten zur Herstellung der Mono- oder Disazoverbindungen dienen können und die die Gruppe der Formel $-SO_2-X$ ein- oder zweimal gebunden enthalten, sind beispielsweise:

Anilin-4-β-sulfatoäthylsulfon, Anilin-4-β-thiosulfatoäthylsulfon, Anilin-4-vinylsulfon,
Anilin-4-β-chloräthylsulfon, Anilin-3-β-sulfatoäthylsulfon, Anilin-3-vinylsulfon,
2-Methoxy-anilin-5-β-sulfatoäthylsulfon, 2-Methoxy-anilin-5-β-thiosulfatoäthylsulfon,
2-Methoxy-anilin-5-vinylsulfon, 4-Methoxy-anilin-3-β-sulfatoäthylsulfon,
4-Methoxy-anilin-3-β-vinylsulfon, 2,5-Dimethoxy-anilin-4-β-sulfatoäthylsulfon,
2,5-Dimethoxy-anilin-4-vinylsulfon, 2,5-Dimethoxy-anilin-4-β-sulfatoäthylsulfon,
2-Methoxy-5-methyl-anilin-4-β-sulfatoäthylsulfon, 2-Methoxy-5-methyl-anilin-4-β-vinylsulfon,
6-Carboxy-anilin-3-β-sulfatoäthylsulfon, 6-Carboxy-anilin-3-vinylsulfon,
2-Sulfoanilin-4-β-sulfatoäthylsulfon, 2-Sulfoanilin-4-vinylsulfon,
2,4-Disulfo-anilin-5-vinylsulfon, 2-Hydroxyanilin-5-β-sulfatoäthylsulfon,
2-Hydroxy-anilin-4-β-sulfatoäthylsulfon, 3-Sulfo-2-hydroxy-anilin-5-β-sulfatoäthylsulfon,
2-Naphthylamin-8-β-sulfatoäthylsulfon, 2-Naphthylamin-6-β-sulfatoäthylsulfon,
1-Sulfo-2-naphthylamin-6-β-sulfatoäthylsulfon,
6-Sulfo-2-naphthylamino-8-β-sulfatoäthylsulfon,
2-Aminonaphthalin-6,8-di-(β-sulfatoäthylsulfon),
2-Brom-1-aminobenzol-4-β-sulfatoäthylsulfon,
2,6-Dichlor-1-aminobenzol-4-β-sulfatoäthylsulfon.

Aromatische Amine, die als Diazokomponenten in die Synthese der erfindungsgemäßen Mono- oder Disazoverbindungen eingesetzt werden können und die den Monofluortriazinylrest enthalten, sind beispielsweise die Verbindungen der folgenden Formeln:

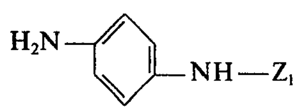

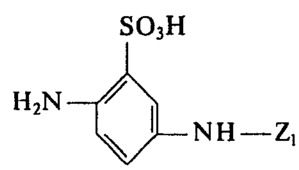

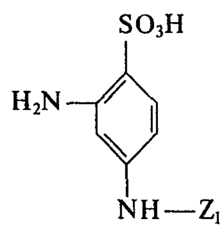

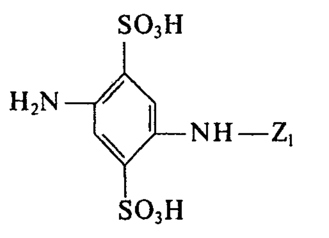

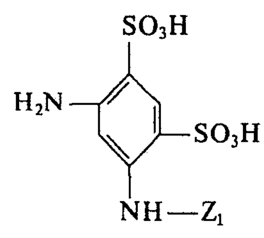

in welchen $Z_1$ den Rest der Formel (3b)

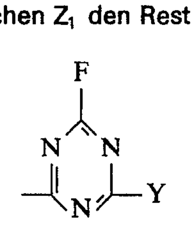

(3 b)

darstellt, in welcher Y die anfangs genannte Bedeutung hat.

Aromatische Monoamine und Diamine, die als bifunktionelle Komponente (Diazo- und Kupplungskomponente) bei der Herstellung der erfindungsgemäßen Disazoverbindungen verwendet werden können, sind beispielsweise:

Anilin, 3-Methylanilin, 3-Chloranilin, 2,5-Dimethylanilin, 2,5-Dimethoxyanilin, 3-Methoxyanilin, 3-Methyl-6-methoxyanilin, 3-Aminophenylharnstoff, 3-Acetylamino-6-methylanilin, 2-Amino-4-acetylaminobenzol-1-sulfonsäure, 1-Naphthylamin-6-$\beta$-sulfatoäthylsulfon, 1-Naphthylamin-7-$\beta$-sulfatoäthylsulfon, 1,3-Diaminobenzol, 1,3-Diamino-4-methyl- oder -methoxy-benzol, 1,3-Diamino-benzol-4-sulfonsäure, 1-Aminonaphthalin, 1-Aminonaphthalin-6- oder -7-sulfonsäure, 3-Acetylamino-anilin, 2-Amino-8-naphthol-6-sulfonsäure, 2-Amino-8-naphthol-4,6-disulfonsäure, 2-Amino-5-naphthol-7-sulfonsäure, 3-Amino-5-naphthol-7-sulfonsäure, 1-Amino-5-naphthol-7-sulfonsäure, 1-N-Acetoacetylamino-4-aminobenzol, 1-N-Acetoacetylamino-4-N-methyl-aminobenzol, 1-N-Acetoacetylamino-3-methyl-4-aminobenzol, 1-N-Aceto-acetylamino-3-methoxy-4-aminobenzol, 4-Amino-3-sulfo-acetoacetylanilid, 1-(3'-Amino-phenyl)-3-methyl-pyrazolon(5), 1-(4'-Aminophenyl)-3-methyl-pyrazolon(5), 1-(3'- oder -4'-Aminophenyl)-3-carboxy-pyrazolon(5), 1-(3'-Sulfo-4'-aminophenyl)-3-carbäthoxy-pyrazolon(5), 1-(3'-Amino-4'-sulfo-phenyl)-3-carboxy-pyrazolon(5), 1-(2',4',6'-Trimethyl-3'-amino-5'-sulfophenyl)-3-carbäthoxy-pyrazolon(5), 1-(4'-Amino-phenyl)-3-methyl-pyrazolon(5), 1-(3'-Amino-6'-methyl-phenyl)-3-carboxy-pyrazolon(5).

Aromatische Diamine, die als Tetrazokomponenten zur Herstellung der erfindungsgemäßen Verbindungen dienen können, sind beispielsweise:

1,3-Diaminobenzol, 1,3-Diaminobenzol-4-sulfonsäure, 1,4-Diaminobenzol, 1,4-Diaminobenzol-2-sulfonsäure, 1,4-Diamino-2-methyl-benzol, 1,4-Diamino-2-methoxy-benzol, 1,3-Diamino-4-methyl-benzol, 1,3-Diaminobenzol-5-sulfonsäure, 1,3-Diamino-5-methyl-benzol, 1,6-Diamino-naphthalin-4-sulfonsäure, 2,6-Diamino-4,8-disulfo-naphthalin, 3,3'-Diamino-diphenylsulfon, 4,4'-Diamino-diphenylsulfon, 3,3'-Diamino-diphenylsulfon-disulsonsäure, 4,4'-Diamino-stilben-2,2'-disulfonsäure, 4,4'-Diamino-diphenylsulfon, 2,7-Diamino-diphenylensulfon-4,5-disulfonsäure, 4,4'-Diamino-benzophenon, 4,4'-Diamino-3,3'-dinitro-benzophenon, 3,3'-Diamino-4,4'-dichlor-benzophenon, 4,4'- oder 3,3'-Diamino-diphenyl, 4,4'-Diamino-3,3'-dichlor-diphenyl, 4,4'-Diamino-3,3'-dimethoxy- oder 3,3'-dimethyl- oder -2,2'-dimethyl- oder -2,2'-dichlor- oder -3,3'-diäthoxy-diphenyl, 4,4'-Diamino-3,3'-dimethyl-6,6'-dinitro-diphenyl, 4,4'-Diamino-2,2'- oder 3,3'-disulfodiphenyl, 4,4'-Diamino-3,3'-dimethyl- oder -3,3'-dimethoxy- oder -2,2'-dimethoxy-6,6'-disulfo-diphenyl, 4,4'-Diamino-2,2',5,5'-tetrachlor-diphenyl, 4,4'-Diamino-3,3'-dinitro-diphenyl, 4,4'-Diamino-2,2'-dichlor-5,5'-dimethoxy-diphenyl, 4,4'-Diamino-2,2'- oder -3,3'-dicarbonsäure, 4,4'-Diamino-3,3'-dimethyl-diphenyl-5,5'-disulfonsäure, 4,4'-Diamino-2-nitro-diphenyl, 4,4'-Diamino-3-äthoxy- oder -3-sulfo-di-phenyl, 4,4'-Diamino-3,3'-dimethyl-5-sulfo-diphenyl, 4,4'-Diamino-diphenylmethan, 4,4'-Diamino-3,3'-dimethyl-diphenylmethan, 4,4'-Diamino-2,2',3,3'-tetramethyl-diphenylmethan, 4,4'-Diamino-diphenyläthan, 4,4'-Diamino-stilben, 4,4'-Diamino-diphenylmethan-3,3'-dicarbonsäure, 1,2-Di-(4'-amino-phenoxy)-äthan.

Kupplungskomponenten, die in den erfindungsgemäßen Mono- oder Disazofarbstoffen enthalten sein können oder zu deren Herstellung dienen, sind insbesondere beispielsweise die Verbindungen der Formeln:

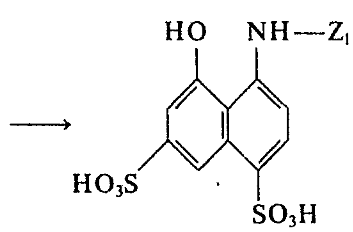

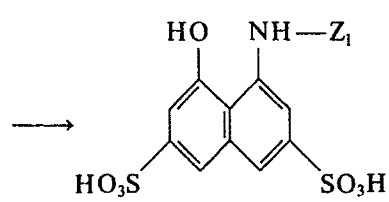

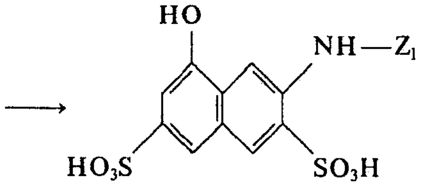

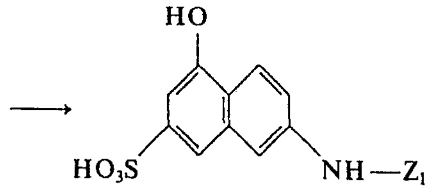

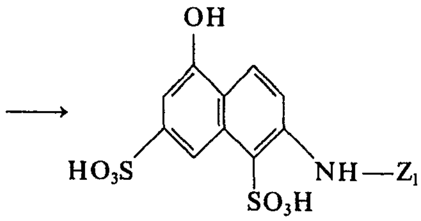

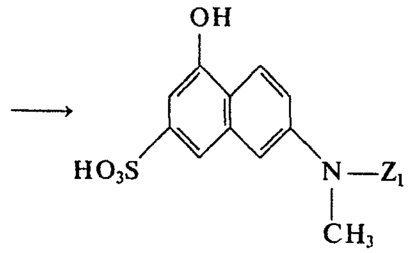

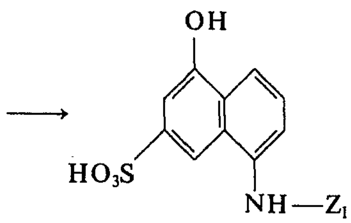

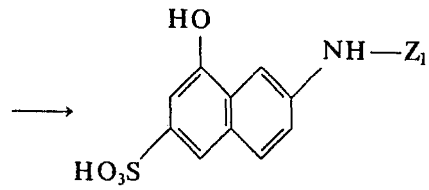

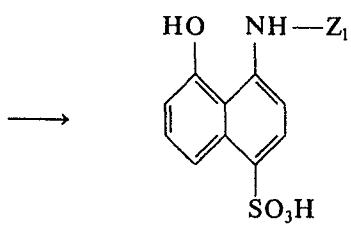

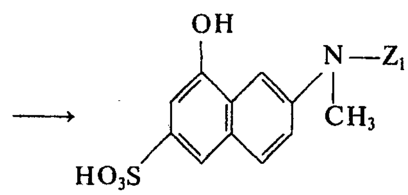

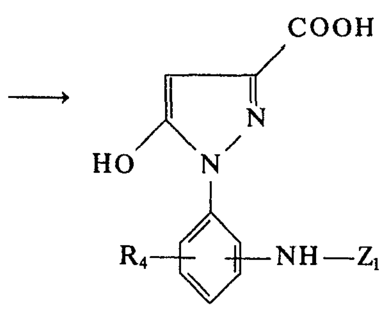

worin $R_4$ die obengenannte Bedeutung besitzt und $Z_1$ für den obengenannten und definierten Rest der allgemeinen Formel (3b) steht.

Zur Herstellung der erfindungsgemäßen Mono- und Disazoverbindungen und auch deren Metallkomplexfarbstoffe kann in üblicher Weise vorgegangen werden, indem beispielsweise analog den bekannten Diazotierungs- und Kupplungsmethoden Umsetzung der diazotierten aromatischen Amine mit den Kupplungskomponenten erfolgt und diese Azoverbindungen gegebenenfalls durch nachfolgende Metallisierung analog bekannten Verfahrensweisen (s. Houben–Weyl, »Methoden der Organischen Chemie«, 4. Ausgabe (1965), Band 10/3, S. 452 ff.; Angewandte Chemie 70, 232–238 (1958); Angewandte Chemie 64, 397 (1952)) in die entsprechenden Schwermetallkomplexverbindungen, wie die Kupfer-, Kobalt- oder Chromkompletverbindungen, überführt. Man kann beispielsweise jedoch auch so vorgehen, daß man ein aromatisches Amin, das beispielsweise die Gruppe der Formel $-SO_2-X$ ein- oder zweimal gebunden enthält, diazotiert und auf eine Kupplungskomponente kuppelt, die noch eine freie acylierbare Aminogruppe besitzt. Die so hergestellte Azoverbindung kann sodann, wie oben angegeben, mit einem Difluortriazin-Derivat der Formel (3) umgesetzt werden.

Weitere bevorzugte und wertvolle erfindungsgemäße Verbindungen entsprechend der allgemeinen Formel (1) sind beispielsweise die metallhaltigen Phthalocyaninverbindungen entsprechend den allgemeinen Formeln (14) und (15) (beide in Form der freien Säure geschrieben):

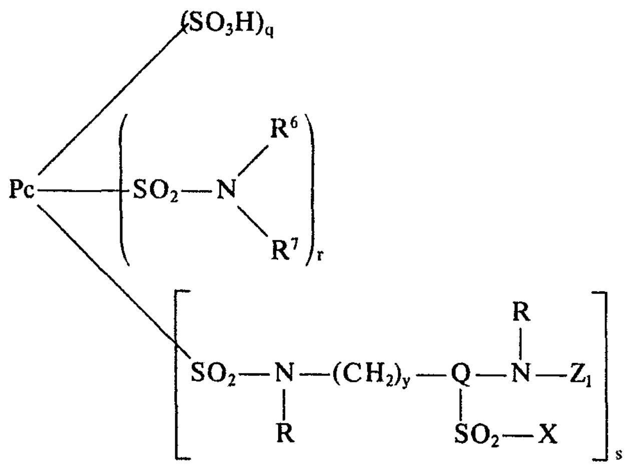

(14)

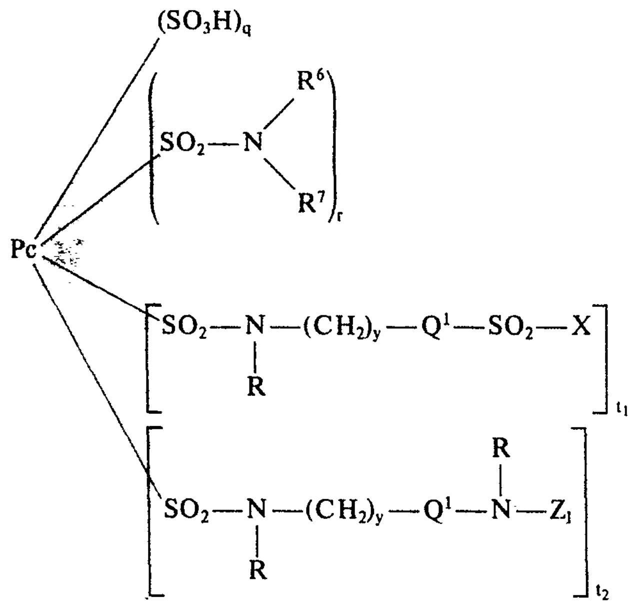

(15)

in welchen

Pc für den Rest des Kupferphthalocyanins oder Nickelphthalocyanins steht, wobei die Sulfo- und Sulfonamidgruppen in 3- oder 4-Stellung an den Phthalocyaninrest gebunden sind,

$R^6$, $R^7$ und R
gleich oder verschieden und jedes für ein Wasserstoffatom oder eine Alkylgruppe von 1 bis 4 C-Atomen steht,

y die Zahl Null, 1 oder 2 ist,

Q den Benzol- und den Naphthalinkern bedeutet, der noch zusätzlich durch 1 oder 2 Substituenten aus der Gruppe Methyl, Äthyl, Methoxy, Äthoxy, Chlor, Brom, Sulfo und Carboxy substituiert sein kann,

$Q^1$ gleich oder verschieden voneinander, den Phenylen- oder Naphthylenrest bedeutet, der durch 1 oder 2 Substituenten aus der Gruppe Methyl, Äthyl, Methoxy, Äthoxy, Chlor, Brom, Sulfo und Carboxy substituiert sein kann, oder einen Alkylenrest von 2 bis 6 C-Atomen darstellt,

q für einen Zahlenwert von 0 bis 3,

r für einen Zahlenwert von 0 bis 2 und

s für einen Zahlenwert zwischen 1 bis 2 steht und

$t_1$ und $t_2$,
gleich oder verschieden voneinander, jedes für einen Zahlenwert von 1 bis 1,5, vorzugsweise 1, steht, wobei die Summe von $(t_1 + t_2)$ höchstens 2,5, vorzugsweise 2 ist und die Summe von $(q + r + s)$ oder von $(q + r + t_1 + t_2)$ jeweils höchstens 4 ist, und

R, X und $Z_1$ haben die obengenannten Bedeutungen.

Diese erfindungsgemäßen Phthalocyaninverbindungen lassen sich analog bekannten Verfahrensweisen zur Herstellung von sulfo- und sulfonamidgruppenhaltigen Phthalocyaninen synthetisieren, beispielsweise durch Umsetzung von gegebenenfalls sulfogruppenhaltigen Phthalocyaninsulfonsäurechloriden mit primären oder sekundären aliphatischen und/oder aromatischen Aminen, die die Gruppe der Formel $-SO_2-X$ und/oder den Monofluortriazinylaminorest der Gruppe der allgemeinen Formel (3a) mit P = 1 oder bevorzugt statt dessen einen Amino- oder Acylaminorest, wie ein Acetylaminorest, enthalten, wobei nach der Kondensationsreaktion des Phthalocyaninsulfochlorids mit den Aminoverbindungen Einführung des Fluortriazinylrestes mit einer Difluortriazinverbindung der allgemeinen Formel (3) entsprechend der oben angegebenen Verfahrensweise a) erfolgen kann. – Beispielsweise erfolgt die Herstellung der obigen Phthalocyaninverbindungen entsprechend den allgemeinen Formeln (14) und (15) in der Weise, daß man eine Verbindung der allgemeinen Formel (16)

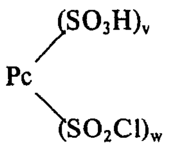

(16)

in welcher v für eine Zahl zwischen 0 und 2 und w für eine Zahl zwischen 2 und 4 stehen, wobei die Summe von (v + w) höchstens 4 ist, mit einer Diaminoverbindung der allgemeinen Formel (17) oder mit deren Monoacyl-Derivat der allgemeinen Formel (17a)

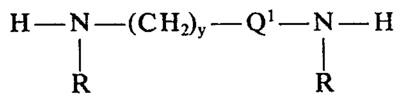

(17)

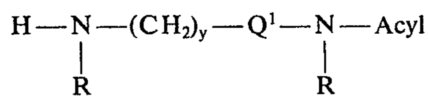

(17 a)

in welche R, $Q^1$ und y die obengenannten Bedeutungen haben und Acyl einen Acylrest, vorzugsweise Acetylrest, bedeutet, und weiterhin mit einer zweiten Aminoverbindung, gleichzeitig oder in beliebiger Reihenfolge, der allgemeinen Formel (18)

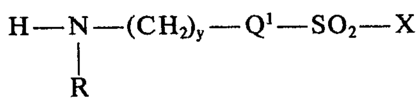

(18)

in welcher R, $Q^1$, X und y die obengenannten Bedeutungen haben, umsetzt, bzw. daß man eine Verbindung der obigen Formel (16) mit einer Aminoverbindung der allgemeinen (19) oder (19a)

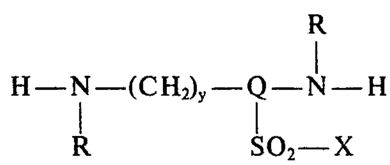

(19)

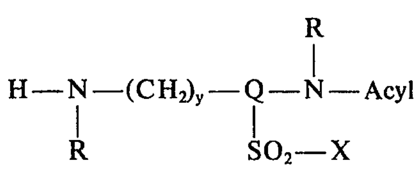

(19 a)

in welcher y, R, Q, X und Acyl die obengenannten Bedeutungen haben, umsetzt, wobei man in allen beschriebenen Verfahrensweisen gegebenenfalls noch mit einem weiteren Amin, gleichzeitig oder in beliebiger Reihenfolge, der allgemeinen Formel $-NR^6R^7$, in welcher $R^6$ und $R^7$ die obengenannten Bedeutungen haben, umsetzen kann. Die so hergestellten Verbindungen entsprechend den allgemeinen Formel (14) bzw. (15), in denen die Formelreste die für diese Formeln angegebenen Bedeutungen haben, ausgenommen die Bedeutung von $Z_1$, das hier ein Wasserstoffatom oder ein Acylrest ist, werden sodann einer weiteren Umsetzung zugeführt, mit welcher der Monofluortriazinylrest der oben definierten Formel (3a) eingeführt wird. Liegen hierfür Verbindungen vor, in denen hier $Z_1$ für den Acylrest steht, so wird in diesen Verbindungen der Acylaminorest analog bekannten Verfahrensweisen (vgl. Venkataraman, Reactive Dyes (1972), Seite 320) selektiv zum Aminorest hydrolysiert. Die vorliegenden Verbindungen entsprechend der Formel (14) oder (15), in denen hier $Z_1$ für ein Wasserstoffatom steht, werden sodann gemäß der anfangs angegebenen Verfahrensweise a) mit der Difluortriazinylverbindung der Formel (3) umgesetzt.

Die Verbindungen der allgemeinen Formeln (14) und (15) lassen sich auch in der Weise herstellen, daß man eine Verbindung der oben definierten Formel (16) mit einer Verbindung der allgemeinen Formel (20)

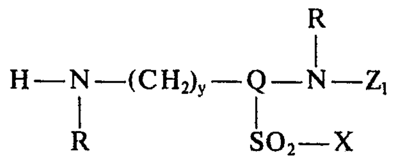

(20)

in welcher R, Q, X, $Z_1$ und y die obengenannten Bedeutungen haben, und gegebenenfalls mit einem Amin der oben definierten Formel $-NR^6R^7$ gleichzeitig oder in beliebiger Reihenfolge umsetzt.

Die Kondensationsreaktion der Phthalocyaninsulfochloride mit den verschiedenen Aminen erfolgt bei einem pH-Wert von etwa 4 bis 8, vorzugsweise bis 7, und bei einer Temperatur zwischen etwa 0 und 40° C und in Gegenwart eines säurebindenden Mittels sowie in Gegenwart von Pyridin oder einer Pyridincarbonsäure oder -sulfonsäure als Katalysator. Die Reaktion wird vorzugsweise im wäßrigen Medium durchgeführt. Es ist bei dieser Reaktion darauf zu achten, daß ein alkalischer pH-Bereich vermieden wird, sofern man bei dieser Kondensationsreaktion Ausgangsverbindungen einsetzt, die einen $\beta$-Sulfatoäthylsulfonyl- oder eine $\beta$-Thiosulfatoäthylsulfonyl- oder den Monofluortriazinrest enthalten. Die analoge bekannte Verfahrensweise ist beispielsweise in der deutschen Offenlegungsschrift 28 24 211 beschrieben.

Setzt man in die obige Kondensationsreaktion Ausgangsverbindungen der allgemeinen Formeln (18), (19), (19a) oder (20a) ein, in welchen der Formelrest X für die $\beta$-Hydroxyäthyl-Gruppe steht, so erhält man als Zwischenverbindungen der Kondensationsreaktion solche Verbindungen der Formel (14) oder (15), in denen hier $Z_1$ für ein Wasserstoffatom steht, so ist es vorteilhaft, die für X stehende $\beta$-Hydroxyäthyl-Gruppe zuerst in üblicher Weise, vorzugsweise mit konzentrierter Schwefelsäure, in die $\beta$-Sulfatoäthylgruppe überzuführen und nach dieser Veresterung sodann in wäßriger Lösung die Acylierung der Aminogruppe mittels der Verbindung der Formel (3) vorzunehmen.

Weitere wertvolle, erfindungsgemäße Verbindungen entsprechend der allgemeinen Formel (1) sind die Anthrachinonverbindungen der, in Form der freien Säure geschrieben, allgemeinen Formeln (21) und (22)

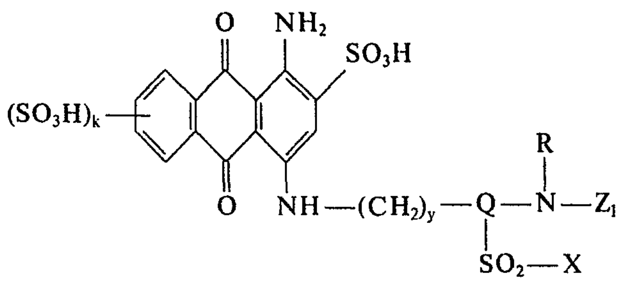

(21)

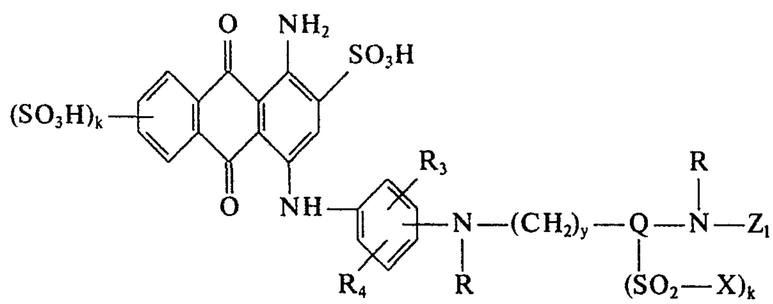

(22)

in welchen R, $R_3$, $R_4$, y, Q, X und $Z_1$ die obengenannten Bedeutungen haben, wobei Q bevorzugt der Benzolkern ist, der bevorzugt durch eine Sulfo-, Carboxy- oder niedere Alkoxygruppe substituiert sein kann und $R_3$ bevorzugt ein Wasserstoffatom und $R_4$ bevorzugt ein Wasserstoffatom, eine Sulfo-, Carboxy- oder niedere Alkoxygruppe bedeutet, und in welchen jedes k, zueinander gleich oder voneinander verschieden, für die Zahl Null oder 1 steht und $R_4$ auch den oben definierten Rest der Formel $-SO_2-X$ bedeuten kann. Die erfindungsgemäßen Anthrachinonverbindungen lassen sich, wie anfangs schon erwähnt, durch Umsetzung der 4-Brom-1-amino-anthrachinon-2-sulfonsäure analog bekannten Verfahrensweisen mit den entsprechenden Aminen der allgemeinen Formeln (23) und (23a)

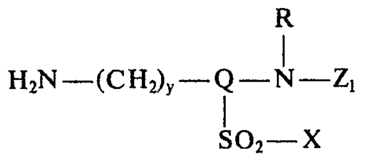

(23)

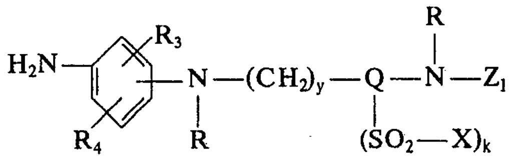

(23 a)

erhalten, in welchen $R_3$, $R_4$, R, y, Q, X und k die obengenannten Bedeutungen haben und $Z_1$ für ein Wasserstoffatom oder für den oben definierten Acylrest oder für den oben definierten Rest der Formel (3b) steht. Man führt die Reaktion bevorzugt in wäßrigem Medium und in Gegenwart von Kupfer/Kupfersalzen als Katalysator durch. Man kann auch in der Weise die erfindungsgemäßen Anthrachinonverbindungen herstellen, daß man beispielsweise von einem Anthrachinon der allgemeinen Formeln (24) oder (24a)

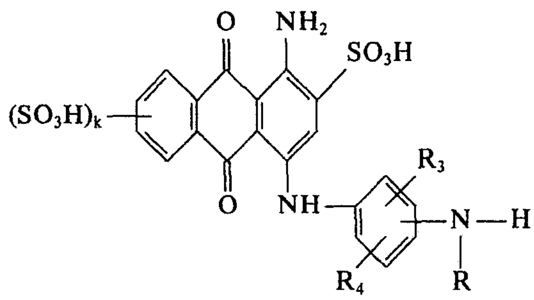

(24)

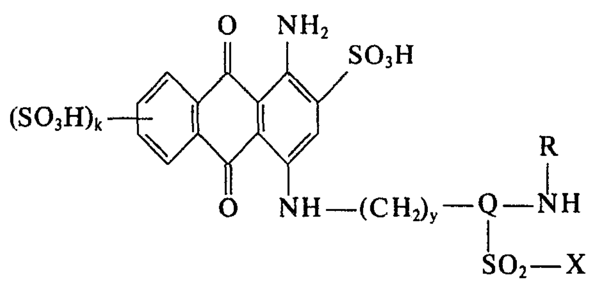

(24 a)

in welchen k, R, $R_3$, $R_4$, y, Q und X die hier genannten Bedeutungen haben, in der oben angegebenen erfindungsgemäßen Verfahrensweise b) zuerst mit Cyanurfluorid zur Difluortriazinylverbindung umsetzt und sodann anschließend mit einem Amin der oben definierten Formel (5) reagieren läßt, das vorzugsweise den definierten Rest der Formel $-SO_2-X$ enthält. Auch zur Herstellung dieser erfindungsgemäßen Anthrachinonverbindungen ist es vorteilhaft, wenn man von Ausgangsverbindungen ausgeht, die eine $\beta$-Hydroxyäthylsulfonylgruppe und eine Aminogruppe oder Acylaminogruppe (welche, erforderlichenfalls nach Hydrolyse, mit einem Fluortriazinrest umgesetzt werden) enthalten, diese Anthrachinon-Zwischenverbindungen zuerst gemäß den Angaben für die obengenannten, entsprechenden Phthalocyaninverbindungen mit Schwefelsäure zu den $\beta$-Sulfatoäthylsulfonyl-Verbindungen zu verestern und anschließend mit dem Fluortriazin-Derivat zu den erfindungsgemäßen Verbindungen entsprechend der Formel (1) zu acylieren.

Verbindungen entsprechend der allgemeinen Formel (19) oder (19a), die zur Synthese der obigen Verbindungen, beispielsweise der allgemeinen Formel (14) oder (21), eingesetzt werden können, sind beispielsweise

1,3-Diaminobenzol-4-$\beta$-hydroxyäthylsulfon, 2,4-Diaminotoluol-5-$\beta$-hydroxyäthylsulfon,
2,6-Diamino-toluol-4-$\beta$-hydroxyäthylsulfon, 1,4-Diaminobenzol-2-$\beta$-hydroxyäthylsulfon,
2,5-Diaminotoluol-4-$\beta$-hydroxyäthylsulfon und
1,3,5-Trimethyl-2,4-diaminobenzol-6-$\beta$-hydroxyäthylsulfon.

Weitere wertvolle, erfindungsgemäße Verbindungen entsprechend der allgemeinen Formel (1) sind beispielsweise die Kupfer-Formazan-Verbindungen entsprechend der allgemeinen Formel (25)

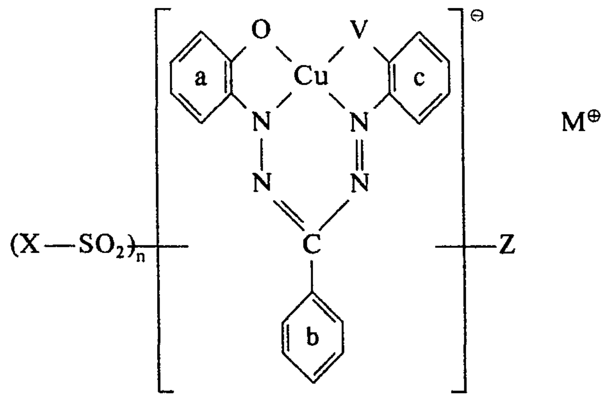

(25)

In dieser Formel bedeuten:

Der Phenylkern a ist unsubstituiert oder kann durch Substituenten, vorzugsweise 1 oder 2 Substituenten, aus der Gruppe Sulfo, Carboxy, Halogen, wie Fluor, Chlor und Brom, Acetylamino, Nitro, Alkyl von 1 bis 5 C-Atomen, wie Isopropyl, tert.-Butyl, tert.-Amyl oder Isobutyl, insbesondere Methyl und Äthyl, Alkoxy von 1 bis 4 C-Atomen, wie Methoxy und Äthoxy, Alkylsulfonyl von 1 bis 4 C-Atomen, wie Methylsulfonyl und Äthylsulfonyl, Phenylsulfonyl, Sulfamoyl, N-Mono- und N,N-Dialkylsulfamoyl mit jeweils 1 bis 4 C-Atomen im Alkyl substituiert sein;

der Phenylkern b ist unsubstituiert oder kann durch Substituenten, vorzugsweise 1 oder 2 Substituenten, aus der Gruppe Sulfo, Carboxy, Hydroxy, Nitro, Halogen, wie Fluor, Brom und Chlor, Alkyl von 1 bis 5 C-Atomen, vorzugsweise Methyl und Äthyl, Alkoxy von 1 bis 4 C-Atomen, vorzugsweise Methoxy und Äthoxy, Acetylamino, Alkylsulfonyl von 1 bis 4 C-Atomen, Sulfamoyl, N-Mono- und N,N-Dialkylsulfamoyl mit jeweils 1 bis 4 C-Atomen, Carbalkoxy mit 1 bis 4 C-Atomen im Alkylrest, wie Carbomethoxy und Carbäthoxy, substituiert sein;

der Phenylkern c ist unsubstituiert oder kann durch Substituenten, vorzugsweise 1 oder 2 Substituenten, aus der Gruppe Sulfo, Carboxy, Halogen, wie Fluor, Chlor und Brom, Acetylamino, Nitro, Alkyl von 1 bis 5 C-Atomen, wie Isopropyl, tert.-Butyl, tert.-Amyl oder Isobutyl, insbesondere Methyl und Äthyl, Alkoxy von 1 bis 4 C-Atomen, wie Methoxy und Äthoxy, Alkylsulfonyl von 1 bis 4 C-Atomen, wie Methylsulfonyl und Äthylsulfonyl, Phenylsulfonyl, Sulfamoyl, N-Mono- und N,N-Dialkylsulfamoyl mit jeweils 1 bis 4 C-Atomen im Alkyl substituiert sein;

V ist ein Sauerstoffatom oder eine Oxycarbonyl-Gruppe der Formel $-O-OC-$;

M ist ein Wasserstoffatom oder das Äquivalent eines Metalls, vorzugsweise ein Alkalimetall oder eines Erdalkalimetalls, wie insbesondere Natrium oder Kalium und des Calciums;

die Formelreste X und n haben die anfangs genannten Bedeutungen;

Z hat die oben definierte Bedeutung von der allgemeinen Formel (3a) mit p gleich 1 oder 2;

der Formelrest Z kann als ein zu den obengenannten Substituenten von a, b und c zusätzlicher Substituent an a, b und c sein, der zwingend im Formazanmolekül ein- oder zweimal enthalten ist und an ein aromatisches Kohlenstoffatom dieser Benzolkerne gebunden ist;

der Formelrest $-SO_2-X$ kann ein zu den obengenannten Substituenten von a, b und c zusätzlicher Substituent an a, b und c sein, der zwingend in Formazanmolekül ein- oder zweimal enthalten ist und an ein aromatisches Kohlenstoffatom dieser Benzolkerne gebunden ist.

Formazanverbindungen der allgemeinen Formel (25) sind bevorzugt, in denen der Phenylrenrest a unsubstituiert ist oder durch 1 oder 2 Substituenten aus der Gruppe Sulfo, Carboxy, Methyl, Äthyl, Methoxy, Äthoxy, Nitro, Chlor und Brom substituiert ist, der Phenylrest b unsubstituiert ist oder durch 1 oder 2 Substituenten aus der Gruppe Sulfo, Carboxy, Methyl, Äthyl, Methoxy, Äthoxy, Nitro, Chlor und Brom substituiert ist, der Phenylenrest c unsubstituiert ist oder durch 1 oder 2 Substituenten aus der Gruppe Sulfo, Carboxy, Methyl, Äthyl, Methoxy, Äthoxy, Nitro, Chlor und Brom substituiert ist, wobei die Gruppen der Formeln $-SO_2-X$ und Z in diesen Benzolkernen a und/oder b und/oder c zwingend jeweils ein- oder zweimal als gegebenenfalls zusätzliche Substituenten an a, b und c enthalten sind, wobei X bevorzugt die β-Sulfatoäthylgruppe darstellt, V für ein Sauerstoffatom steht und $M^{(+)}$ das Natrium- oder Kaliumion ist.

Die erfindungsgemäßen Formazanverbindungen lassen sich analog bekannten Methoden durch Umsetzung der entsprechenden Aminophenol- und/oder Aminobenzoesäure-Derivate und Benzaldehyd-Derivate in Gegenwart von Kupfersalzen herstellen. Solche Verfahrensweisen sind beispielsweise in den deutschen Offenlegungsschriften 17 19 083, 19 61 714 und 23 64 764 beschrieben. Demgemäß geht man hier von entsprechenden ortho-Aminophenol- und/oder ortho-Aminobenzoesäure-Verbindungen und Benzaldehydverbindungen aus, die eine Gruppe der oben definierten Formel $-SO_2-X$ mit X vorzugsweise der β-Hydroxyäthylgruppe bzw. eine Aminogruppe der Formel $-N(R)-H$ mit R der obengenannten Bedeutung oder deren Acylderivat enthalten. Die als Zwischenprodukte auftretenden,

diese Aminogruppen oder Acylaminogruppe und $\beta$-Hydroxyäthylsulfongruppen enthaltenden Kupferformazanverbindungen werden zunächst unter Hydrolyse der Acylaminogruppe in die entsprechenden Aminoderivate überführt. Diese Verbindungen werden, wie auch bei der Herstellung der obigen Phthalocyanin- und Anthrachinon-Verbindungen, isoliert, getrocknet und sodann in der angegebenen Weise zur $\beta$-Sulfatoäthylsulfonyl-Verbindung verestert, anschließend in wäßriger, neutraler bis schwach saurer Lösung mit dem Fluortriazinylderivat der allgemeinen Formel (3) oder mit Cyanurfluorid und anschließend mit einem Amin der Formel (5) zur erfindungsgemäßen Verbindung entsprechend der allgemeinen Formel (1) bzw. (25) umgesetzt. Die Veresterung der $\beta$-Hydroxyäthylsulfonylgruppe kann beispielsweise in Schwefelsäure gemäß der in der deutschen Offenlegungsschrift 17 19 083 im Beispiel 2 beschriebenen Methode durchgeführt werden. Vorteilhaft erfolgt auch die Veresterung zur $\beta$-Sulfatoäthylsulfonylgruppe nach den in der deutschen Offenlegungsschrift 20 16 862 und der Patentschrift 26 34 909 bekannten Verfahrensweisen.

Von den obengenannten erfindungsgemäßen Verbindungen können weiterhin diejenigen entsprechend den nachstehenden allgemeinen Formeln (a) bis (z) hervorgehoben werden:

(a): 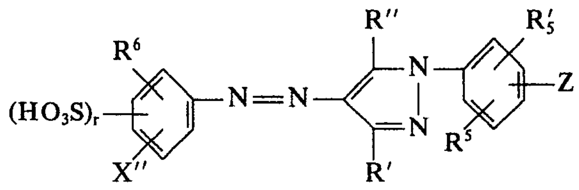

(b): 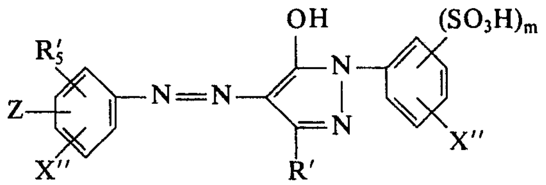

(c): 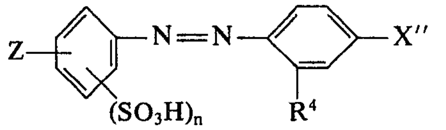

(d): 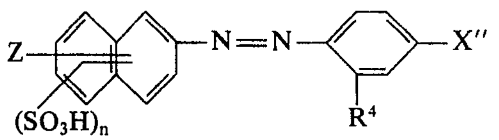

(e): 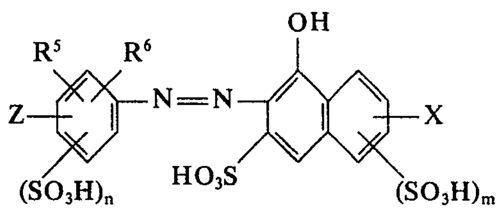

(f): 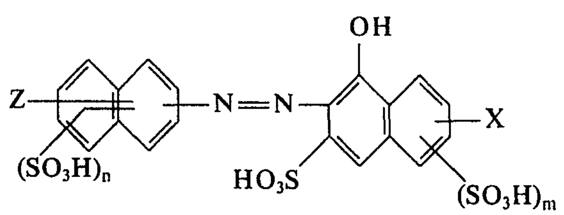

(g): Die 1 : 1-Kupfer-, 1 : 2-Chrom- oder 1 : 2-Kobalt-Komplexe der Verbindungen der Formel

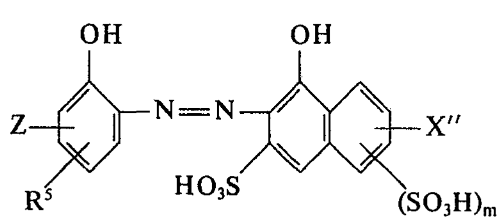

(h): Die 1:1-Kupfer-, 1:2-Chrom- oder 1:2-Kobalt-Komplexe der Verbindungen der Formel

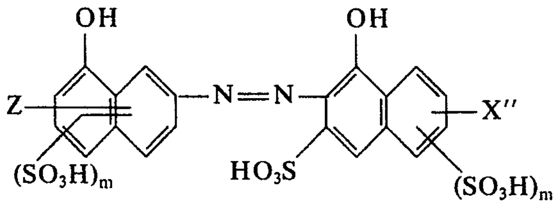

(i):

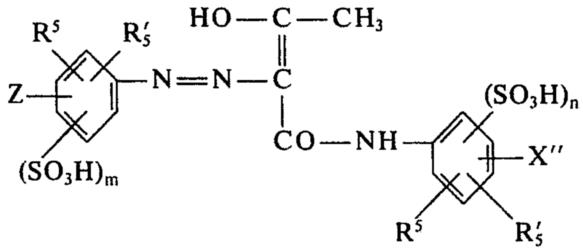

(j):

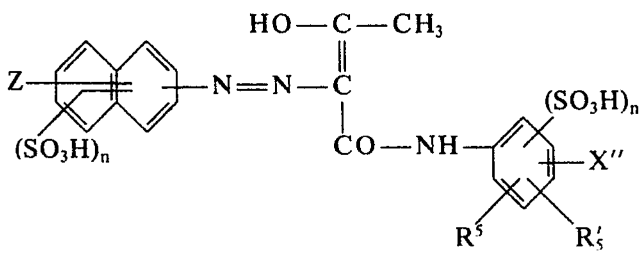

(k):

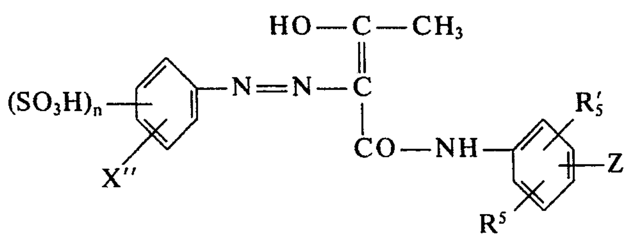

(l): Die 1:1-Kupfer-, 1:2-Chrom- oder 1:2-Kobalt-Komplexe der Verbindungen der Formel

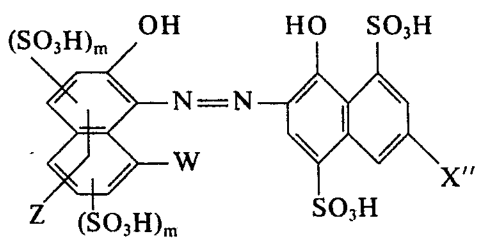

(m):

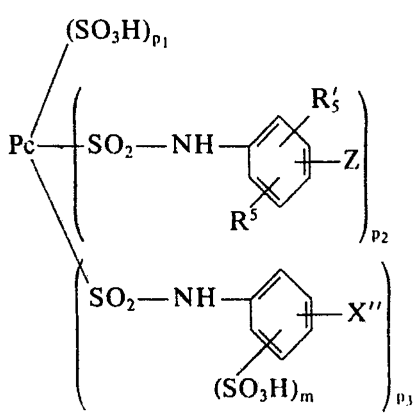

(n'):

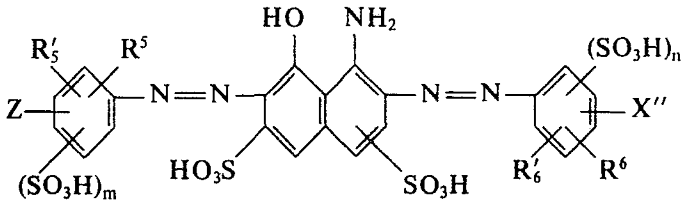

(n''):

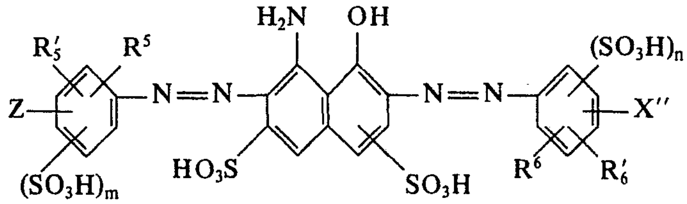

(o): Die 1:1-Kupfer-, 1:2-Chrom- oder 1:2-Kobalt-Komplexe der Verbindungen der Formel

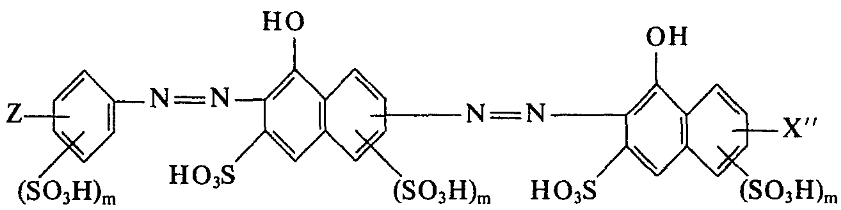

(p):

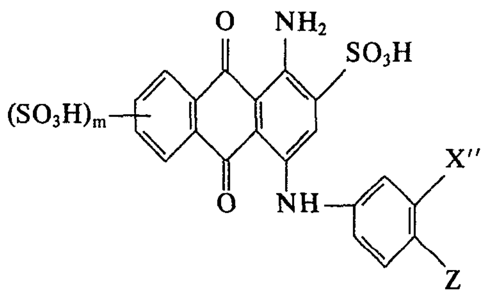

(q):

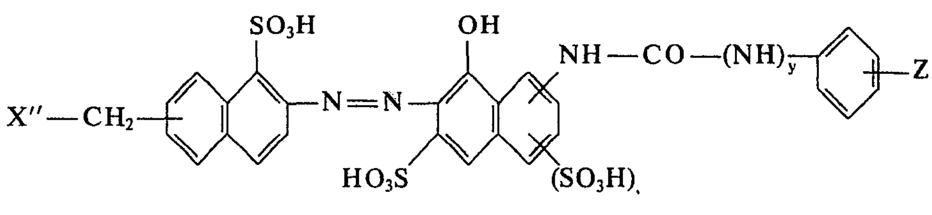

(r'):

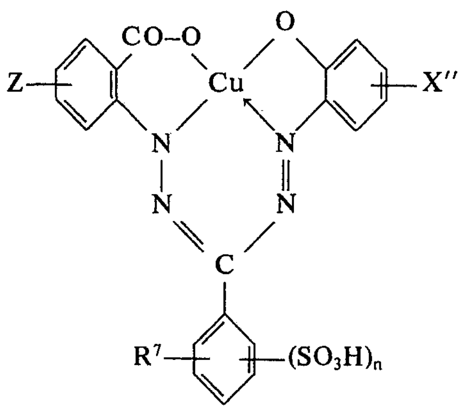

(r''): 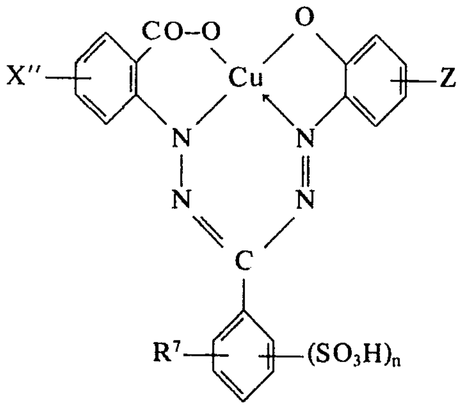

(s): 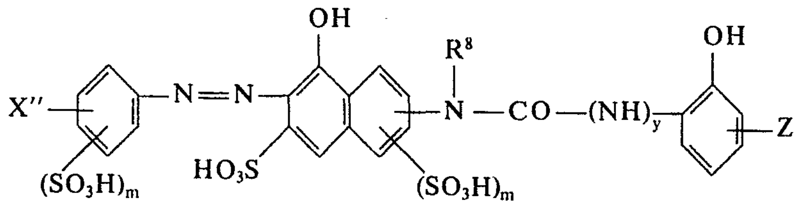

(t): 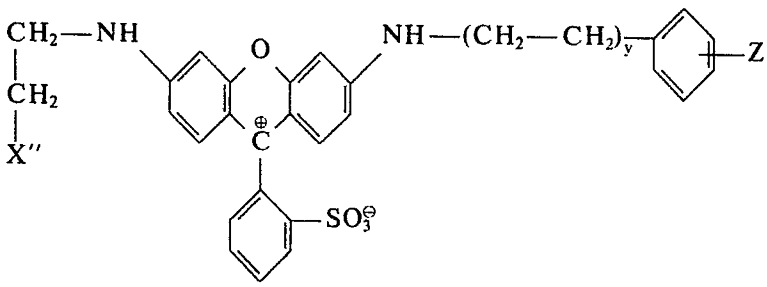

(u): Die 1 : 1-Kupfer-, 1 : 2-Chrom- oder 1 : 2-Kobalt-Komplexe der Verbindungen der Formel

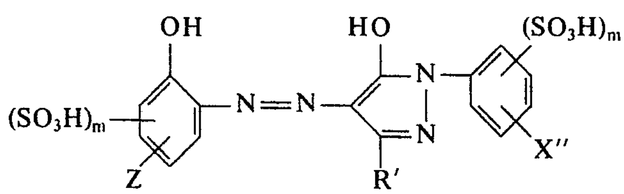

(v): Die 1 : 1-Kupfer-, 1 : 2-Chrom- oder 1 : 2-Kobalt-Komplexe der Verbindungen der Formel

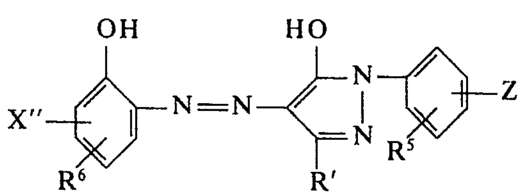

(w): 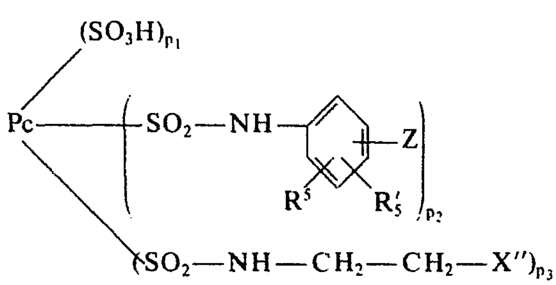

(x'): 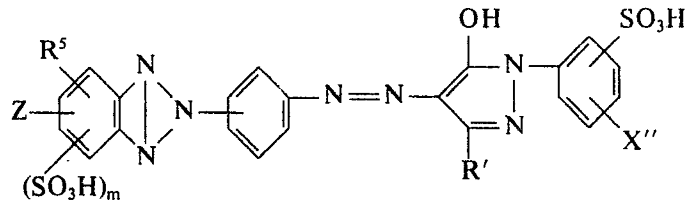

(x''): 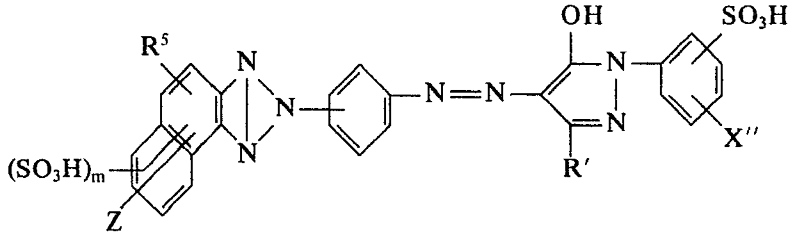

(x¹): 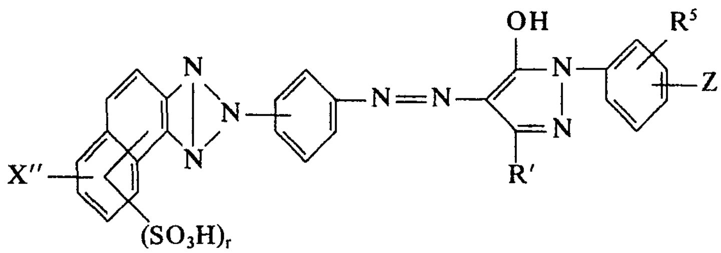

(y): Die 1 : -Kupfer-, 1 : 2-Chrom- oder 1 : 2-Kobalt-Komplexe der Verbindungen der Formel

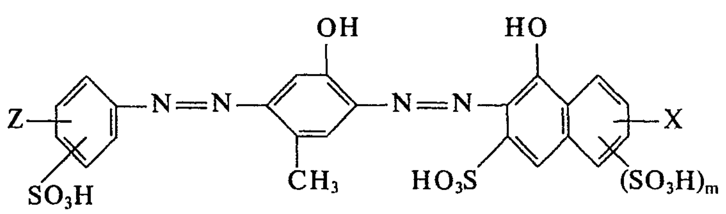

(z): Die 1 : 1-Kupfer-, 1 : 2-Chrom- oder 1 : 2-Kobalt-Komplexe der Verbindungen der Formel

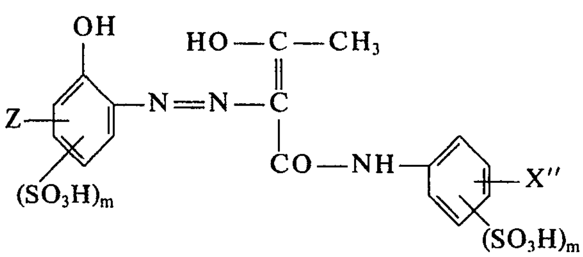

In diesen Formeln bedeuten:

X ist eine Gruppe der allgemeinen Formel (3a) mit R und Y der obengenannten Bedeutungen und p der Bedeutung von 1, wobei R bevorzugt Wasserstoff oder Methyl ist;

X'' ist eine Gruppe der allgemeinen Formel (3a) mit p gleich der Zahl 1 und R gleich Wasserstoff und Y der obengenannten Bedeutung;

Z ist hier die Vinylsulfonyl-, die β-Thiosulfatoäthylsulfonyl-, die β-Sulfatoäthylsulfonyl- oder die β-Chloräthylsulfonyl-Gruppe;

m ist die Zahl Null oder 1, wobei im Falle m gleich Null diese Gruppe ein Wasserstoffatom darstellt;

n ist die Zahl Null, 1 oder 2, wobei im Falle n gleich Null diese Gruppe ein Wasserstoffatom darstellt;

$p_1$, $p_2$ und $p_3$ sind gleich oder verschieden voneinander und jedes ist eine Zahl von 1 bis 2, wobei die Summe von ($p_1 + p_2 + p_3$) höchstens 4 ist;

r ist die Zahl 1 oder 2;

y ist die Zahl Null oder 1;
R' ist die Methyl-, Carboxy-, Carbomethoxy- oder Carbäthoxy-Gruppe;
R" ist die Amino- oder Hydroxygruppe;
$R^4$ ist die Amino-, Acetylamino- oder Ureidogruppe;
$R^5$ ist ein Wasserstoffatom oder die Methyl-, Methoxy-, Äthyl-, Äthoxy-, Hydroxy- oder Carboxygruppe;
$R_5'$ ist ein Wasserstoffatom oder die Methyl-, Methoxy-, Äthyl-, Äthoxy-, Hydroxy- oder Carboxygruppe;
$R^6$ ist ein Wasserstoff- oder Chloratom oder die Methyl-, Methoxy-, Äthyl-, Äthoxy-, Hydroxy- oder Carboxygruppe;
$R_6'$ ist ein Wasserstoff- oder Chloratom oder die Methyl-, Methoxy-, Äthyl-, Äthoxy-, Hydroxy- oder Carboxygruppe;
$R^7$ ist ein Wasserstoff- oder ein Chloratom;
$R^8$ ist ein Wasserstoffatom oder die Methylgruppe;
W ist in Wasserstoffatom oder die Hydroxygruppe;
Pc ist der metallfreie oder metallhaltige Phthalocyaninrest, bevorzugt der Kupfer- oder Nickelphthalocyaninrest;
die Formelglieder
R', R", $R^4$, $R^5$, $R_5'$, $R^6$, $R_6'$, $R^7$, $R^8$, Y und W sowie m, n, $p_1$, $p_2$, $p_3$, r und y können zueinander gleich oder verschieden voneinander sein.

Von den Verbindungen der allgemeinen Formel (1) können insbesondere die in den Beispielen 1, 4, 71, 72, 76, 82 und 85 beschriebenen Monoazo- und Kupferkomplexazoverbindungen hervorgehoben werden (die im Tabellenbeispiel 85 beschriebene erfindungsgemäße Verbindung hat folgende, in Form der freien Säure beschriebene, chemische Formel):

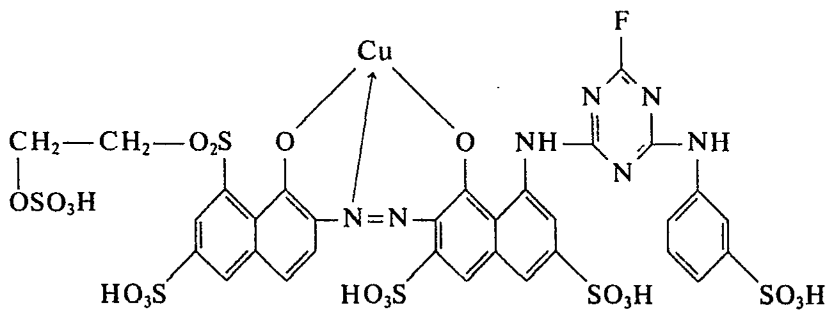

Die Abscheidung der erfindungsgemäß hergestellten Verbindungen aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugefügt werden kann. Die neuen erfindungsgemäßen Verbindungen der allgemeinen Formel (1) haben faserreaktive Eigenschaften und besitzen sehr gute Farbstoffeigenschaften. Sie können deshalb zum Färben von hydroxy- und/oder carbonamidgruppenhaltigem Material, insbesondere Fasermaterial, wie auch von Leder, verwendet werden. Ebenso können auch die bei der Synthese der erfindungsgemäßen Verbindungen anfallenden Lösungen, gegebenenfalls nach Zusatz einer Puffersubstanz, gegebenenfalls nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1) zum Färben von hydroxy- und carbonamidgruppenhaltigen Materialien bzw. Verfahren zu deren Anwendung auf diesen Substraten. Eingeschlossen sind hierbei die Massefärbung, beispielsweise von Folien aus Polyamid, und die Druckfärbung. Bevorzugt kommen die Materialien in Form von Fasermaterialien zur Anwendung, insbesondere in Form von Textilfasern, wie Garnen, Wickelkörpern und Geweben.

Hydroxygruppenhaltige Materialien sind natürliche oder synthetische hydroxygruppenhaltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und viskose Kunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die erfindungsgemäßen Verbindungen lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren. So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bei Temperaturen zwischen 40 und 105° C, gegebenenfalls bei Temperaturen bis zu 120° C unter Druck, gegebenenfalls in Gegenwart von üblichen Färbereihilfsmitteln, im wäßrigen Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60° C, durch Dämpfen oder mit Trockenhitze in üblicher Weise fixiert werden kann.

Ebenfalls erhält man nach den üblichen Druckverfahren für Cellulosefasern, – die entweder einphasig durchgeführt werden können, beispielsweise durch Bedrucken mit einer Natriumbicarbonat oder ein anderes säurebindendes Mittel und das Farbmittel enthaltenden Druckpaste und durch anschließendes Dämpfen bei 100 bis 103° C, oder die zweiphasig, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, durchgeführt werden können, – farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Verbindungen erhaltenen Fixiergrade sehr hoch.

Bei der Fixierung mittels Trockenhitze nach den üblichen Thermofixierverfahren verwendet man Heißluft von 120 bis 200° C. Neben dem üblichen Wasserdampf von 101 bis 103° C kann auch überhitzter Dampf und Druckdampf von Temperaturen bis zu 160° C eingesetzt werden.

Die säurebindenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalimetallhydroxyde und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxyd, Kaliumhydroxyd, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Behandlung der erfindungsgemäßen Verbindungen mit den säurebindenden Mitteln, gegebenenfalls unter Wärmeeinwirkung, werden die erfindungsgemäßen Verbindungen (Farbstoffe) chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure und/oder auf Basis eines Umsetzungsproduktes von beispielsweise Stearylamin mit Äthylenoxyd. In der Regel wird das zu färbende Material bei einer Temperatur von etwa 40° C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98° C durchgeführt. Die Färbungen können aber auch bei Siedetemperatur oder bei Temperaturen bis zu 120° C (unter Druck) ausgeführt werden.

Die mit den erfindungsgemäßen Verbindungen der allgemeinen Formel (1) hergestellten Färbungen und Drucke zeichnen sich durch sehr klare Nuancen aus. Insbesondere die Färbungen und Drucke auf Cellulosefasermaterialien besitzen eine hohe Farbstärke, wie bereits erwähnt, darüber hinaus eine gute Lichtechtheit und sehr gute Naßechtheiten, wie Wasch-, Walk-, Wasser-, Seewasser-, Überfärbe- und Schweißechtheiten, des weiteren eine gute Plissierechtheit, Bügelechtheit und Reibechtheit.

Besonders hervorzuheben sind die mit den erfindungsgmäßen Farbstoffen auf Cellulosefasermaterialien erzielbaren hohen Fixierausbeuten, die bei der Anwendung nach Druckverfahren und Klotzfärbeverfahren bis zu 90% und in einzelnen Fällen über 90% betragen können. Ein weiterer Vorteil der erfindungsgemäßen Farbstoffe besteht in der leichten Auswaschbarkeit des beim Druck- oder Färbevorgang nicht fixierten Farbstoffanteiles, wodurch der Waschvorgang der bedruckten oder gefärbten Cellulosefasermaterialien mit geringen Waschflottenmengen und gegebenenfalls einer energiesparenden Temperaturführung während des Waschvorganges bewerkstelligt werden kann. Die erfindungsgemäßen Farbstoffe sind in der Regel bezüglich der Fixierausbeute auf Cellulosefasermaterialien und bezüglich des Auswaschverhaltens des nicht fixierten Farbstoffanteiles solchen nächstvergleichbaren Reaktivfarbstoffen überlegen, die als Reaktivgruppe nur einen Monofluortriazin-Rest oder nur eine Vinylsulfon-Gruppe an das Farbstoffmolekül gebunden enthalten.

Die nachstehenden Beispiele dienen zur Erläuterung der Erfindung. Die darin genannten Teile sind Gewichtsteile, die Prozentangaben stellen Gewichtsprozente dar, sofern nichts anderes vermerkt. Gewichtsteile beziehen sich zu Volumenteilen wie Kilogramm zu Liter.

Beispiel 1

64 Teile 1-Amino-8-naphthol-3,6-disulfonsäure werden in 800 Teilen Wasser unter Zusatz von 15 Teilen Natriumcarbonat bei pH 4,5 bis 5,0 gelöst. Man kühlt dann auf 0° C ab und läßt 28 Teile Cyanurfluorid zutropfen, wobei der pH-Wert fällt und durch Einstreuen von Natriumbicarbonatpulver auf pH 3 bis 4 gehalten wird. Es wird 15 Minuten bei pH 3 bis 4 und 0° C nachgerührt und dann eine Lösung des Natriumsalzes von 38 Teilen Anilin-3-sulfonsäure zugegeben. Bei einem pH-Wert von 5 wird 5 Stunden bei 20 bis 25° C gerührt, bis kein freies Amin mehr durch Diazotierprobe nachweisbar ist. Die Lösung wird als Kupplungskomponente zur Farbstoffherstellung eingesetzt.

Zur Herstellung der Diazoniumverbindung werden 56 Teile Anilin-4-$\beta$-sulfatoäthylsulfon in 500 Teile Eiswasser suspendiert, mit 45 Teilen conc. wäßriger Salzsäure angesäuert und mit 40 Volumenteilen einer 5n-Natriumnitritlösung diazotiert. Man rührt 2 Stunden bei ca. 5° C nach und zerstört dann überschüssige salpetrige Säure mittels Amidosulfonsäure. Die so hergestellte Diazoniumsalzlösung läßt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6 gehalten. Dann wird der Farbstoff mit Natriumchlorid ausgeschieden, auf der Nutsche isoliert und nach Zumischen von 7 Teilen Dinatriumphosphat im Vakuum bei 60° C getrocknet. Nach dem Mahlen wird ein rotes, elektrolythaltiges Farbstoffpulver erhalten, das das Natriumsalz der Verbindung der Formel

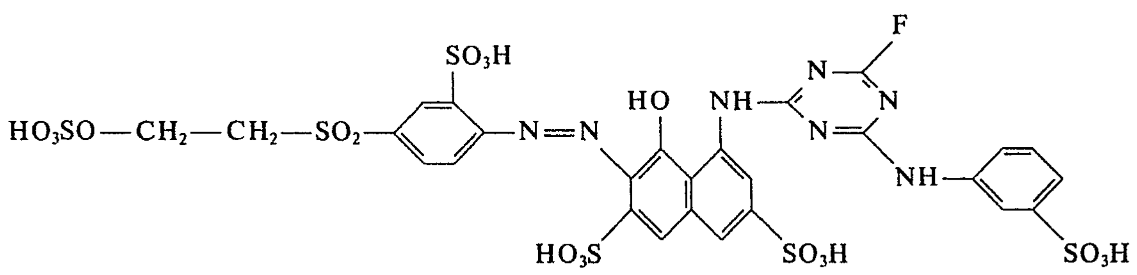

enthält.

Diese Verbindung besitzt sehr gute Farbstoffeigenschaften und färbt Cellulosematerialien nach den üblichen Färbe- und Druckverfahren für Reaktivfarbstoffe in klaren, blaustichig roten Tönen mit sehr guten Naßechtheitseigenschaften.

Beispiel 2

Es wird eine Diazoniumsalzlösung hergestellt; zunächst werden 72 Teile 4-$\beta$-Sulfatoäthylsulfonylanilin-2-sulfonsäure in 400 Teilen Wasser unter Zusatz von 16 Teilen Natriumcarbonat gelöst, dann wird auf 0 bis 5° C abgekühlt, mit 50 Teilen conc. wäßriger Salzsäure angesäuert und mit einer Lösung von 40 Vol.-Teilen einer 5 n-Natriumnitritlösung diazotiert. Man zerstört dann mit wenig Amidosulfonsäure überschüssige salpetrige Säure. Diese Lösung läßt man dann zur Lösung der Kupplungskomponente einlaufen, die gemäß Beispiel 1 hergestellt wurde. Durch Einstreuen von Natriumbicarbonat wird hierbei der pH-Wert auf 4 bis 4,5 gehalten. 2 Stunden wird nachgerührt und dann mit Dinatriumphosphat ein pH-Wert von 6,5 eingestellt. Die Farbstofflösung wird im Vakuum bei 60° C zur Trockene eingedampft. Nach dem Mahlen wird ein rotes, elektrolythaltige Farbstoffpulver erhalten, das das Natriumsalz der Verbindung der Formel

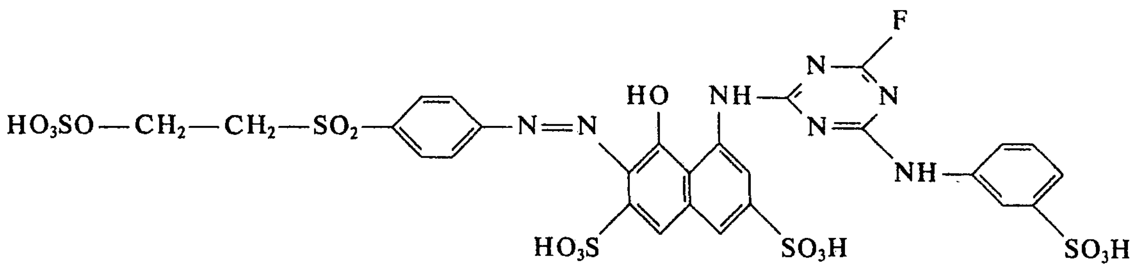

enthält. Diese Azoverbindung eignet sich hervorragend als Farbstoff. Infolge der faserreaktiven Eigenschaften werden beispielsweise aus wäßrig-alkalischer Flotte farbtiefe, rote Färbungen mit blaustichiger Nuance auf Baumwolle erhalten, die gegenüber Lichteinwirkung und Waschbehandlungen sehr beständig sind.

### Beispiel 3

60 Teile 3-β-Thiosulfatoäthylsulfonyl-anilin werden in 400 Teilen Wasser eingetragen und durch vorsichtige Zugabe von 16 Teilen Natriumbicarbonat in Lösung gebracht. Dann werden 150 Teile Eis und 50 Teile einer conc. wäßrigen Salzsäure hinzugefügt, und man läßt 40 Volumenteile einer 5 n-Natriumnitritlösung einlaufen. Man rührt noch 2 Stunden bei 0 bis 5° C nach und zerstört sodann überschüssige salpetrige Säure mittels Amidosulfonsäure.

In die so hergestellte Diazoniumsalzsuspension läßt man bei einem pH-Wert von 4 bis 5 und bei 15° C unter gleichzeitigem Zulaufen einer gesättigten Natriumcarbonatlösung die Lösung des primären Kondensationsproduktes von 0,2 Mol 1-Amino-8-naphthol-4,6-disulfonsäure und 0,2 Mol Cyanurfluorid zulaufen, die folgendermaßen hergestellt wurde: 64 Teile 1-Amino-8-naphthol-4,6-disulfonsäure werden in 400 Teilen Wasser verrührt und durch Zugabe von 7 Teilen Natriumcarbonat in Lösung gebracht. Anschließend wird auf 0° C abgekühlt und 28 Teile Cyanurfluorid zugetropft. Der pH-Wert fällt hierbei; durch Zutropfen einer gekühlten und gesättigten Natriumbicarbonatlösung wird er auf 4 bis 4,5 gehalten. Nach einer Nachrührzeit von ½ Std. sind in der Lösung keine diazotierbaren Anteile mehr enthalten. Daraufhin wird die Diazoniumsalzlösung zugefügt, und bei 10 bis 15° C wird gekuppelt. Hierbei wird der pH-Wert auf 4 bis 5 gehalten, indem man eine gesättigte Natriumbicarbonatlösung zutropfen läßt. Nach einer Nachrührzeit von 1 Std. wird eine neutrale Lösung zugefügt, die durch Auflösen von 19 Teilen Anilin-3-sulfonsäure, 19 Teilen Anilin-4-sulfonsäure und 8 Teilen Natriumcarbonat in 200 Teilen Wasser erhalten wird. Bei 20 bis 25° C wird noch 6 Std. bei pH 5,5 bis 6,0 gerührt.

Der Farbstoff wird durch Natriumchlorid gefällt, auf der Nutsche isoliert und nach Zusatz von 5 Teilen Phosphatpulver im Vakuumtrockenschrank bei 40 bis 50° C getrocknet. Nach dem Mahlen wird ein rotes Farbstoffpulver erhalten, welches das Natriumsalz der Verbindung der Formel

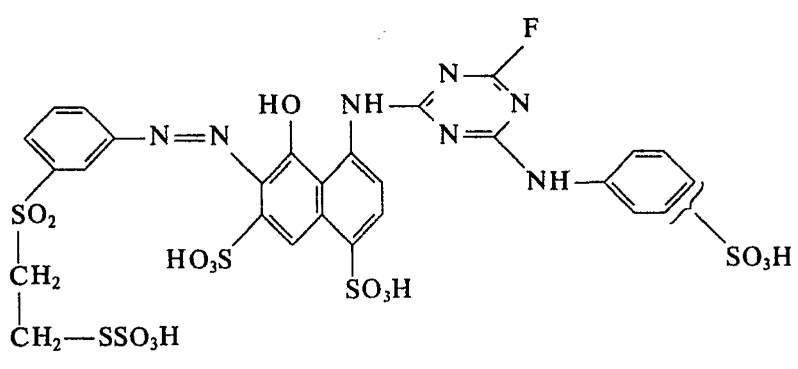

enthält. Diese Azoverbindung liefert aus wäßrig-alkalischer bzw. schwach saurer Flotte nach den üblichen Auszieh- oder Klotzverfahren gelbstichig rote Färbungen auf Baumwoll- bzw. Wollfasern. Die Färbungen besitzen sehr gute Wasch- und Lichtechtheiten.

### Beispiel 4

62 Teile 2-Methoxy-5-β-sulfatoäthylsulfonyl-anilin werden in 200 Teilen Wasser eingetragen und durch Hinzufügen von 15 Teilen Natriumbicarbonat in Lösung gebracht. Die Lösung wird auf 0 bis 5° C gekühlt, mit 45 Teilen conc. Salzsäure versetzt und unter Zutropfen von 40 Vol.-Teilen 5 n-Natriumnitritlösung wird diazotiert. Man läßt 1 Stunde nachrühren und zerstört dann die überschüssige salpetrige Säure mit wenig Amidosulfonsäure.

Die erhaltene Diazoniumsalzlösung wird mit der wäßrigen Lösung der Kupplungskomponente vereinigt, die folgendermaßen hergestellt wurde: 37 Teile Anilin-3-sulfonsäure werden in 200 Teilen Wasser eingetragen und mit Natriumcarbonat gelöst. Nach dem Abkühlen auf 0° C werden 28 Teile Cyanurfluorid zugetropft und hierbei der pH-Wert auf 6,5 gehalten, indem Natriumbicarbonat eingestreut wird. Man rührt noch ½ Stunde nach und läßt dann die Lösung zulaufen, die man durch Auflösen von 51 Teilen 2-Methylamino-5-naphthol-7-sulfonsäure und 12 Teilen Natriumcarbonat in 200 Teilen Wasser erhält. Die Reaktionslösung wird dann 5 Stunden bei 15° C bis 20° C gerührt und hierbei der pH-Wert durch Eintragen von Natriumbicarbonat auf pH 5,5 bis 6,0 gehalten.

Diese Lösung wird dann zur Farbstoffherstellung verwendet. Die Kupplung wird bei 10 bis 15° C und einem pH-Wert von 6,0 bis 6,8 zu Ende geführt und der Farbstoff mit Natriumchlorid gefällt, auf der Nutsche isoliert, mit Phosphatpuffer vermischt und bei 60° C im Vakuumtrockenschrank getrocknet. Nach dem Mahlen erhält man ein rotes Farbstoffpulver, welches das Natriumsalz der Verbindung der Formel

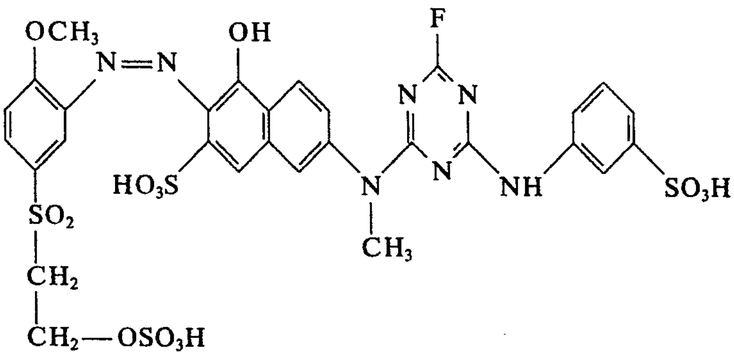

enthält. Mit dem Farbstoff werden nach den üblichen Färbe- und Druckverfahren auf Baumwoll- oder Wollfasern klare Rottöne mit gelbstichiger Nuance erhalten.

## Beispiel 5

30,3 Teile 2-Naphthylamin-4,8-disulfonsäure werden in 40 Volumenteilen Eiswasser suspendiert. Es werden 25 Gewichtsteile konz. Salzsäure zugeführt und mit 20 Volumenteilen 5 n-Natriumnitrit diazotiert. Es wird noch 1 Stunde bei 0 bis 5° C nachgerührt und dann überschüssige salpetrige Säure mit wenig Amidosulfonsäure zerstört. Dann werden 33,1 Teile 1-Naphthylamin-6-β-sulfatoäthylsulfon zugegeben und durch Natriumacetat wird der pH-Wert langsam auf 4,5 erhöht. Bei diesem pH-Wert wird noch 2 Stunden bei 10 bis 15° C nachgerührt, bis keine freie Diazoniumverbindung mehr nachweisbar ist. Dann wird wieder auf 0 bis 5° C abgekühlt, 35 Teile einer konz. Salzsäure und anschließend 22 Volumenteile einer 5 n-Natriumnitritlösung zugefügt. Es wird 1 Stunde bei 0 bis 5° C nachgerührt und dann wenig Amidosulfonsäure zugegeben.

In die Lösung werden dann 22,5 Teile 1-Naphthylamin-8-sulfonsäure eingetragen und mit etwa 5 Teilen Soda ein pH-Wert von 4 bis 5, eingestellt und gehalten, wobei 2 Stunden nachgerührt wird. Die Farbstofflösung wird dann auf pH 5,5 bis 6,0 gestellt und auf 0° C abgekühlt. Bei dieser Temperatur und bei diesem pH-Wert läßt man zunächst 15 Teile Cyanurfluorid zutropfen und dann noch 15 Minuten nachrühren, ehe eine Lösung von 19 Teilen Aminobenzol-3-sulfonsäure und 6 Teilen Natriumcarbonat in 150 Volumenteilen Wasser zugefügt werden. Die Temperatur wird innerhalb einer Stunde bei 15° C gehalten, und dann auf 20° C erhöht, wobei der pH-Wert von 5,5 bis 6,0 gehalten wird.

Unter Zusatz von 7 Teilen Dinatriumphosphat wird mit der Farbstoff mit Kalium- und Natriumchlorid aus der Lösung isoliert. Nach dem Trocknen bei 40 bis 50° C und Mahlen erhält man ein schwarzes Farbstoffpulver, das das Alkalimetallsalz der Verbindung der Formel

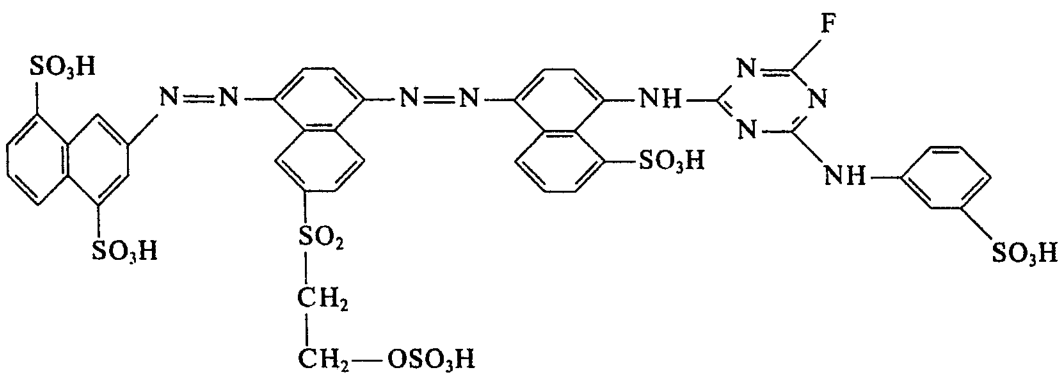

| Beispiel | Diazokomponente | Kupplungskomponente | Amin H–Y | Farbton |
|---|---|---|---|---|
| 6 | Anilin-4-β-sulfatoäthylsulfon | 1-(4′,6′-Difluor-1′,3′,5′-triazin-2′-yl-amino)-8-naphthol-3,6-disulfonsäure | Aminoessigsäure | rot |
| 7 | desgl. | desgl. | Ammoniak | rot |
| 8 | desgl. | desgl. | Methylamin | rot |
| 9 | desgl. | desgl. | Cyclohexyamin | rot |
| 10 | desgl. | desgl. | Diäthanolamin | rot |
| 11 | desgl. | desgl. | Methoxypropylamin | rot |
| 12 | desgl. | desgl. | 3-Acetamino-propylamin | rot |
| 13 | desgl. | desgl. | Anilin-2-carbonsäure | rot |
| 14 | desgl. | desgl. | Anilin-2-sulfonsäure | rot |
| 15 | desgl. | desgl. | Anilin-4-sulfonsäure | rot |
| 16 | desgl. | desgl. | Anilin-2,5-disulfonsäure | rot |
| 17 | desgl. | desgl. | 1-Naphthylamin-4-sulfonsäure | rot |
| 18 | desgl. | desgl. | 2-Naphthylamin-6,8-disulfonsäure | rot |
| 19 | desgl. | desgl. | N-Methyl-anilin-4-sulfonsäure | rot |
| 20 | desgl. | desgl. | 2,3-Dimethyl-anilin | rot |
| 21 | desgl. | desgl. | 4-tert. Butyl-anilin | rot |
| 22 | desgl. | desgl. | N,N-Dimethyl-hydrazin | rot |
| 23 | desgl. | desgl. | Cyan-amid | rot |

enthält. Diese Verbindung besitzt sehr gute Farbstoffeigenschaften und färbt Baumwolle und Wolle nach den üblichen Färbe- und Druckmethoden für Reaktivfarbstoffe in braunen Tönen mit sehr guten Naßechtheitseigenschaften.

Beispiele 6 bis 70 d

Man verfährt analog der in den obigen Ausführungsbeispielen beschriebenen Verfahrensweisen, wobei man entsprechende Mengen an den in den entsprechenden Tabellenbeispielen angegebenen aromatischen Aminen als Diazokomponenten, den angegebenen Kupplungskomponenten und dem ankondensierbaren Amin, das einer Verbindung der Formel H—Y entspricht, einsetzt. Man erhält auf diese Weise ebenfalls neue, erfindungsgemäße, wertvolle Farbstoffe, die Baumwolle in den dort angegebenen Farbtönen mit hohen Echtheiten färben.

Fortsetzung

| Beispiel | Diazokomponente | Kupplungskomponente | Amin H–Y | Farbton |
|---|---|---|---|---|
| 24 | Anilin-4-β-sulfatoäthylsulfon | 1-(4',6'-Difluor-1',3',5'-triazin-2'-yl-amino)-8-naphthol-3,6-disulfonsäure | Thioharnstoff | rot |
| 25 | desgl. | desgl. | Anilin-N-methansulfonsäure | rot |
| 26 | desgl. | desgl. | 4-tert. Butyl-anilin | rot |
| 27 | desgl. | desgl. | 3-Amino-phenol | rot |
| 28 | 2-Brom-4-β-sulfatoäthylsulfonyl-anilin | desgl. | Anilin-3-sulfonsäure | rot |
| 29 | Anilin-4-vinylsulfon | desgl. | Anilin-4-sulfonsäure | rot |
| 30 | 2,6-Dichlor-anilin-4-β-sulfatoäthylsulfon | desgl. | 2-Chlor-phenylhydrazin-5-sulfonsäure | rot |
| 31 | Anilin-3-β-sulfatoäthylsulfon | desgl. | Ammoniak | rot |
| 32 | desgl. | desgl. | N-Methyl-aminoäthan-2-sulfonsäure | rot |
| 33 | desgl. | desgl. | 2-Aminoäthanol | rot |
| 34 | desgl. | desgl. | 2-Amino-hydroxyäthyl-schwefelsäureester | rot |
| 35 | desgl. | desgl. | Anilin-2-sulfonsäure | rot |
| 36 | desgl. | desgl. | 2-Naphthylamin-4,8-disulfonsäure | rot |
| 37 | 3-(N-Methyl-äthionylamino)-anilin | desgl. | Anilin-3-sulfonsäure | rot |
| 38 | Anilin-3-vinylsulfon | desgl. | 1-Naphthylamin-3,8-disulfonsäure | rot |
| 39 | 2-Methoxy-anilin-5-β-sulfatoäthylsulfon | desgl. | Ammoniak | blaustichig-rot |

Fortsetzung

| Beispiel | Diazokomponente | Kupplungskomponente | Amin H–Y | Farbton |
|---|---|---|---|---|
| 40 | 2-Methoxy-anilin-5-β-sulfatoäthyl-sulfon | 1-(4',6'-Difluor-1',3',5'-triazin-2'-yl-amino)-8-naphthol-3,6-disulfonsäure | Anilin-3-sulfonsäure | blaustichig-rot |
| 41 | 4-Methoxy-anilin-3-β-vinylsulfon | desgl. | Anilin-4-sulfonsäure | desgl. |
| 42 | 2,5-Dimethyl-anilin-4-β-sulfatoäthyl-sulfon | desgl. | Anilin-3-sulfonsäure | rot |
| 43 | 2,5-Dimethoxy-anilin-4-β-thiosulfato-äthylsulfon | desgl. | desgl. | blaustichig-rot |
| 44 | 4-β-Sulfatoäthylsulfonylanilin-2-sulfonsäure | desgl. | desgl. | desgl. |
| 45 | 8-β-Sulfatoäthylsulfonyl-2-naphthyl-amin-6-sulfonsäure | desgl. | Ammoniak | desgl. |
| 46 | 6-β-Sulfatoäthylsulfonyl-2-naphthyl-amin-1-sulfonsäure | desgl. | Anilin-3-sulfonsäure | desgl. |
| 47 | Anilin-4-β-sulfatoäthylsulfon | 1-(4',6'-Difluor-1',3',5'-triazin-2'-ylamino)-8-naphthol-4,6-disulfonsäure | Ammoniak | rot |
| 48 | desgl. | desgl. | 2-Amino-äthansulfonsäure | rot |
| 49 | Anilin-4-β-thiosulfatoäthylsulfon | desgl. | Methylamin | rot |
| 50 | Anilin-4-β-sulfatoäthylsulfon | desgl. | Benzylamin-4-sulfonsäure | rot |
| 51 | 2-Methyl-anilin-5-β-sulfatoäthylsulfon | desgl. | 2-Amino-bernsteinsäure | rot |
| 52 | 3-Sulfatoäthylsulfonyl-anilin-6-carbonsäure | desgl. | Ammoniak | rot |
| 53 | 6-β-Sulfatoäthylsulfonyl-2-naphthyl-amin-1-sulfonsäure | desgl. | Anilin-3-sulfonsäure | rot |

Fortsetzung

| Beispiel | Diazokomponente | Kupplungskomponente | Amin H–Y | Farbton |
|---|---|---|---|---|
| 54 | 4-Amino-benzanilid-3'-β-sulfatoäthylsulfon | 1-(4',6'-Difluor-1',3',5'-triazin-2'-ylamino)-8-naphthol-4,6-disulfonsäure | Anilin-3-sulfonsäure | rot |
| 55 | 3-Amino-benzanilid-3'-β-sulfatoäthylsulfon-6'-carbonsäure | desgl. | Anilin-3-sulfonsäure | rot |
| 56 | Anilin-4-β-sulfatoäthylsulfon | desgl. | Anilin-3-sulfonsäure | orange |
| 57 | desgl. | desgl. | 2-Amino-äthan-sulfonsäure | orange |
| 58 | 4-Methoxy-anilin-3-β-sulfatoäthylsulfon | desgl. | Anilin-4-sulfonsäure | scharlach |
| 59 | 2-Methoxy-anilin-5-β-sulfatoäthylsulfon | desgl. | Anilin-3-sulfonsäure | desgl. |
| 60 | 2,5-Dimethoxy-anilin-4-β-sulfatoäthylsulfon | desgl. | desgl. | desgl. |
| 61 | 2,5-Dimethoxy-anilin-4-β-thiosulfatoäthylsulfon | 2-(4',6'-Difluortriazin-2'-ylamino)-8-naphthol-6-sulfonsäure | Anilin-4-sulfonsäure | rot |
| 62 | 4-Methoxy-anilin-2-sulfonsäure | 2-(N-Methyl-4',6'difluortriazin-2'-ylamino)-5-naphthol-7-sulfonsäure | 2-Aminoäthyl-1-(β-sulfatoäthylsulfon) | scharlach |
| 63 | 2-Methoxy-anilin-4-sulfonsäure | desgl. | 3-Aminopropyl-1-(β-chloräthylsulfon) | desgl. |
| 64 | 4-Methoxy-anilin-3-β-sulfatoäthylsulfon | desgl. | Anilin-3-sulfonsäure | desgl. |
| 65 | 2-Methoxy-anilin-5-β-thiosulfatoäthylsulfon | 2-(4',6'-Difluortriazin-2'-ylamino)-5-naphthol-7-sulfonsäure | Ammoniak | desgl. |
| 66 | 6-β-Sulfatoäthylsulfonyl-2-naphthylamin-1-sulfonsäure | desgl. | Anilin-3-sulfonsäure | desgl. |

Fortsetzung

| Beispiel | Diazokomponente | Kupplungskomponente | Amin H–Y | Farbton |
|---|---|---|---|---|
| 67 | 4-β-Sulfatoäthylsulfonylanilin | 1-[4'-(4",6"-Difluor-triazin-2"-ylamino)-2'-sulfophenyl]-3-carboxy-5-pyrazolon | Ammoniak | gelb |
| 68 | 2,5-Dimethoxy-4-β-sulfatoäthyl-sulfonyl-anilin | desgl. | Anilin-3-sulfonsäure | goldgelb |
| 69 | 2,5-Dimethyl-4-amino-azobenzol-4"-β-sulfatoäthylsulfon | desgl. | Anilin-4-sulfonsäure | orange |
| 70 a | 4'-β-Sulfatoäthylsulfonyl-2,5-dimethyl-4-amino-azobenzol-2'-sulfonsäure | 1-Naphthylamin-8-sulfonsäure | Anilin-3-sulfonsäure | orange |
| 70 b | Anilin-4-β-sulfatoäthylsulfon | 1-[Benzoyl-4'-(4",6"-Difluor-1",3",5"-triazin-2"-yl)-amino]-8-naphthol-3,6-disulfonsäure | Anilin-3-sulfonsäure | rot |
| 70 c | 6-β-Sulfatoäthylsulfonyl-2-naphthyl-amin-1-sulfonsäure | desgl. | desgl. | blaustichig-rot |
| 70 d | Anilin-3-β-sulfatoäthylsulfon | 2-(4',6'-Difluor-1',3',5'-triazin-2'-yl-amino)-5-hydroxy-naphthalin-1,5-disulfonsäure | desgl. | orange |

## Beispiel 71

Zunächst wird analog Beispiel 4 das primäre Kondensationsprodukt aus Anilin-3-sulfonsäure und Cyanurfluorid hergestellt, das dann mit einer äquimolaren Menge von 1,3-Diaminobenzol-4-sulfonsäure weiterkondensiert wird. Die so monoacylierte Diaminobenzolsulfonsäure wird dann wie üblich diazotiert und zu einer neutralen Lösung von 1-(4'-β-Sulfatoäthylsulfonyl)-phenyl-3-methyl-5-pyrazolon gegeben.

Nach Kupplung wird der gewonnene Farbstoff isoliert, der in Form der Säure folgende Konstitution besitzt:

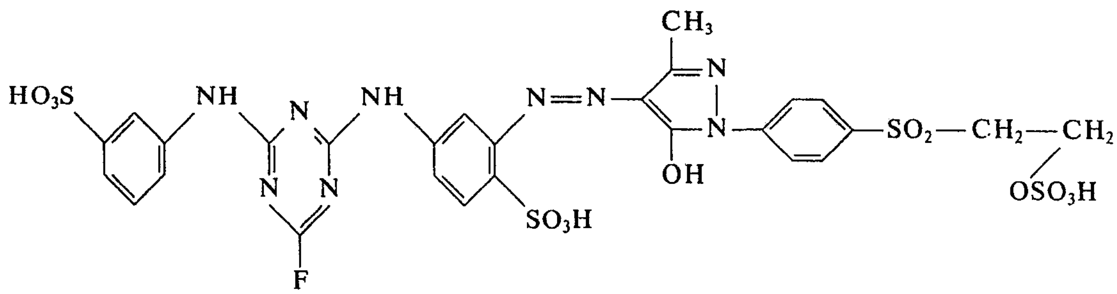

Der Farbstoff liefert in der Färbung und im Druck eine grünstichiggelbe Nuance auf Baumwolle und auf Wolle.

## Beispiele 72 bis 81c

Verfährt man in analoger Weise, wie in den Beispielen 1 bis 5 und 71 beschrieben, setzt jedoch in den nachfolgenden Tabellenbeispielen die dort angegebenen Diazokomponenten und Kupplungskomponenten in entsprechender Weise ein, so erhält man ebenfalls wertvolle, erfindungsgemäße Farbstoffe, die Baumwolle in den angegebenen Farbtönen mit hohen Echtheiten färben.

| Beispiel | Diazokomponente | Kupplungskomponente | Farbton |
|---|---|---|---|
| 72 | 3-[4'-Fluor-6'-(3"-sulfophenylamino)-triazin-2'-ylamino]-anilin-6-sulfonsäure | 1-(4'-β-Sulfatoäthylsulfonyl)-phenyl-3-carboxy-5-pyrazolon | gelb |
| 73 | desgl. | 2-(N-Methyl-äthionylamino)-8-naphthol-6-sulfonsäure | scharlach |
| 74 | desgl. | 2-(N-Methyl-äthionyl)-5-naphthol-7-sulfonsäure | orange |
| 75 | 2'-[4"-Fluor-6"-(3'''-sulfophenylamino)-triazin-2"yl-amino]-4'-aminoazobenzol-4,5'-disulfonsäure | 1-(4'-β-Sulfatoäthylsulfonyl)-phenyl-3-carboxy-5-pyrazolon | orange |
| 76 | 4-[4'-Fluor-6'-(3"-sulfophenylamino)-triazin-2'-yl-amino]-anilin-2,5-di-disulfonsäure | 1-(4'-β-Sulfatoäthylsulfonyl)-phenyl-3-methyl-5-pyrazolon | gelb |
| 77 | 3-(4'-Fluor-6'-β-sulfatoäthylamino-triazin-2'-ylamino)-anilin-6-sulfonsäure | 1-Amino-2-(2'-sulfo-4'-β-sulfatoäthylsulfonyl-phenylazo)-8-naphthol-3,6-disulfonsäure (Kupplung in 7-Stellung) | blau |
| 78 | 4-(4'-Fluor-6'-β-hydroxy-äthylamino-triazin-2'-yl-amino)-anilin-2,5-disulfonsäure | desgl. | grünst.-blau |
| 79 | desgl. | 1-Amino-2-(2'-brom-4'-β-sulfatoäthylsulfonyl-phenylazo)-8-naphthol-3,6-disulfonsäure (Kupplung in 7-Stellung) | grünst.-blau |
| 80 | 4-(N-Methyl-äthionylamino)-anilin | 1-Amino-2-[2'-sulfo-5'-{4"-fluor-6"-(3'''-sulfophenylamino)-triazin-2"ylamino}-phenylazo]-8-naphthol-3,6-disulfonsäure | blau |
| 81 a | 3-(4'-Fluor-6'-β-sulfatoäthylamino-triazin-2'-yl-amino)-anilin-4,6-disulfonsäure | 1-Amino-2-[4'-(N-Methyläthionyl-phenylamino)-phenylazo]-8-naphthol-3,6-disulfonsäure | blau |
| 81 b | 4-[4'-Fluor-6'-(3"-sulfophenylamino)-triazin-2'-yl-amino]-anilin-2,5-disulfonsäure | 1-(3'-β-Chloräthylsulfonyl)-benzoylamino-8-naphthol-3,6-disulfonsäure | rot |
| 81 c | 3-[4'-Fluor-6'-(3"-sulfophenylamino)-triazin-2'-yl-amino]-anilin-6-sulfonsäure | 1-Hydroxy-naphthalin-4-β-sulfatoäthylsulfon | orange |

Beispiel 82

66 Teile 2-Amino-4-β-sulfatoäthylsulfonyl-phenol werden in 200 Teile Eiswasser eingetragen und 40 Teile conc. Salzsäure zugefügt. Mit 40 Vol.-Teilen einer 5 n-Natriumnitritlösung wird diazotiert. Nach einer Nachrührzeit von 1 Stunde bei 0 bis 5°C wird wenig Amidosulfonsäure zugegeben, um überschüssige salpetrige Säure zu zerstören.

48 Teile 2-Amino-5-naphthol-7-sulfonsäure werden in 500 Teilen Wasser unter Zusatz von Natronlauge gelöst und dann mit der Diazoniumsalzlösung vereinigt. Man läßt 5 Stunden bei Raumtemperatur und bei einem pH-Wert von 6,5 rühren. Mit Natronlauge wird der pH-Wert auf 7,5 erhöht und die Lösung unter Verwendung von etwas Kieselgur geklärt. Dann werden 40 Vol.-Teile einer 5 n-Natriumnitritlösung zugefügt. Das Gemisch läßt man in 1 Stunde unter Rühren auf 500 Teile Eis laufen, das mit 60

Teilen conc. Salzsäure versetzt wurde. Es wird noch 3 Stunden bei 0 bis 5°C nachgerührt und dann etwas Amidosulfonsäure zugefügt.

Diese Diazoniumsalzlösung läßt man zu der Lösung laufen, die das sekundäre Kondensationsprodukt von je 0,2 Mol 1-Amino-8-naphthol-3,6-disulfonsäure, Cyanurfluorid und Anilin-3-sulfonsäure enthält und die wie unter Beispiel 1 angegeben hergestellt wurde. Man läßt bei pH 6,0 bis 6,5 nachrühren, bis die Kupplungsreaktion beendet ist. Dann wird auf 45°C erwärmt und eine Lösung von 50 Teilen krist. Kupfersulfat in 200 Teilen Wasser zugefügt und bis zur vollständigen Metallisierung nachgerührt. Anschließend wird auf 15°C abgekühlt, 15 Teile Oxalsäure zugefügt und 2 Stunden nachgerührt. Unter Zusatz von Kieselgur wird klärfiltriert. Die Farbstofflösung wird schließlich nach Zusatz von Phosphatpuffer zur Trockene eingedampft. Nach dem Mahlen erhält man ein fast schwarzes Farbstoffpulver, das das Natriumsalz der Verbindung der Formel

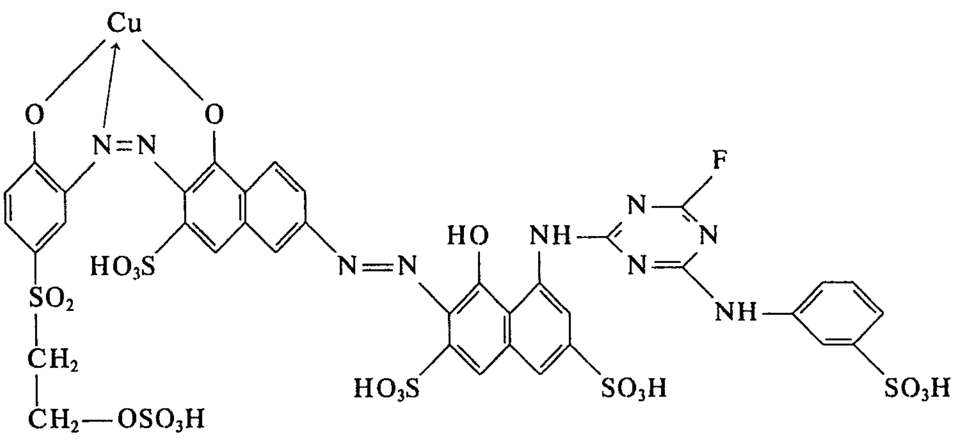

enthält. Der Farbstoff eignet sich hervorragend zum Färben von Baumwollfasern, wobei Färbungen und Drucke mit schwarzblauer Nuance erhalten werden, die sehr gute Naßechtheiten aufweisen.

Beispiel 83

Werden anstelle von 2-Amino-5-naphthol-7-sulfonsäure im Beispiel 82 gleiche Teile 2-Amino-8-naphthol-6-sulfonsäure eingesetzt, so erhält man analog einen Farbstoff, der die Verbindung der Formel

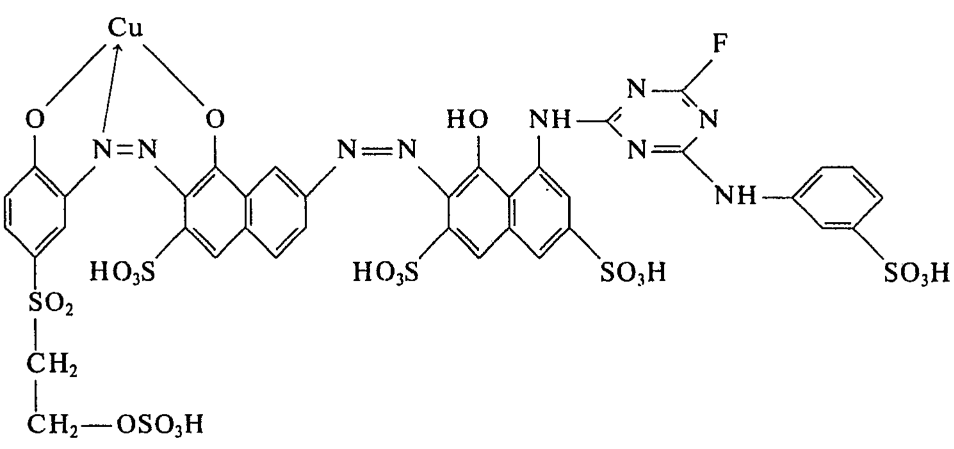

enthält, die auf Baumwolle ein echtes Dunkelblau färbt.

Beispiele 84 bis 92

Verfährt man in der in Beispiel 82 oder Beispiel 83 angegebenen Verfahrensweise oder in einer dem Fachmann üblichen analogen Weise hierzu und setzt die in den nachfolgenden Tabellenbeispielen angegebenen Diazokomponenten und Kupplungskomponenten ein und führt mit entsprechenden Metallsalzen die erhältlichen Azoverbindungen in die entsprechenden Metallkomplexfarbstoffe über, so erhält man ebenfalls sehr wertvolle erfindungsgemäße Farbstoffe mit guten Echtheiten und den auf Baumwollfasern erhältlichen Farbtönen.

| Bsp. | Diazokomponente | Kupplungskomponente | Metall | Farbton |
|---|---|---|---|---|
| 84 | 5-β-Sulfatoäthylsulfonyl-2-amino-phenol | 8-[4'-Fluor-6'-(3"-sulfophenylamino)-triazin-2'-yl-amino]-1-naphthol-3,6-disulfonsäure | Cu | violett |
| 85 | 8-β-Sulfatoäthylsulfonyl-6-sulfo-2-naphthylamin | desgl. | Cu (oxidativ) | blau |
| 86 | 2,5-Dimethoxy-anilin-4-β-sulfatoäthylsulfon | desgl. | Cu (entmethylierend) | blau |
| 87 | 4-β-Sulfatoäthylsulfonyl-2-amino-benzoesäure | 2-[4'-Fluor-6'-(4'''-nitro-2",2'''-disulfostilben-4"-yl-amino)-triazin-2'-ylamino]-5-naphthol-7-sulfonsäure | Cr | braun |
| 88 | 5-β-Sulfatoäthylsulfonyl-2-amino-phenol | 1-[4'-{4"-Fluor-6"-(3'''-sulfophenyl-amino)-triazin-2"-yl-amino}-2'-sulfo-phenyl]-3-carboxy-5-pyrazolon | Cu | braun |
| 89 | 4-β-Sulfatoäthylsulfonyl-2-amino-phenol-6-sulfonsäure | 1-[3'-(4"-Fluor-6"-amino-triazin-2"-ylamino)-6'-sulfo-phenyl]-3-carboxy-5-pyrazolon | Cu | gelb |
| 90 | 4-(2'-Sulfo-4'-β-sulfato-äthylsulfonyl-phenylazo)-1-naphthylamin-6-sulfonsäure | 2-[4'-Fluor-6'-(3"-sulfo-phenylamino-triazin-2'-yl-amino]-5-naphthol-7-sulfonsäure | Cu (oxidativ) | rotstichigblau |
| 91 | 4-Amino-3-hydroxy-6-methyl-2'-sulfo-4'-β-sulfato-äthylsulfonyl-azobenzol | desgl. | desgl. | desgl. |
| 92a | 4-β-Sulfatoäthylsulfonyl-1-naphthylamin | 2-[4'-Fluor-6'-(3"-sulfo-phenylamino)-triazin-2'-yl-amino]-5-naphthol-4,8-disulfonsäure | desgl. | desgl. |
| 92b | 4-β-Sulfatoäthylsulfonyl-2-amino-phenol | 2-[4'-Fluor-6'-(3"-sulfo-phenyl-amino)-triazin-2'-yl-amino-]5-naphthol-7-sulfonsäure | Cu | rubin |
| 92c | 4-β-Sulfatoäthylsulfonyl-2-amino-phenol-6-sulfonsäure | desgl. | Cu | rubin |
| 92d | 4-β-Sulfatoäthylsulfonyl-2-aminophenol | 3-[4'-Fluor-6'-(3"-sulfo-phenylamino)-triazin-2'-yl-amino]-5-naphthol-1,7-disulfonsäure | Cu | rubin |
| 92e | 4-β-Sulfatoäthylsulfonyl-2-amino-phenol-6-sulfonsäure | 1-[4'-Fluor-6'-(3"-sulfo-phenylamino)-triazin-2'-yl-amino]-8-naphthol-3,6-disulfonsäure | Cu | violett |

Fortsetzung

| Bsp. | Diazokomponente | Kupplungskomponente | Metall | Farbton |
|---|---|---|---|---|
| 92f | 5-β-Sulfatoäthylsulfonyl-2-amino-phenol | 1-[4'-Fluor-6'-(3"-sulfo-phenylamino)-triazin-2'-yl-amino]-8-naphthol-3,6-di-sulfonsäure | Cu | violett |
| 92g | desgl. | desgl. | Cr | rotst.-blau |
| 92h | desgl. | desgl. | Co | blaust.-violett |
| 92i | 4-β-Sulfatoäthylsulfonyl-2-amino-phenol-6-sulfon-säure | desgl. | Cr | rotst.-blau |
| 92j | 3-[4'-Fluor-6'-(3"-sulfo-phenyl-amino)-triazin-2'-yl-amino]-anilin-6-sulfonsäure | 1,2',3-Trihydroxy-3'-sulfo-azobenzol-5-β-sulfatoäthyl-sulfon | Cu | gelbst. braun |
| 92k | 2-Naphthylamin-6-β-sulfato-äthylsulfon | 1-[4'-Fluor-6'-(3"-sulfo-phenylamino)-triazin-2'-yl-amino]-8-naphthol-4,6-di-sulfonsäure | Cu | rotst. blau |
| 92l | 8-β-Sulfatoäthylsulfonyl-2-naphthylamin-6-sulfon-säure | 3-[4'-Fluor-6'-(3"-sulfo-phenylamino)-triazin-2'-yl-amino]-2-naphthol-5,7-di-sulfonsäure | Cu (oxidativ) | blau |

Beispiel 93

61 Teile Aminophenyl-naphthotriazol der Formel

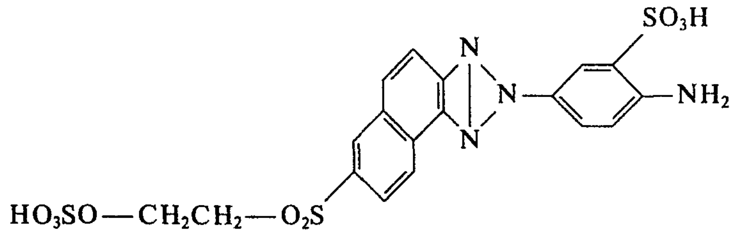

werden in 700 Teilen Wasser bei pH 7 bis 7,5 gelöst. Dann werden 20 Volumenteile einer 5n-Natriumnitritlösung zugefügt. Diese Lösung läßt man unter gutem Rühren in 20 Minuten in eine Mischung von 30 Volumenteilen konz. Salzsäure und 200 Teilen zerstoßenem Eis einlaufen. Nach einer Nachrührzeit von 1 Stunde wird überschüssige salpetrige Säure mit wenig Aminosulfonsäure zerstört. Dann wird eine wäßrige, neutrale Lösung von 0,1 Mol 1-{4'-[4"-Fluor-6"-(2''',5'''-disulfophenyl-amino)-s-triazin-2"-ylamino]-2'-sulfo-phenyl}-3-carboxy-5-pyrazolon in 400 Volumenteilen Wasser zugegeben. Der pH-Wert wird zum Kuppeln auf 5,0 bis 5,5 gehalten, indem Natriumhydrogencarbonat eingestreut wird. Man läßt bei 20°C und pH 6,5 noch 1 Stunde nachrühren und salzt dann den Farbstoff der Formel

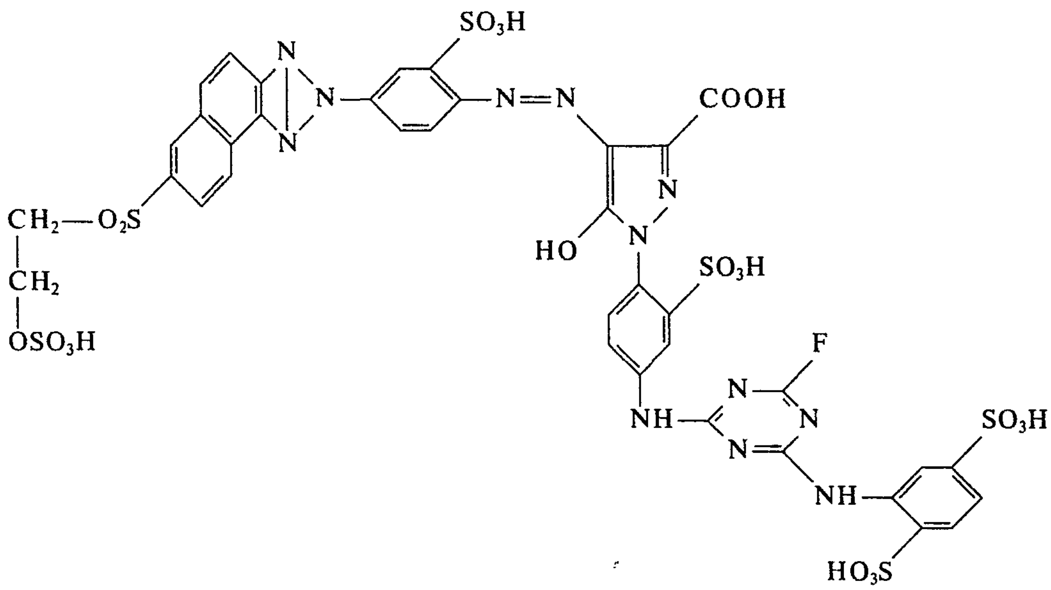

als Natriumsalz aus. Nach dem Isolieren, Waschen, Trocknen und Mahlen erhält man ein Farbstoffpulver, das Baumwolle in echten Gelbtönen färbt.

Beispiele 94a bis 96c

Verfährt man analog der in Beispiel 93 angegebenen Verfahrensweise, geht jedoch entsprechend von den in den nachfolgenden Tabellenbeispielen angegebenen Diazokomponenten, Kupplungskomponenten und Triazinverbindungen als Acylierungsmittel aus, so erhält man ebenfalls wertvolle erfindungsgemäße Farbstoffe, die Baumwolle in den angegebenen Farbtönen mit hoher Echtheit färben.

| Beispiel | Diazokomponente | Kupplungskomponente | Acylierungsmittel | Farbton |
|---|---|---|---|---|
| 94 a | 8-β-Sulfatoäthylsulfonyl-2-naphthylamin-6-sulfonsäure | 1,3-Diamino-benzol-6-sulfonsäure | 4,6-Difluor-2-(3'-sulfophenyl-amino)-triazin | rotstichig gelb |
| 94 b | desgl. | 3-Amino-phenylharnstoff | desgl. | gelb |
| 94 c | desgl. | 1-Amino-naphthalin-6-sulfonsäure | desgl. | rotstichig gelb |
| 94 d | Anilin-2,5-disulfonsäure | 1-Naphthylamin-6-β-hydroxyäthyl-sulfon | desgl. | gelb |
| 94 e | 2-Naphthylamin-4,6,8-trisulfonsäure | desgl. | desgl. | rotstichig gelb |
| 95 a | 1-Amino-4-(2',5'-disulfophenylazo)-naphthalin-6-β-sulfatoäthylsulfon | 1-Aminonaphthalin-8-sulfonsäure | 4,6-Difluor-2-(3'-sulfophenyl-amino)-triazin | rotstichig braun |
| 95 b | 1-Amino-4-(2',5',7'-trisulfo-1'-naphthyl-azo)-naphthalin-6-β-sulfatoäthyl-sulfon | desgl. | desgl. | violettst. braun |
| 96 a | 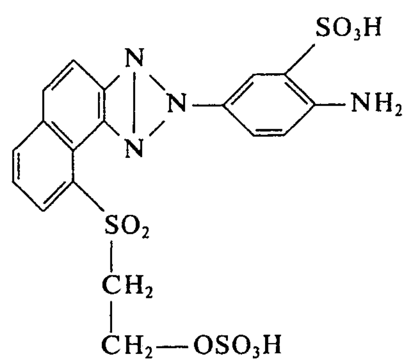 | 3-Methylanilin | 4,6-Difluor-2-(2',5'-disulfophenylamino)-triazin | gelb |

Fortsetzung

| Beispiel | Diazokomponente | Kupplungskomponente | Acylierungsmittel | Farbton |
|---|---|---|---|---|
| 96 b | 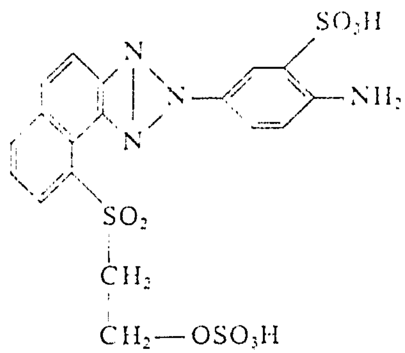 | 4-Amino-acetoacetylanilid-3-sulfonsäure | 4,6-Difluor-2-(3'-sulfophenyl-amino)-triazin | gelb |
| 96 c | 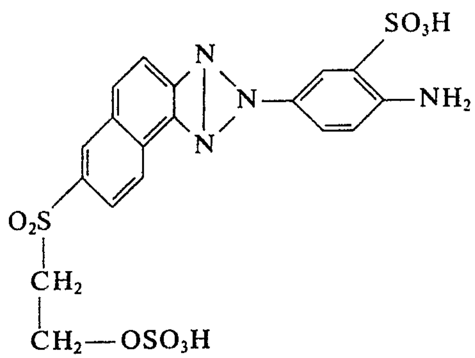 | 1-(β-Aminoäthyl)-2-hydroxy-4-methyl-5-cyan-6-pyridon | 4,6-Difluor-2-(2',5'-disulfophenylamino)-triazin | gelb |

Beispiel 97

52 Teile Amino-naphthotriazol der Formel

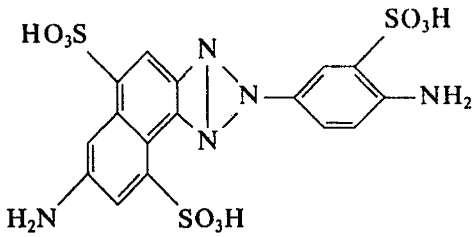

werden in 600 Teilen bei pH 6 gelöst, und es wird das primäre Kondensationsprodukt zugegeben, das durch Umsetzung von 19 Teilen Anilin-3-sulfonsäure und 14 Teilen Cyanurfluorid in Wasser bei 0° C bei pH 5,5 bis 6,0 hergestellt wurde. Man läßt noch 1 Stunde bei einem pH-Wert von 5,5 bis 6,0 und bei 15° bis 20° C nachrühren, bis der pH-Wert sich nicht mehr ändert. Dann wird mit Natriumcarbonat der pH-Wert 7 bis 7,3 eingestellt und 20 Volumenteile einer 5 n-Natriumnitritlösung zugefügt. Die Mischung läßt man dann unter Rühren in 30 Volumenteile konz. wäßrige Salzsäure einlaufen, der 400 Teile zerstoßenes Eis portionsweise zugegeben werden, so daß die Temperatur immer unterhalb von 5° C bleibt. Es wird noch 15 Minuten nachgerührt und dann überschüssige salpetrige Säure mit etwas Amidosulfonsäure zerstört und sogleich eine Lösung zugegeben, die durch Auflösen von 36,2 Teilen 1-(4'-β-Sulfatoäthylsulfonyl)-3-methyl-5-pyrazolon und 16 Teilen Natriumhydrogencarbonat in 200 Volumenteilen Wasser erhalten wurde. Man läßt noch 30 Minuten bei Raumtemperatur rühren und hält hierbei den pH-Wert auf 5,5 bis 6,0.

Dann gibt man 8 Teile Dinatriumphosphat hinzu. Der Farbstoff der Formel

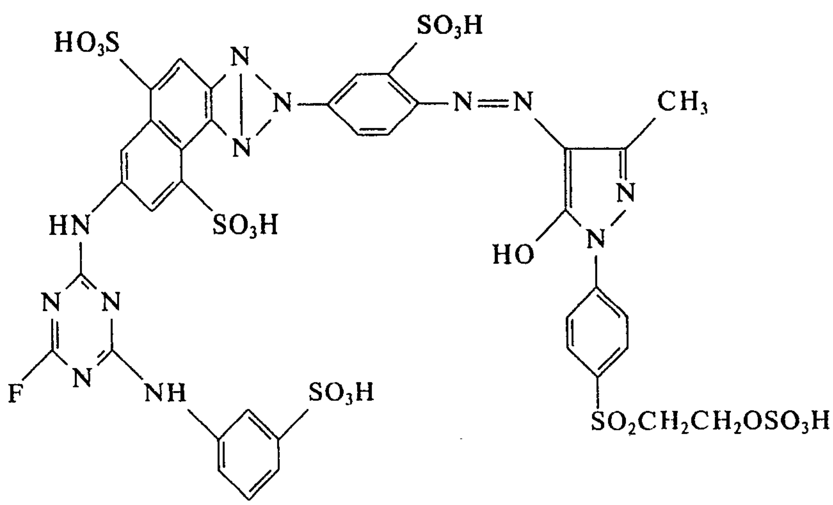

wird durch Aussalzen und Filtrieren isoliert, getrocknet und gemahlen. Er färbt Baumwolle in echten Gelbtönen.

Beispiele 98 bis 100

Verfährt man in analoger Weise, wie beispielsweise in den vorhergehenden Beispielen 93 und 97 beschrieben, und geht hierbei von den entsprechenden Diazokomponenten und Kupplungskomponenten und Acylierungsmitteln (Triazinderivaten oder Cyanurfluorid und dem Amin H–Y) aus, so erhält man ebenfalls wertvolle erfindungsgemäße Farbstoffe, die Baumwolle mit den nachfolgend angegebenen Farbtönen färben.

| Bsp. | | Farbton |
| --- | --- | --- |
| 98 | 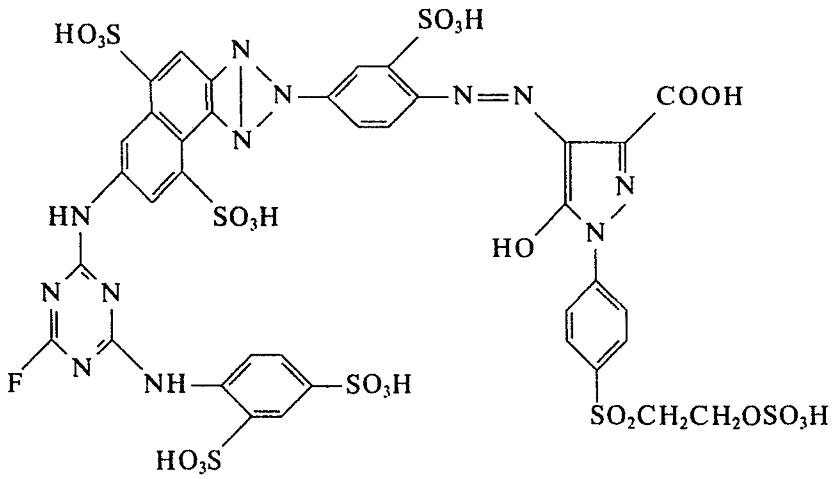 | gelb |
| 99 | 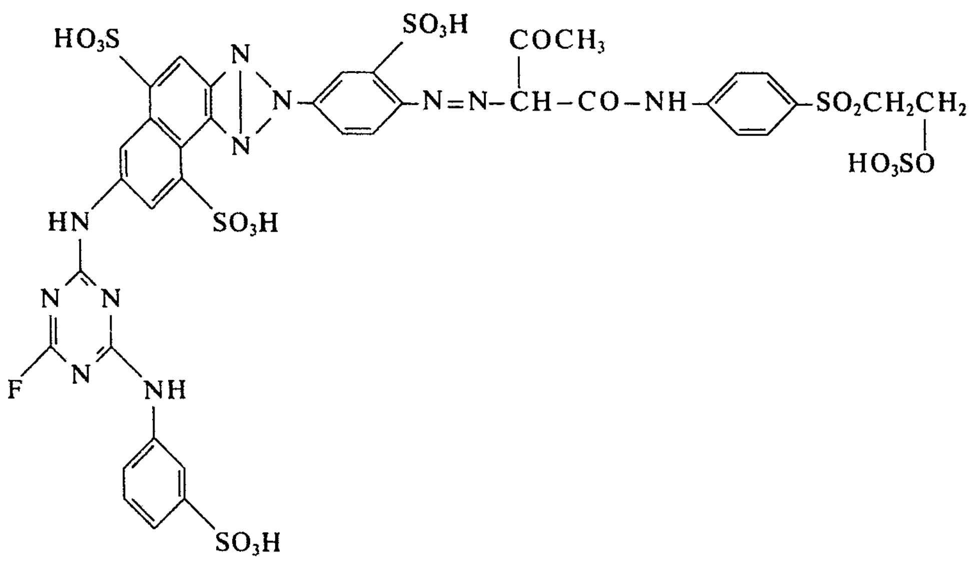 | gelb |
| 100 | 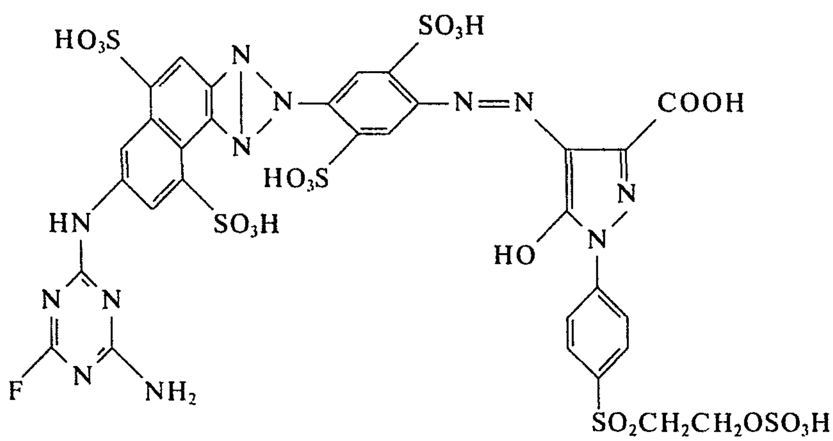 | gelb |

Beispiel 101

52 Teile des Farbstoffes 1-Amino-4-(3'-amino-4'-β-hydroxyäthylsulfonyl-phenylamino)-anthrachinon-2-sulfonsäure (hergestellt durch Kondensation von 1,3-Diaminobenzol-4-β-hydroxyäthylsulfon

und 1-Amino-4-brom-anthrachinon-2-sulfonsäure) werden als trockene, gemahlene Ware unter Rühren in 200 Teile Monohydrat eingetragen. Man läßt über Nacht bei Raumtemperatur rühren und gießt die Lösung dann unter Rühren auf eine Mischung von 500 Teilen Eis und 150 Teilen Kaliumchlorid.

Der ausgeschiedene Farbstoff wird dann abgesaugt, mit gesättigter Natriumchloridlösung gewaschen und in 300 Teilen Wasser unter Zusatz von Natriumbicarbonat neutral gelöst. Diese Farbstofflösung wird zu der Lösung des primären Kondensationsproduktes von je 0,1 Mol Cyanurfluorid und Anilin-3-sulfonsäure gegeben, die gemäß Beispiel 1 hergestellt wird. Man läßt 5 Stunden bei 15 bis 20° C rühren und hält hierbei den pH-Wert auf 6, indem Natriumbicarbonatpulver zugegeben wird. Dann wird noch 2 Stunden bei 30 bis 40° C nachgerührt. Mit Natriumchlorid wird der Farbstoff ausgesalzen, auf der Nutsche isoliert und unter Zusatz von 5 Teilen Phosphatpuffer bei 50 bis 60° C getrocknet. Mit den gewonnenen Reaktivfarbstoff der Formel

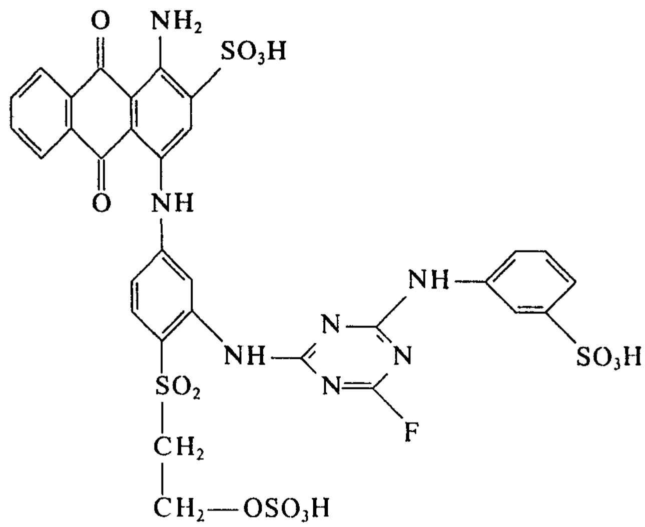

werden auf Wolle und Baumwolle Färbungen und Drucke von klarer blauer Nuance mit sehr guten Naßechtheiten erhalten.

## Beispiel 102

54 Teile des Farbstoffes 1-Amino-4-(2'-methyl-5'-amino-4'-β-hydroxyäthylsulfonyl-phenylamino)-anthrachinon-2-sulfonsäure (hergestellt durch Kondensation von 1-Amino-4-brom-anthrachinon-2-sulfonsäure und 2,4-Diaminotoluol-5-β-hydroxyäthylsulfon werden analog Beispiel 101 umgesetzt. Es wird der Farbstoff der Formel

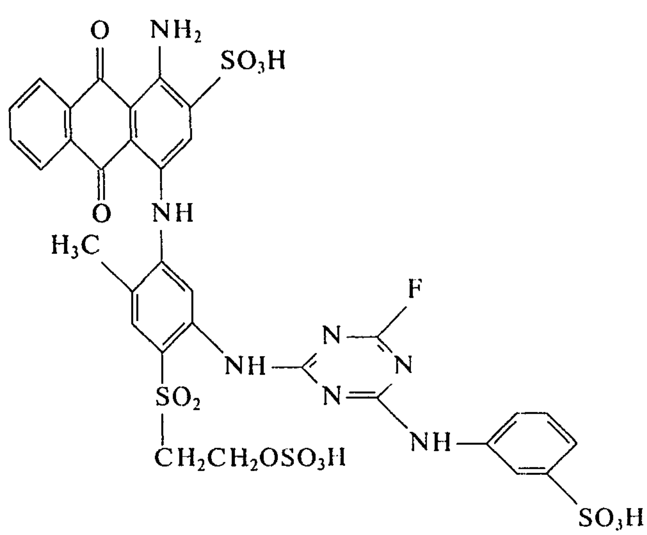

erhalten, der auf Wolle und Baumwolle ein echtes, klares Blau färbt.

Beispiel 103

127 Teile des Farbstoffes (3-Amino-4-sulfophenyl-aminosulfonyl)-(3-β-sulfatoäthylsulfonyl-phenylamino-sulfonyl)-kupferphthalocyanin-disulfonsäure (hergestellt durch Mischkondensation von Kupferphthalocyanin-(3)-tetrasulfochlorid mit 1,3-Diaminobenzol-4-sulfonsäure und 3-β-Sulfatoäthylsulfonyl-anilin in wäßriger Lösung in Gegenwart von Pyridin bei pH 6 bis 7,5) werden in Wasser unter Zusatz von Natriumbicarbonat neutral gelöst.

Zu dieser Farbstofflösung gibt man die Lösung, die folgendermaßen hergestellt wurde: 18 Teile Anilin-2-sulfonsäure werden unter Zusatz von Natriumbicarbonat in Wasser neutral gelöst. Man kühlt auf 0° C ab und tropft 14 Teile Cyanurfluorid zu, wobei der pH-Wert durch Einstreuen von Natriumbicarbonat auf pH 6 bis 6,5 gehalten wir.

Nachdem die Kondensation beendet ist, wird die Farbstofflösung zugegeben. Bei 20 bis 25° C wird 3 Stunden nachgerührt, wobei der pH-Wert durch Natriumbicarbonat auf pH 6 bis 6,5 gehalten wird. Der Farbstoff wird mit Natriumchlorid ausgesalzen, abfiltriert und getrocknet. Er enthält das Natriumsalz der Verbindung der Formel

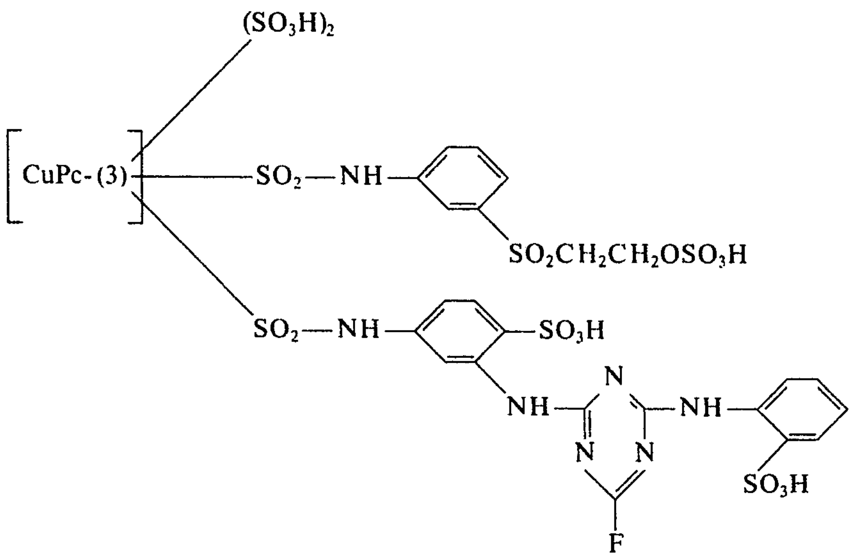

und färbt Cellulosefasermaterialien in türkisblauer Nuance.

Beispiel 104

136 Teile des Farbstoffes (3-Amino-4-β-sulfatoäthylsulfonyl-phenylamino-sulfonyl)-kupferphthalocyanin-trisulfonsäure werden neutral gelöst. Die Lösung wird auf 0° C abgekühlt. Dann werden in 15 Minuten unter Rühren 11 Volumenteile Cyanurfluorid zugetropft und ½ Stunde nachgerührt. Der pH-Wert wird hierbei durch Zugabe von Natriumbicarbonat auf 5,5 bis 6,0 gehalten. Dann wird eine Lösung zugegeben, die durch Auflösen von 8 Teilen Aminoessigsäure in 80 Teilen Wasser unter Zusatz von 6 Teilen Natriumcarbonat erhalten wurde. Man läßt bei einer Temperatur von 20 bis 25° C und einem pH-Wert von 6,5 bis 7,2 noch 2 Stunden nachrühren. Die Farbstofflösung wird dann unter Zusatz von Phosphatpuffer im Vakuumtrockenschrank bei 60° C zur Trockene eingedampft. Der Farbstoff enthält das Natriumsalz der Verbindung der Formel

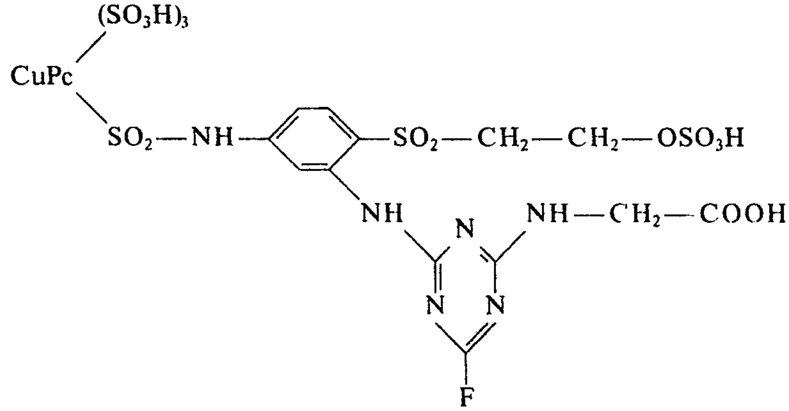

und färbt Baumwolle in echten, türkisblauen Farbtönen.

Die als Ausgangsprodukt verwendete Verbindung wird wie folgt hergestellt: Kupferphthalocyanintrisulfochlorid-monosulfonsäure wird mit 1,3-Diaminobenzol-4-β-hydroxyäthylsulfon in wäßriger Lösung bei pH 6 bis 7 kondensiert. Das Kondensationsprodukt wird durch Zugabe von Schwefelsäure abgeschieden, isoliert und getrocknet. Nach dem Mahlen wird die Substanz nach den üblichen Methoden in Schwefelsäure (Monohydrat) verestert. Die Mischung wird dann unter Rühren auf Eis gegeben, die ausgeschiedene Verbindung wird auf der Nutsche isoliert und unter Zusatz von Natriumbicarbonat neutral in Wasser gelöst.

Beispiele 105 a bis 105 i

Die nachfolgenden Tabellenbeispiele beschreiben weitere erfindungsgemäße Phthlocyaninverbindungen, die durch ihre Reaktionskomponenten charakterisiert sind. Sie können in erfindungsgemäßer Weise, wie im vorhergehenden Beschreibungsteil beschrieben, beispielsweise analog der in den vorhergehenden Beispielen 103 und 104 beschriebenen Verfahrensvarianten, aus den an und für sich bekannten, in den Tabellenbeispielen formelmäßig angegebenen Phthalocyaninkomponenten mit dem angegebenen Acylierungsmittel herstellt werden; mit dem Acylierungsmittel erfolgt Acylierung der primären Aminogruppen, die in den Formeln der Phthalocyaninkomponente mit einem * versehen sind. Diese erfindungsgemäßen Phthalocyaninverbindungen besitzen ebenfalls sehr gute faserreaktive Farbstoffeigenschaften und liefern insbesondere auf Cellulosefasermaterialien nach den in der Technik üblichen Applikations- und Fixiermethoden farbkräftige, tiefe Färbungen und Drucke in dem für das jeweilige Tabellenbeispiel angegebenen Farbton. Die in diesen Tabellenbeispielen durch ihre Komponenten angegebenen erfindungsgemäßen Phthalocyaninverbindungen sind in Form der freien Säure geschrieben; sie liegen bevorzugt in Form ihrer Alkalimetallsalze, insbesondere Natriumsalze, vor.

| Bsp. | Phthalocyaninkomponente | Acylierungs-mittel | Farbton |
|---|---|---|---|
| 105 a | 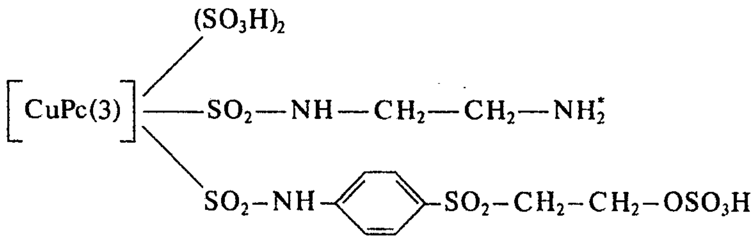 | 4,6-Difluor-2-(3'-sulfo-phenylamino)-triazin | türkis-blau |
| 105 b | 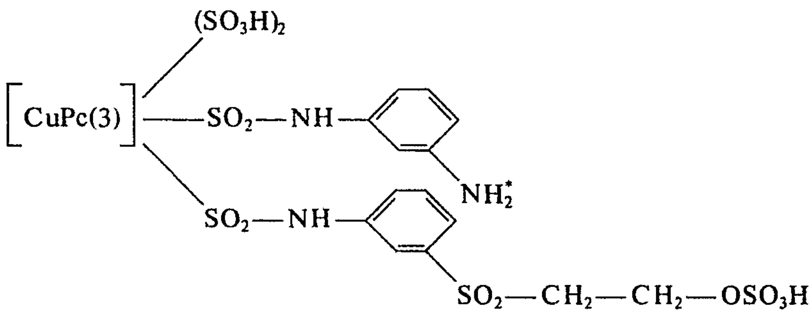 | desgl. | türkis-blau |
| 105 c | 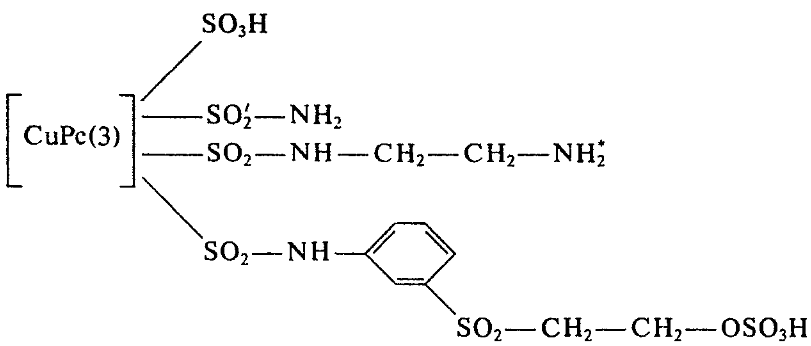 | desgl. | türkis-blau |
| 105 d | 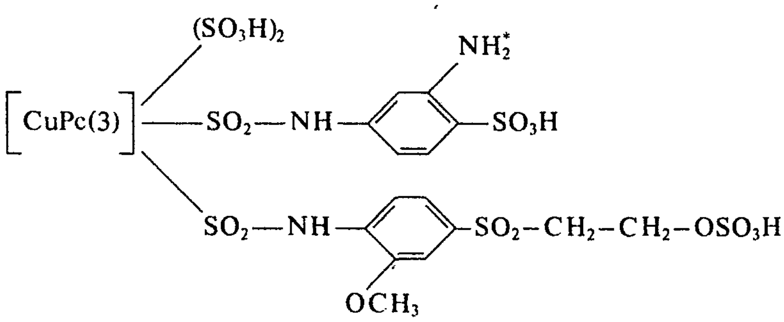 | desgl. | türkis-blau |
| 105 e | 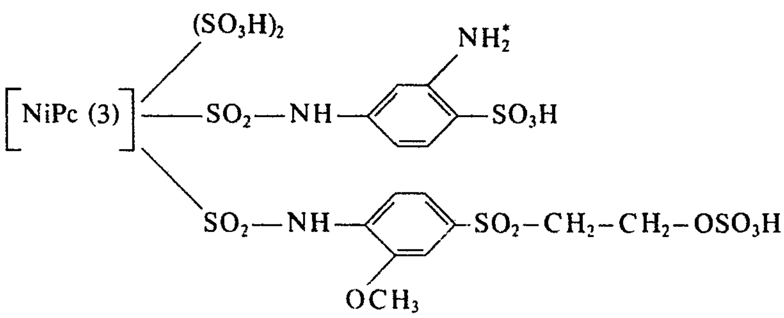 | 4,6-Difluor-2-(4'-carboxy-phenylamino)-triazin | blaust. grün |

Fortsetzung

| Bsp. | Phthalocyaninkomponente | Acylierungsmittel | Farbton |
|---|---|---|---|
| 105 f | 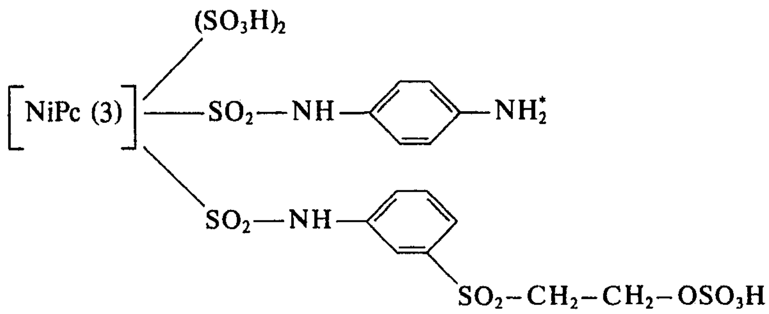 | 4,6-Difluor-2-(4'-sulfo-phenylamino)-triazin | blaust. grün |
| 105 g | 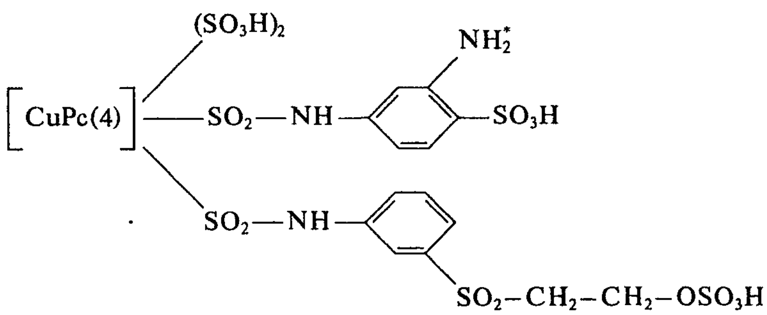 | desgl. | türkisblau |
| 105 h | 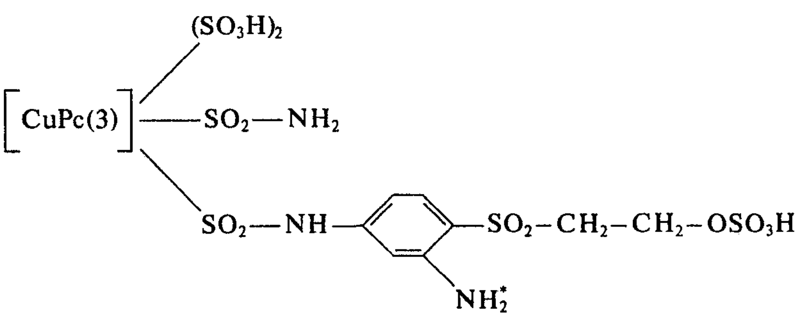 | desgl. | türkisblau |
| 105 i | 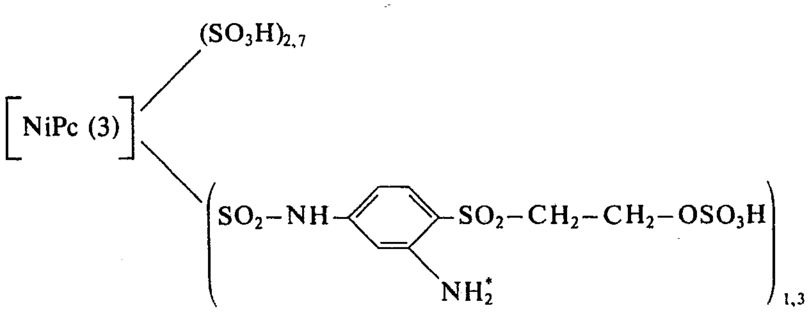 | 4,6-Difluor-2-(4'-sulfo-phenylamino)-triazin | blaust. grün |

### Beispiel 106

23,3 Teile 2-Carboxy-phenylhydrazin-4-sulfonsäure und 21,3 Teile 4-Acetamino-benzaldehyd-2-sulfonsäure werden in wäßriger Lösung kondensiert und das erhaltene Hydrazon in Gegenwart von Soda mit der Diazoniumverbindung von 22,7 Teilen 2-Amino-phenol-4-(β-hydroxyäthylsulfon) gekuppelt. Anschließend wird das gebildete Formazan mit einer wäßrigen Lösung versetzt, die 25 Teile krist. Kupfersulfat enthält. Man rührt noch 2 Stunden bei 25 bis 30° C nach und erhitzt dann den gebildeten Kupferkomplex unter Zusatz von 15 Teilen Soda 4 Stunden bei Rückflußtemperatur, um die Acetylaminogruppe vollständig zu verseifen. Der Farbstoff wird dann durch Zugabe von Natriumchlorid ausgeschieden, isoliert und getrocknet. Nach dem Mahlen wird das Farbstoffpulver unter Rühren in Pyridin

eingetragen.

Man erwärmt auf 80° C und gibt die gleiche Menge an Amidosulfonsäure wie an Farbstoffpulver hinzu. Die Temperatur steigt hierbei bis auf 105° C an. Bei 100 bis 105° C wird noch $^1/_2$ Stunde nachgerührt. Dann wird Pyridin durch Abdestillieren und Trocknen im Vakuum entfernt, der Rückstand in Wasser gelöst und mit dem primären Kondensationsprodukt umgesetzt, das aus Cyanurflorid und Anilin-3-sulfonsäure (gemäß Beispiel 1) hergestellt wurde. Bei einem pH-Wert 6 bis 6,5 wird 4 Stunden bei 15 bis 20° C gerührt. Die Lösung wird dann im Vakuum bei 60° C zur Trockene eingedampft. Nach dem Mahlen erhält man ein Farbstoffpulver, das das Natriumsalz der Verbindung der Formel

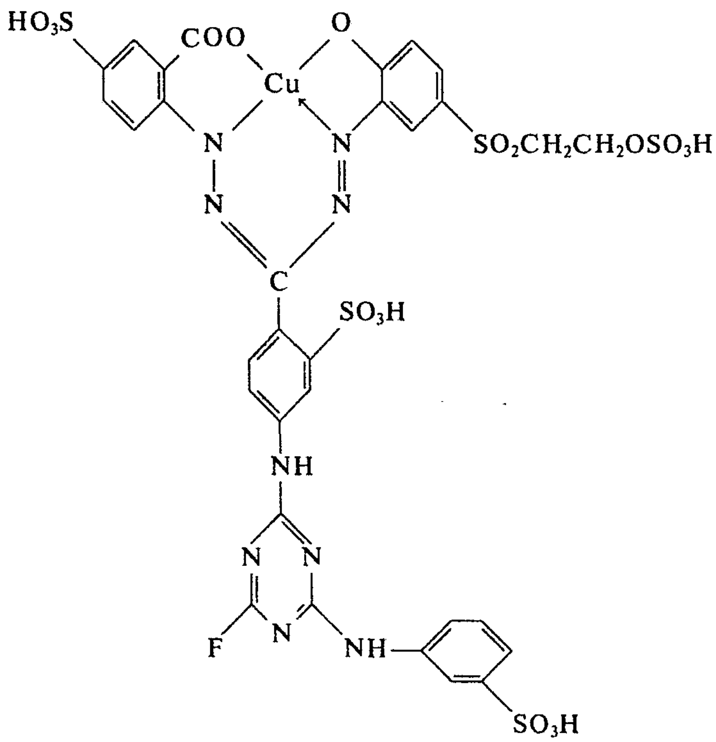

enthält und Baumwolle mit blauer Nuance färbt.

## Beispiel 106 a

Weitere blaue erfindungsgemäßen Farbstoffe erhält man, wenn im Beispiel 106 anstelle von Anilin-3-sulfonsäure äquivalente Mengen der nachfolgenden Amine zur Herstellung des primären Triazin-Kondensationsproduktes eingesetzt werden:

Anilin-4-sulfonsäure
Anilin-2-sulfonsäure
Anilin-2,5-disulfonsäure
1-Naphthylamin-4-sulfonsäure
2-Naphthylamin-4,6,8-trisulfonsäure
2-Naphthylamin-3,6,8-trisulfonsäure
2-Naphthylamin-6,8-disulfonsäure
2-Naphthylamin-4,8-disulfonsäure

## Beispiel 107

Es wird gemäß Beispiel 106 verfahren, jedoch anstelle des primären Triazin-Kondensationsproduktes werden 11 Volumenteile Cyanufluorid in die auf 0° C abgekühlte Farbstofflösung eingetropft. Hierbei wird durch Einstreuen von Natriumbicarbonat dafür gesorgt, daß der pH-Wert nicht unter 6,0 fällt. Es wird $^1/_2$ Stunde nachgerührt, und dann 7 Teile Ammoniumchlorid, gelöst in Wasser, zugefügt. Bei einem pH-Wert von 6,8 bis 7,3 wird 2 Stunden bei Raumtemperatur nachgerührt. Der Farbstoff der Formel

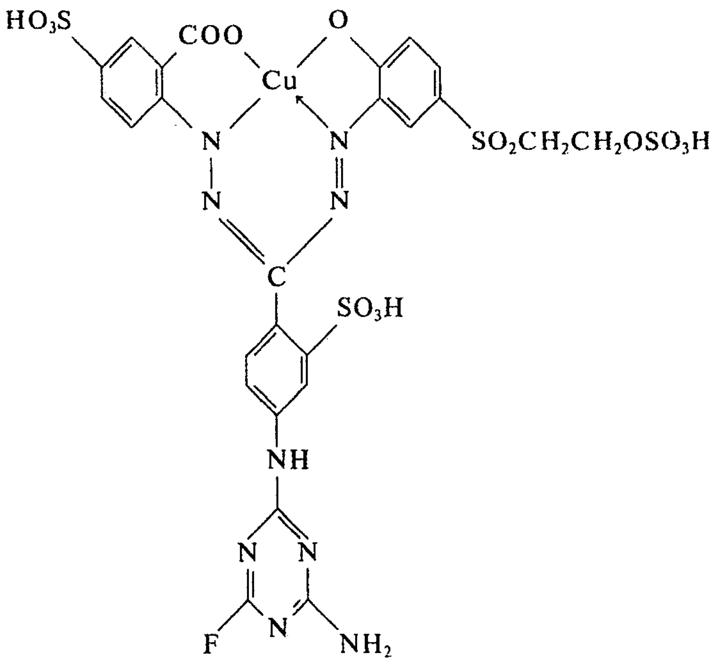

wird mit Natriumchlorid ausgeschieden. Auf Baumwolle werden hiermit Färbungen und Drucke von rotstichig blauer Nuance erhalten.

## Beispiel 108

Weitere erfindungsgemäße blaue Farbstoffe erhält man, wenn man in Beispiel 107 anstelle von Ammoniumchlorid folgende Amine oder deren Salze in äquimolarer Menge einsetzt:

Aminoessigsäure
Taurin
Methyltaurin
Aminoäthanol
Diäthanolamin
Cyclohexylamin
Anilin

## Beispiele 109 bis 117

Weitere erfindungsgemäßen blaue Reaktivfarbstoffe werden erhalten, wenn man analog Beispiel 106 und 107 die Kupferkomplexe der folgenden Aminoformazan-β-hydroxyäthylsulfone zur Veresterung einsetzt und sie dann für die nachfolgende Kondensation zum Fluortriazinylfarbstoff umsetzt, wobei äquimolare Mengen Aminofarbstoff, Cyanurfluorid und Amin eingesetzt werden:

| Beispiel | |
|---|---|
| 109 | N-(2-Hydroxy-5-sulfo-3-amino-phenyl)-N'-(2'-carboxy-5'-β-hydroxyäthylsulfonyl-phenyl)-ms-phenyl-formazan |
| 110 | N-(2-Hydroxy-5-sulfo-3-amino-phenyl)-N'-(2'-carboxy-5'-β-hydroxäthylsulfonyl-phenyl)-ms-(3''-sulfophenyl)-formazan |
| 111 | N-(2-Hydroxy-3-sulfo-phenyl-5-β-hydroxyäthylsulfon)-N'-(2'-carboxy-4'-amino-phenyl)-ms-(phenyl)-formazan |
| 112 | N-(2-Hydroxy-phenyl-4-β-hydroxyäthylsulfon)-N'-(2'-carboxy-4'-aminophenyl)-ms-(3''-sulfophenyl)-formazan |
| 113 | N-(2-Hydroxy-phenyl-4-β-hydroxyäthylsulfon)-N'-(2'-carboxy-5'-sulfophenyl)-ms-(3''-amino-phenyl)-formazan |
| 114 | N-(2-Carboxy-5'-β-hydroxyäthylsulfonyl-phenyl)-N'-(2'-hydroxy-3',5'-disulfophenyl)-ms-(3''-amino-phenyl)-formazan |
| 115 | N-(2-Hydroxy-phenyl-5-β-hydroxyäthylsulfon)-N'-(2'-carboxy-4'-amino-phenyl)-ms-(2'',4''-disulfo-phenyl)-formazan |

116 N-(2-Hydroxy-phenyl-5-β-hydroxyäthylsulfon)-N'-(2'-hydroxy-5'-sulfophenyl)-ms-(4"-amino-phenyl)-formazan

117 N-(2-Hydroxy-3-sulfophenyl-5-β-hydroxyäthylsulfon)-N'-(2'-carboxy-4'-aminophenyl)-ms-(2"-chlor-5"-sulfophenyl)-formazan

Beispiele 118 bis 123

Man verfährt beispielsweise analog der im Beispiel 106 angegebenen Verfahrensweise, geht jedoch hierbei von dem acylierbaren Aminoformazan entsprechend der allgemeinen Formel (2) aus und setzt es mit einer Difluortriazinverbindung entsprechend der allgemeinen Formel (4) um, das aus dem Cyanurfluorid und dem Amin der Formel (5) erhalten wurde, so erhält man ebenfalls wertvolle erfindungsgemäße Farbstoffe, die Baumwolle in den angegebenen Farbtönen mit hohen Echtheiten färben.

| Beispiel | Aminoverbindung (2) | Amin (5) | Farbton |
|---|---|---|---|
| 118 | N-(2-Hydroxy-5-sulfo-3-aminophenyl)-N'-(2'-carboxy-5'-β-sulfatoäthylsulfonyl-phenyl)-ms-phenyl-formazan | Anilin-3-sulfonsäure | blau |
| 119 | N-(2-Hydroxy-5-sulfo-3-amino-phenyl)-N'-(2'-carboxy-5'-β-sulfatoäthylsulfonyl-phenyl)-ms-phenyl-formazan | β-Amino-äthan-sulfonsäure | blau |
| 120 | N-(2-Hydroxy-phenyl-5-β-sulfatoäthylsulfon)-N'-(2'-carboxy-4'-amino-phenyl)-ms-(2",4"-disulfophenyl)-formazan | Anilin-2,5-disulfonsäure | blau |
| 121 | N-(2-Hydroxy-5-β-sulfatoäthyl-sulfonyl-phenyl)-N'-(2'-carboxy-4'-sulfonylphenyl)-ms-(4"-amino-phenyl)-formazan | Anilin-4-sulfonsäure | grünst.-blau |
| 122 | N-(2-Hydroxy-phenyl-4-β-sulfatoäthyl-sulfon)-N-(2'-hydroxy-5'-sulfophenyl)-ms-(4"-amino-phenyl)-formazan | 2-Naphthylamin-4,8-disulfonsäure | grünst.-blau |
| 123 | N-(2-Hydroxy-3-amino-5-sulfo-phenyl)-N-(2'-carboxy-5'-β-sulfatoäthylsulfonyl-phenyl)-ms-(2"-chlor-5"-sulfophenyl)-formazan | Anilin-3-sulfonsäure | blau |

Beispiel 124

Ein Gemisch aus einer neutralen Lösung von 28,1 Teilen Anilin-4-β-sulfatoäthylsulfon in 150 Teilen Wasser und 20,3 Volumenteilen einer wäßrigen 5 n-Natriumnitritlösung wird bei 0 bis 5°C unter Rühren in ein Gemisch aus 26 Volumenteilen einer 31%igen wäßrigen Salzsäure und 150 Teilen Eis einlaufen lassen. Die entstehende Suspension wird noch eine Stunde gerührt und überschüssige salpetrige Säure mit Amidosulfonsäure zerstört. Sodann wird zur Kupplungsreaktion eine Lösung von 31,9 Teilen 1-Amino-8-naphthol-3,6-disulfonsäure in 500 Teilen Wasser, die mit Salzsäure auf einen pH-Wert von 4 gestellt ist, versetzt. Der pH-Wert der Kupplung wird mit Natriumacetat bei 3 bis 3,5 gehalten. Nachdem die erste Kupplungsreaktion beendet ist, wird die gebildete Monoazoverbindung mit einer Diazoniumsalzlösung in der zweiten Kupplungsreaktion umgesetzt. Diese Diazoniumsalzlösung wird wie folgt hergestellt:

17,3 Teile Anilin-3-sulfonsäure werden in 100 Teile Wasser eingetragen und mit Natriumcarbonat neutralisiert. Bei 0°C läßt man 17,3 Teile Cyanurfluorid zutropfen, wobei der pH durch Einstreuen von Natriumbicarbonat auf einem Wert von 6,5 gehalten wird. Nach etwa 30 Minuten gibt man eine neutrale Lösung von 18,8 Teilen 1,4-Diaminobenzol-2-sulfonsäure in 200 Teilen Wasser hinzu und läßt die zweite Kondensationsreaktion bei einem pH-Wert von 5,5 bis 6,5 und einer Temperatur von 15 bis 20°C unter mehrstündigem Rühren ablaufen. Nach beendeter Kondensation wird die Lösung geklärt, mit 35 Volumenteilen einer 31%igen wäßrigen Salzsäure angesäuert, mit 500 Teilen Eis versetzt und durch langsame Zugabe von 20 Volumenteilen einer wäßrigen 5 n-Natriumnitritlösung diazotiert. Wie üblich, wird danach überschüssige salpetrige Säure mit etwas Amidosulfonsäure zerstört. Die Diazoniumsalzsuspension wird sodann mit 17,8 Teilen Natriumbicarbonat auf einen pH-Wert von 5,5 bis 6,5

eingestellt und, wie oben erwähnt, mit der Lösung der Monoazoverbindung bei einem pH-Wert von 5,5 bis 6,5 gekuppelt. Die gebildete Disazoverbindung wird mit Natriumchlorid ausgesalzen, abgesaugt und getrocknet.

Man erhält das Alkalimetallsalz der Verbindung der Formel

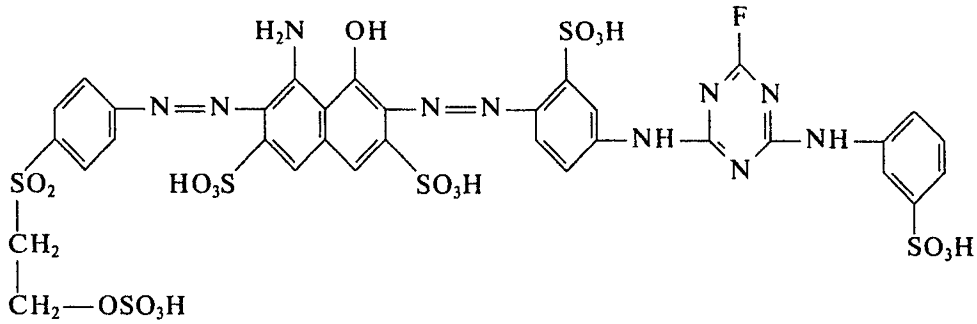

in Form eines schwarzen, elektrolythaltigen Pulvers. Diese Verbindung zeigt sehr gute Farbstoffeigenschaften und liefert nach den in der Technik üblichen Applikations- und Fixierverfahren auf Cellulosefasermaterialien schwarze Färbungen und Drucke mit sehr guten Gebrauchs- und Fabrikationsechtheiten. Auf Wolle werden aus schwach saurem Bade ebenfalls schwarze Färbungen erhalten, deren Naßechtheiten nach ammoniakalischer Nachbehandlung ausgezeichnet sind.

## Beispiele 125 bis 130

Man verfährt in erfindungsgemäßer Weise zur Herstellung der Verbindungen der allgemeinen Formel (1) analog dem Beispiel 124 durch Umsetzung einer Diazokomponente mit einer β-Sulfatoäthylsulfonylgruppe mit einer 1-Amino-8-naphthol-3,6- oder -4,6-disulfonsäure mit anschließender Kupplung einer zweiten Diazokomponente aus einem Kondensationsprodukt einer Diaminobenzol-Verbindung mit Cyanurfluorid und einer Aminoverbindung. Setzt man hierfür die in den nachfolgenden Tabellenbeispielen in Verbindung mit der nachstehenden allgemeinen Formel (A)

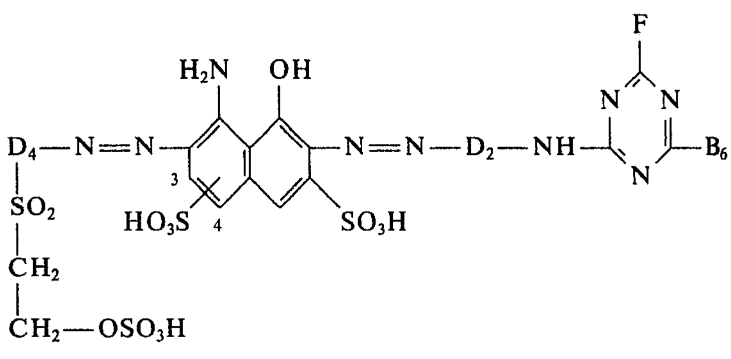

(A)

ersichtlichen Ausgangskomponenten ein, so erhält man erfindungsgemäße Disazoverbindungen entsprechend der Formel (A), die sehr wertvolle faserreaktive Farbstoffeigenschaften besitzen und Cellulosefasermaterialien wie auch Wolle in echten Tönen mit den angegebenen Nuancen färben.

| Bsp. | $D_4$ | $D_2$ | $B_6$ | Stellg. von $HO_3S—$ | Farbton auf Baumwolle |
|---|---|---|---|---|---|
| 125 | 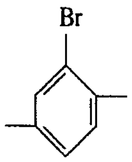 | 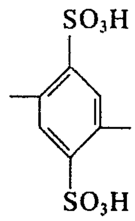 | 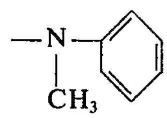 | 3 | schwarz |
| 126 | 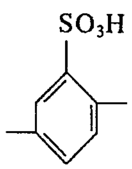 | 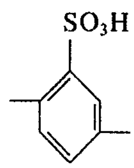 | 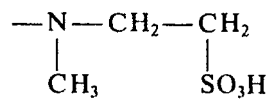 | 3 | schwarz |
| 127 | 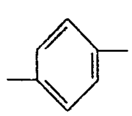 | 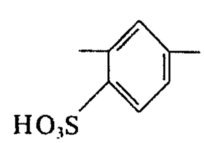 | 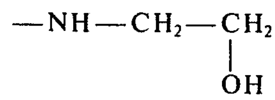 | 3 | marineblau |
| 128 | 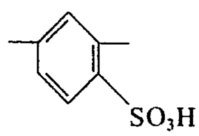 | 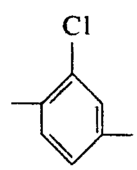 | 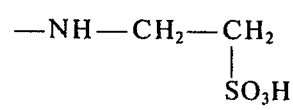 | 3 | schwarz |
| 129 | 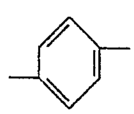 | 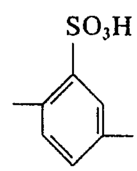 | $—N(C_2H_5)_2$ | 4 | marineblau |
| 130 | 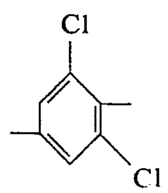 | 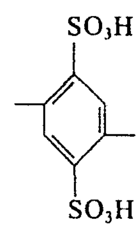 | $—NH_2$ | 3 | grünstichig schwarz |

Beispiel 131

Zu einer Lösung von 17,3 Teilen Anilin-3-sulfonsäure in 100 Teilen Wasser und 50 Volumenteilen einer wäßrigen 2 n-Natronlauge werden bei 0°C innerhalb von 12 bis 17 Minuten langsam 13,7 Teile Cyanurfluorid gegeben, wobei ebenfalls durch entsprechend langsame Zugabe von wäßriger Natronlauge der pH bei einem Wert von 6 gehalten wird. Nach beendeter Kondensation wird eine neutrale Lösung von 18,8 Teilen 1,4-Diaminobenzol-2-sulfonsäure in 200 Teilen Wasser zugegeben; diese zweite Kondensationsreaktion erfolgt bei einem pH-Wert von 6 bis 7 unter mehrstündigem Rühren bei 19 bis 21°C, wobei der pH mittels Natronlauge gehalten wird. Nach beendeter Kondensation wird die Lösung mit 35 Volumenteilen einer wäßrigen 31%igen Salzsäure und 500 Teilen Eis versetzt und durch langsame Zugabe von 20 Volumenteilen einer wäßrigen 5 n-Natriumnitritlösung bei einer Temperatur von 0 bis 5°C diazotiert. Nach Zerstörung überschüssiger salpetriger Säure wird die Diazoniumsalzlösung mit Natriumacetat auf einen pH-Wert von 2,5 bis 3,0 gestellt und in der Kälte in eine Lösung von 31,9 Teilen 1-Amino-8-naphthol-3,6-disulfonsäure in 1500 Teilen Wasser langsam (tropfenweise) gegeben; der pH-Wert wird hierbei mittels Natriumacetat bei 2,5 bis 3,0 gehalten. Nach beendeter

Kupplung wird die gebildete Monoazoverbindung mit Kaliumchlorid ausgefällt und abgesaugt. Sie wird ohne vorheriges Trocknen in 2000 Teilen gelöst. Diese Lösung der Monoazoverbindung wird sodann bei einem pH-Wert von 5,5 bis 6,5 mit einer Diazoniumsalzsuspension aus 28,1 Teilen Anilin-4-β-sulfatoäthylsulfon versetzt. Die Kupplungsreaktion wird bei diesem pH-Wert unter mehrstündigem Rühren zu Ende geführt, die gebildete Disazoverbindung mit Natriumchlorid ausgefällt, abgesaugt und getrocknet.

Man erhält ein schwarzes, elektrolythaltiges Pulver, das das Alkalimetallsalz, vorwiegend Natriumsalz, der Verbindung der Formel

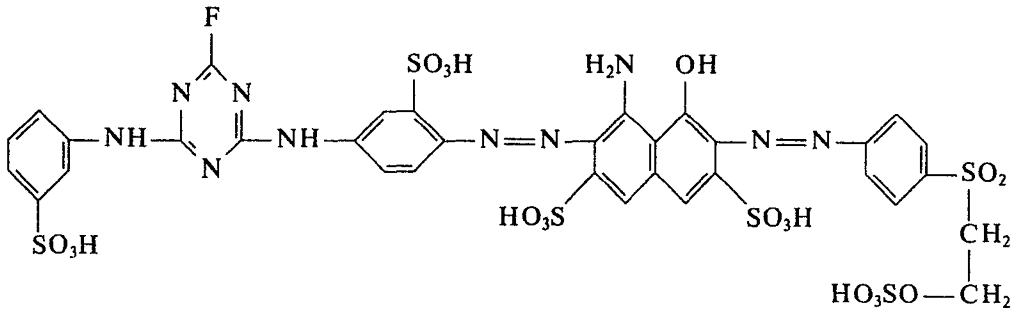

in einem Anteil von etwa 50% enthält. Diese Disazoverbindung besitzt sehr gute faserreaktive Farbstoffeigenschaften und färbt nach den bekannten und üblichen Methoden Cellulosefasermaterialien, wie Baumwolle, in tiefen schwarzen Tönen von sehr guten Gebrauchs- und Fabrikationsechtheiten, wie insbesondere sehr gute Wasch-, Wasser-, Schweiß-, Alkali- und Säureechtheit.

## Beispiele 132 bis 142

Man verfährt in analoger Weise wie im vorherigen Beispiel beschrieben zur Herstellung von erfindungsgemäßen Disazoverbindungen entsprechend der allgemeinen Formel (B)

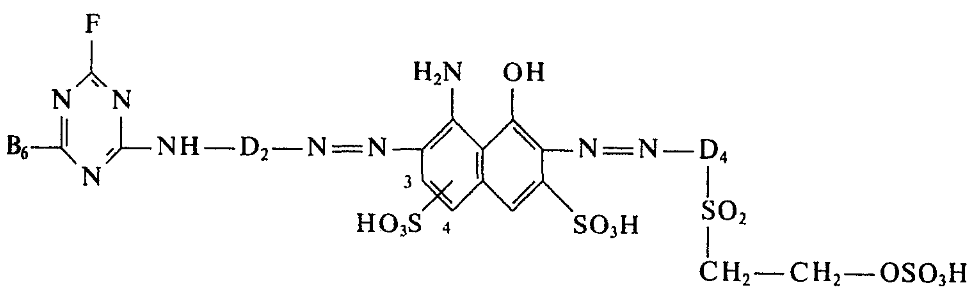

(B)

die in den nachfolgenden Tabellenbeispielen durch die angegebenen Formelreste charakterisiert sind, indem man entsprechend zuerst eine Diazokomponente herstellt, die das Reaktionsprodukt eines Amins, Cyanurfluorid und einer Diaminobenzol-Verbindung ist, diese sodann diazotiert und auf 1-Amino-8-naphthol-3,6- oder -4,6-disulfonsäure kuppelt und darauf die hieraus gebildete Monoazoverbindung mit einem Anilinderivat mit einer β-Sulfatoäthylsulfonylgruppe als zweite Diazokomponente umsetzt. Diese Reaktionskomponenten sind aus den Tabellenbeispielen in Verbindung mit der allgemeinen Formel (B) ersichtlich. Die in diesen Beispielen 132 bis 142 beschriebenen erfindungsgemäßen Disazoverbindungen zeigen ebenfalls sehr gute faserreaktive Farbstoffeigenschaften und liefern beispielsweise auf Baumwollmaterialien echte Färbungen mit den in den Beispielen angegebenen Nuancen.

| Bsp. | $B_6$ | $D_2$ | $D_4$ | Stellg. von $HO_3S—$ | Farbton auf Baumwolle |
|---|---|---|---|---|---|
| 132 | 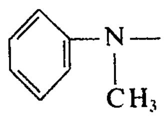 | 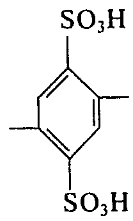 | 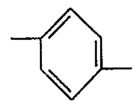 | 3 | grünstichig marineblau |
| 133 | 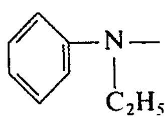 | desgl. | 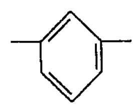 | 3 | marineblau |
| 134 | 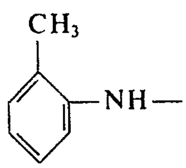 | 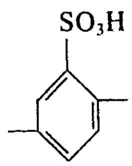 | 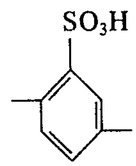 | 3 | schwarz |
| 135 | 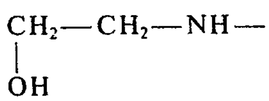 | desgl. | 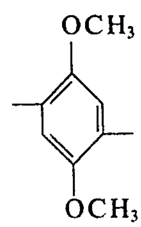 | 3 | grünstichig schwarz |
| 136 | 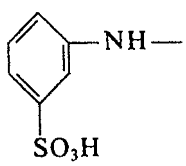 | 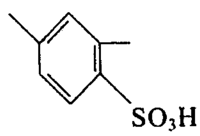 | 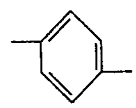 | 3 | schwarz |
| 137 | desgl. | desgl. | 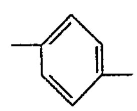 | 4 | schwarz |
| 138 | desgl. | desgl. | 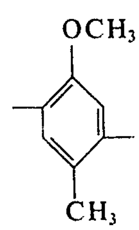 | 3 | schwarz |
| 139 | $H_2N—$ | 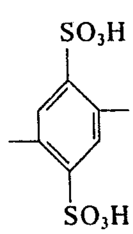 | 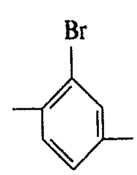 | 3 | grünstichig schwarz |

Fortsetzung

| Bsp. | $B_6$ | $D_2$ | $D_4$ | Stellg. von $HO_3S-$ | Farbton auf Baumwolle |
|---|---|---|---|---|---|
| 140 | $(C_2H_5)_2N-$ | 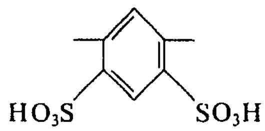 | 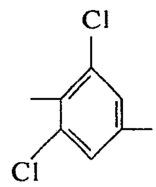 | 3 | schwarz |
| 141 | $CH_2-CH_2-N-$<br>$SO_3H$ $CH_3$ | 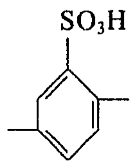 | 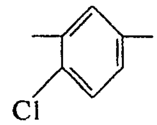 | 3 | schwarz |
| 142 | $CH_2-CH_2-NH-$<br>$COOH$ | desgl. | 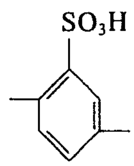 | 3 | schwarz |

**Patentansprüche**

1. Sulfogruppenhaltige Verbindungen der allgemeinen Formel (1)

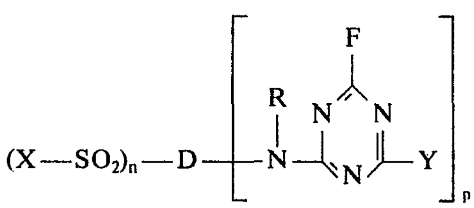

(1)

worin bedeuten:

D ist der Rest eines organischen Farbstoffmoleküls;
X ist die Vinyl-, die β-Thiosulfatoäthyl-, die β-Sulfatoäthyl- oder die β-Chloräthyl-Gruppe;
R ist ein Wasserstoffatom oder eine Alkylgruppe von 1 bis 4 C-Atomen;
n ist die Zahl 1 oder 2;
p ist die Zahl 1 oder 2;
Y ist ein Rest der Formel $-O-R^1$ oder der Formel $-S-R^1$ oder der Formel

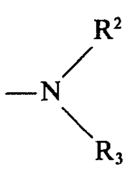

in welchen

$R^1$ für einen gegebenenfalls substituierten Alkylrest von 1 bis 4 C-Atomen oder für einen aromatischen carbocyclischen oder aromatischen heterocyclischen Rest steht,
$R^2$ ein Wasserstoffatom oder ein gegebenenfalls substituierter Alkyl- oder Alkenylrest von 1 bis 4 bzw. 2 bis 4 C-Atomen oder ein cycloaliphatischer Rest ist und
$R^3$ ein Wasserstoffatom oder ein gegebenenfalls substituierter Alkyl- oder Alkenylrest von 1 bis 4

C-Atomen bzw. 2 bis 4 C-Atomen oder ein gegebenenfalls substituierter aromatischer carbocyclischer Rest oder eine Alkoxygruppe von 1 bis 4 C-Atomen oder die Cyangruppe oder die Gruppe der Formel $-CS-NH_2$ oder eine gegebenenfalls substituierte Aminogruppe bedeutet oder

$R^2$ und $R^3$ zusammen mit dem Stickstoffatom einen Ring bilden, der Alkylen von 1 bis 4 C-Atomen und gegebenenfalls weitere Heteroatome enthält.

2. Verbindungen nach Anspruch 1, dadurch gekennzeichnet, daß D einen oder mehrere Sulfongruppen enthält.

3. Verbindungen nach Anspruch 1, dadurch gekennzeichnet, daß D der Rest eines sulfogruppenhaltigen, metallfreien oder metallhaltigen Mono- oder Disazofarbstoffes ist.

4. Verbindungen nach Anspruch 1 und 3, dadurch gekennzeichnet, daß D ein Rest der Formel (6), (7), (8 a), (8 b) oder (9)

$$-[A-N=N-K_1]- \quad (6)$$

$$-[K_2-N=N-A_x]- \quad (7)$$

$$-[A-N=N-T-N=N-K_1]- \quad (8a)$$

$$-[A-N=N-K-N=N-A_x]- \quad (8b)$$

$$-[K_2-N=N-E-N=N-K_1]- \quad (9)$$

ist, in welchen

A und $A_x$, zueinander gleich oder voneinander verschieden, jedes als Rest einer Diazokomponente den Phenylenrest oder einen Naphthylenrest bedeutet, die durch in der Azochemie übliche Substituenten substituiert sein können,

$K_1$ und $K_2$, zueinander gleich oder voneinander verschieden, jedes den Rest einer Kupplungskomponente der Benzol-, Naphthalin- oder Ketomethylen-Reihe bedeutet, der durch in der Azochemie übliche Substituenten substituiert sein kann,

K den bivalenten Rest einer bivalenten Kupplungskomponente aus der Benzol- oder Naphthalin-Reihe darstellt, der durch in der Azochemie übliche Substituenten substituiert sein kann,

T der bivalente Rest einer Mittelkomponente ist, die beim Aufbau der Verbindungen der Formel (1) zuerst als Kupplungskomponente, dann als Diazokomponente dient, und den Phenylenrest bedeutet, der durch einen Substituenten aus der Gruppe Alkyl von 1 bis 4 C-Atomen, Alkoxy von 1 bis 4 C-Atomen, Chlor, gegebenenfalls substituiertes Alkanoylamino mit einem Alkylrest von 1 bis 4 C-Atomen, gegebenenfalls substituiertes Benzoylamino, Amino, Methylamino, Äthylamino, Dimethylamino, Diäthylamino und Ureido substituiert sein kann, oder den Naphthylenrest bedeutet, der durch eine Amino- oder Hydroxygruppe, die ortho- oder paraständig zur ersten Azogruppe stehen, substituiert ist und durch eine Alkylgruppe von 1 bis 4 C-Atomen, eine Nitro- oder Acetylamino-Gruppe und/oder durch eine oder zwei Sulfonsäuregruppen substituiert sein kann, und

E den Phenylenrest bedeutet, der durch eine Sulfo- oder Methylgruppe substituiert sein kann, oder ein Rest der Formel

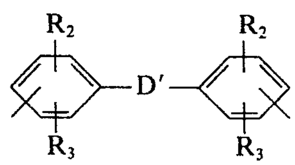

ist, in welcher

D′ für eine direkte Bindung oder für die Gruppe $-NH-CO-$, $-CO-NH-$, $-CO-$, $-SO_2-$, $-CH=CH-$, $-N=N-$, $-O-$ oder $-CH_2-$ steht,

$R_2$ ein Wasserstoffatom oder eine Alkylgruppe von 1 bis 4 C-Atomen, eine Alkoxygruppe von 1 bis 4 C-Atomen, ein Chlor- oder Bromatom oder eine Sulfonsäuregruppe ist und

$R_3$ ein Wasserstoffatom, eine Alkylgruppe von 1 bis 4 C-Atomen, eine Alkoxygruppe, ein Chlor- oder Bromatom darstellt,

wobei in diesen Formelresten (6) bis (9) die Gruppen der Formeln

$-SO_2-X$ und 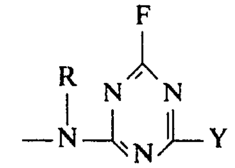

jeweils getrennt an A, $A_x$, $K_1$ und $K_2$ oder aber gegebenenfalls auch gleichzeitig an diesen Resten sitzen können und die Gruppe der Formel $-SO_2-X$ in den Disazoverbindungen auch an den Rest T gebunden sein kann und wobei die Formelreste A, $A_x$, K, $K_1$, $K_2$, T und E zusammen zwei oder mehrere Sulfonsäuregruppen enthalten.

5. Verbindungen nach Anspruch 4 der dort angegebenen und definierten Formeln (6), (7), (8 a), (8 b) oder (9), dadurch gekennzeichnet, daß hier

A und $A_x$, zueinander gleich oder voneinander verschieden, jedes den Phenylenrest bedeutet, der durch Substituenten substituiert sein kann, die der Gruppe Alkyl von 1 bis 4 C-Atomen, Alkoxy von 1 bis 4 C-Atomen, Carboxy, gegebenenfalls substituiertes Alkanoylamino mit eine Alkylrest von 1 bis 4 C-Atomen, gegebenenfalls substituiertes Benzoylamino, Phenylamino, Sulfophenylamino, Carbamoyl, durch Alkyl von 1 bis 4 C-Atomen und/oder Phenyl mono- oder disubstituiertes Carbamoyl, Sulfamoyl, durch Alkyl von 1 bis 4 C-Atomen und/oder Phenyl mono- oder disubstituiertes Sulfamoyl, Cyan, Nitro, Chlor, Brom, Fluor, Trifluormethyl, Hydroxy und Sulfo angehören, oder jedes einen Naphthylenrest bedeutet, der durch Substituenten substituiert sein kann, die der Gruppe Sulfo, Carboxy, Methyl, Äthyl, Methoxy, Äthoxy, gegebenenfalls substituiertes Alkanoylamino mit einem Alkylrest von 1 bis 4 C-Atomen, gegebenenfalls substituiertes Benzoylamino, Chlor, Hydroxy und Nitro angehören,

K den 1-Hydroxy-8-amino-naphth-2,7-ylen-Rest darstellt, der in 3-, 5- und 6-Stellung durch eine oder zwei Sulfogruppen substituiert sein kann, oder den 1-Amino-8-hydroxy-naphth-2,7-ylen-Rest bedeutet, der in 3-, 4- und 6-Stellung durch eine oder zwei Sulfogruppen substituiert sein kann,

$K_1$ und $K_2$, zueinander gleich oder voneinander verschieden, jedes den 1-Hydroxy- oder 2-Hydroxynaphthylen-Rest bedeutet, die durch eine oder zwei Sulfonsäuregruppen substituiert sein können, oder den 1-Amino- oder 2-Aminonaphthylen-Rest oder den Naphthylenrest bedeutet, die durch eine oder zwei Sulfonsäuregruppen und/oder eine Hydroxygruppe substituiert sein können, und

T den Phenylenrest darstellen, der durch einen Substituenten aus der Gruppe Alkyl von 1 bis 4 C-Atomen, Alkoxy von 1 bis 4 C-Atomen, Chlor, gegebenenfalls substituiertes Alkanoylamino mit einem Alkylrest von 1 bis 4 C-Atomen, gegebenenfalls substituiertes Benzoylamino, Amino, Methylamino, Äthylamino, Dimethylamino, Diäthylamino und Ureido substituiert sein kann, oder den Naphthylenrest, der durch eine Amino- oder Hydroxygruppe, die ortho- oder para-ständig zur ersten Azogruppe stehen, substituiert ist und durch eine Alkylgruppe von 1 bis 4 C-Atomen, eine Nitro-oder Acetylaminogruppe und/oder durch 1 oder 2 Sulfonsäuregruppen substituiert sein kann.

6. Verbindung nach Anspruch 4 der dort angegebenen Formeln (6) bis (9), dadurch gekennzeichnet, daß A, $A_x$, E und T die dort angegebenen Bedeutungen haben und $K_1$ und $K_2$, zueinander gleich oder voneinander verschieden, jedes den Rest des 5-Aminopyrazol-4-yls oder 5-Pyrazolon-4-yls bedeutet, die in 3-Stellung durch Methyl, Carboxy, Carbamoyl, Carbalkoxy mit einem Alkylrest von 1 bis 4 C-Atomen oder Phenyl substituiert sind und in 1-Stellung den Phenylkern oder Naphthylkern gebunden enthalten, wobei der Phenylrest durch 1 oder 2 Sulfonsäuregruppen und/oder 1 oder 2 Substituenten aus der Gruppe Alkyl von 1 bis 4 C-Atomen, Alkoxy von 1 bis 4 C-Atomen, Chlor, Brom, Nitro, gegebenenfalls substituiertes Alkanoylamino mit einem Alkylrest von 1 bis 4 C-Atomen, gegebenenfalls substituiertes Benzoylamino und Carboxy und der Naphthylkern durch 1, 2 oder 3 Sulfogruppen und/oder einen Substituenten aus der Gruppe Alkyl von 1 bis 4 C-Atomen, Alkoxy von 1 bis 4 C-Atomen, Nitro, gegebenenfalls substituiertes Alkanoylamino mit einem Alkylrest von 1 bis 4 C-Atomen, gegebenenfalls substituiertes Benzoylamino und Carboxy substituiert sein können und der Fluortriazinylaminorest an diesen Phenyl- oder Naphthylrest gebunden ist.

7. Verbindungen nach Anspruch 4 der dort angegebenen Formeln (6) bis (9), dadurch gekennzeichnet, daß A, $A_x$, E und T die dort angegebenen Bedeutungen haben und $K_1$ und $K_2$, zueinander gleich oder voneinander verschieden, jedes den bivalenten Acetoacetylanilid- oder -naphthylamid-Rest bedeutet, wobei der Phenylrest durch 1 oder 2 Substituenten substituiert sein kann, die der Gruppe Alkyl von 1 bis 4 C-Atomen, Alkoxy von 1 bis 4 C-Atomen, Carboxy, gegebenenfalls substituiertes Alkanoylamino mit einem Alkylrest von 1 bis 4 C-Atomen, gegebenenfalls substituiertes Benzoylamino, Carbamoyl, durch Alkyl von 1 bis 4 C-Atomen und/oder Phenyl mono- oder disubstituiertes Carbamoyl, Sulfamoyl, durch Alkyl von 1 bis 4 C-Atomen und/oder Phenyl mono- oder disubstituiertes Sulfamoyl, Cyan, Nitro, Chlor,

Brom, Fluor, Trifluormethyl und Sulfo angehören, und der Naphthylrest durch 1 oder 2 Substituenten aus der Gruppe Sulfo, Carboxy, Methyl, Methoxy, Äthoxy, Chlor, Hydroxy oder Nitro substituiert sein kann und wobei der Fluortriazinylaminorest an den Phenyl- oder Naphthylrest gebunden ist.

8. Verbindungen nach Anspruch 4, 5, 6 oder 7 der dort angegebenen und definierten Formel (8 a)

$$-[A-N=N-T-N=N-K_1]- \quad (8a)$$

dadurch gekennzeichnet, daß hier T den Rest der Formel

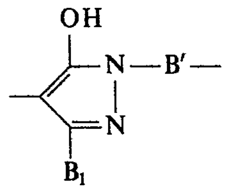

bedeutet, in welcher $B_1$ für die Methyl- oder Carboxygruppe steht und B' den Phenylen- oder Naphthylenrest darstellt, der noch durch 1 oder 2 Substituenten aus der Gruppe Sulfo, Carboxy, Alkyl von 1 bis 4 C-Atomen, Alkoxy von 1 bis 4 C-Atomen und Chlor substituiert sein kann.

9. Verbindungen nach Anspruch 4, 5, 6, 7 oder 8 der dort angegebenen und definierten Formeln (6), (7), (8 a) und (9), dadurch gekennzeichnet, daß hier $K_1$ und/oder $K_2$ jedes der Rest einer Kupplungskomponente der 6-Hydroxy-pyridon(2)-Reihe ist.

10. Die Schwermetallkomplex-Verbindungen der Verbindungen von Anspruch 4, 5, 6, 7 oder 8.

11. Verbindungen nach Anspruch 1 der, in Form der freien Säure geschrieben, allgemeinen Formel

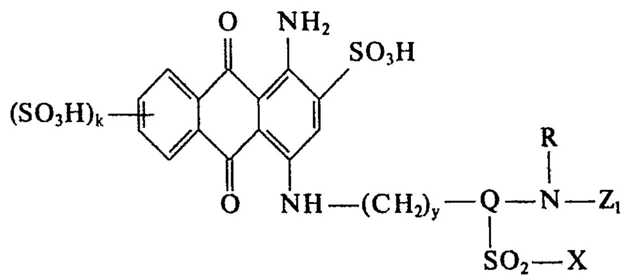

in welcher R und X die in Anspruch 1 genannten Bedeutungen haben und k für die Zahl Null oder 1 steht, y die Zahl Null, 1 oder 2 bedeutet, Q den Benzolkern darstellt, der noch zusätzlich durch einen oder zwei Substituenten aus der Gruppe Methyl, Äthyl, Methoxy, Äthoxy, Chlor, Brom, Sulfo und Carboxy substituiert sein kann, und $Z_1$ für einen Rest der allgemeinen Formel (3 b)

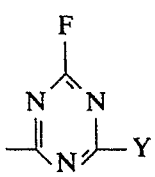

(3 b)

steht, in welcher Y die in Anspruch 1 genannte Bedeutung besitzt.

12. Verbindungen nach Anspruch 1 der, in Form der freien Säure geschrieben, allgemeinen Formel

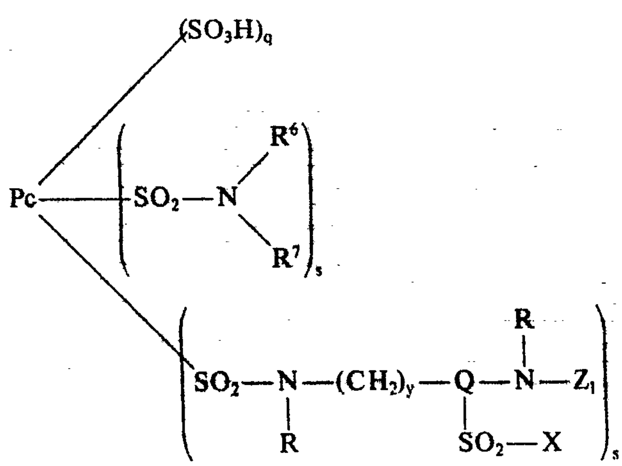

oder

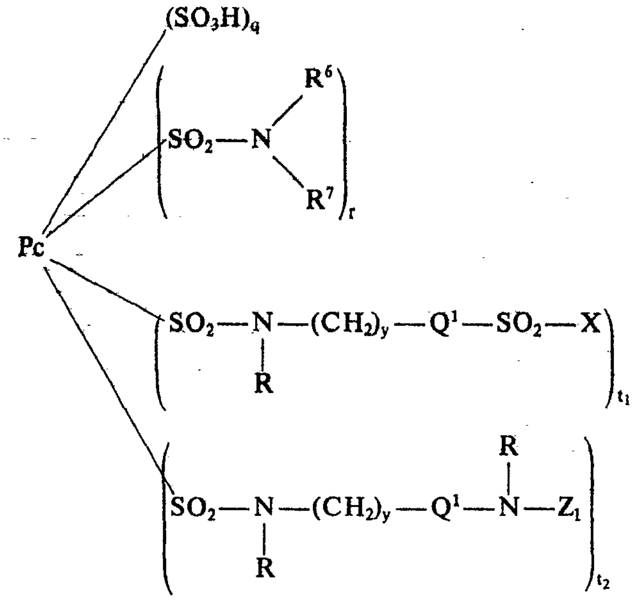

in welchen Pc für den Rest des Kupferphthalocyanins oder Nickelphthalocyanins steht, wobei die Sulfo- und Sulfonamidgruppen in 3- oder 4-Stellung an den Phthalocyaninrest gebunden sind, $R^6$, $R^7$ und R gleich oder verschieden und jedes für ein Wasserstoffatom oder eine Alkylgruppe von 1 bis 4 C-Atomen steht, y die Zahl Null, 1 oder 2 ist, Q den Benzol- und den Naphthalinkern bedeutet, der noch zusätzlich durch 1 oder 2 Substituenten aus der Gruppe Methyl, Äthyl, Methoxy, Äthoxy, Chlor, Brom, Sulfo und Carboxy substituiert sein kann, $Q^1$, gleich oder verschieden voneinander, den Phenylen- oder Naphthylenrest bedeutet, die durch 1 oder 2 Substituenten aus der Gruppe Methyl, Äthyl, Methoxy, Äthoxy, Chlor, Brom, Sulfo und Carboxy substituiert sein können, q für einen Zahlenwert von 0 bis 3, r für einen Zahlenwert von 0 bis 2 und s für einen Zahlenwert zwischen 1 bis 2 stehen und $t_1$ und $t_2$, gleich oder verschieden voneinander, jedes ein Zahlenwert von 1 bis 1,5 ist, wobei die Summe von $(t_1 + t_2)$ höchstens 2,5 ist und die Summe von $(q + r + s)$ oder von $(q + r + t_1 + t_2)$ jeweils höchstens 4 ist, und in welchen R und X die in Anspruch 1 genannten Bedeutungen besitzen und $Z_1$ einen Rest der allgemeinen Formel (3 b)

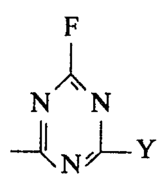

(3 b)

darstellt, in welcher Y die in Anspruch 1 genannte Bedeutung hat.

13. Verbindungen nach Anspruch 1 der allgemeinen Formel

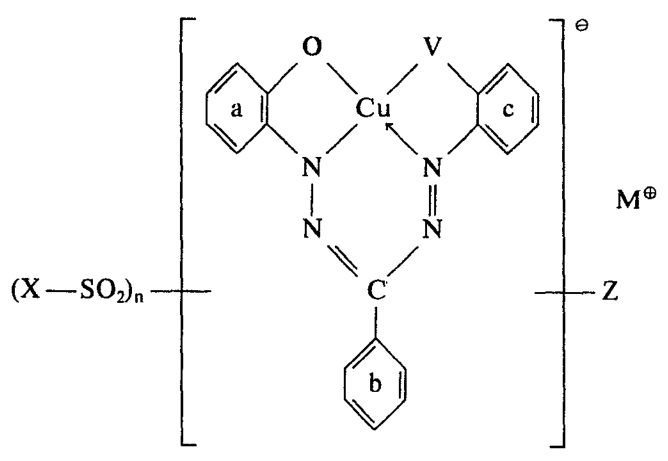

in welcher die Benzolkerne a, b und c unsubstituiert sind oder durch Substituenten aus der Gruppe

Sulfo, Carboxy, Halogen, Acetylamino, Nitro, Hydroxy, Alkyl von 1 bis 4 C-Atomen, Alkoxy von 1 bis 4 C-Atomen, Alkylsulfonyl von 1 bis 4 C-Atomen, Sulfamoyl, N-Monoalkyl- und N-N-Dialkylsulfamoyl mit Alkylgruppen von 1 bis 4 C-Atomen substituiert sein können, V ein Sauerstoffatom oder die Gruppe der Formel —O—OC— ist, M für ein Wasserstoffatom oder das Äquivalent eines Metalls steht, Z eine Gruppe der Formel (3 a)

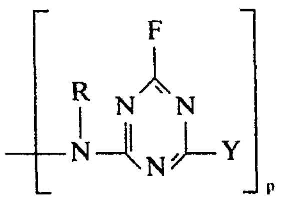

(3 a)

mit R, Y und p der in Anspruch 1 genannten Bedeutung ist und n die in Anspruch 1 genannten Bedeutungen hat.

14. Verbindungen nach Anspruch 1 der allgemeinen Formel

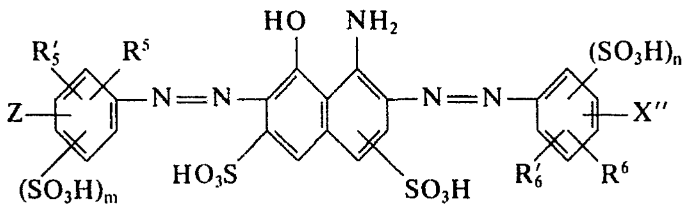

oder der allgemeinen Formel

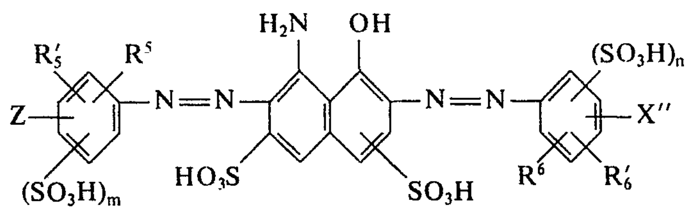

oder deren Salze, in welchen

$R^5$ ein Wasserstoffatom oder eine Methyl-, Methoxy-, Äthyl-, Äthoxy-, Hydroxy- oder Carboxygruppe ist,
$R_5'$ ein Wasserstoffatom oder eine Methyl-, Methoxy-, Äthyl-, Äthoxy-, Hydroxy oder Carboxygruppe ist,
$R^6$ ein Wasserstoffatom oder ein Chloratom oder eine Methyl-, Methoxy-, Äthyl-, Äthoxy-, Hydroxy- oder Carboxygruppe bedeutet,
$R_6'$ ein Wasserstoffatom oder ein Chloratom oder eine Methyl-, Methoxy-, Äthyl-, Äthoxy-, Hydroxy- oder Carboxygruppe ist,
m für die Zahl Null oder 1 steht,
n die Zahl Null, 1 oder 2 ist,
Z die Vinylsulfonyl-, β-Thiosulfatoäthylsulfonyl-, β-Sulfatoäthylsulfonyl- oder β-Chloräthylsulfonyl-Gruppe bedeutet und
X″ eine Gruppe der allgemeinen Formel

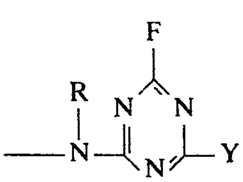

ist, in welcher Y die in Anspruch 1 genannte Bedeutung besitzt und R ein Wasserstoffatom oder die Methylgruppe ist, wobei die Formelglieder $R^5$, $R_5'$, $R^6$ und $R_6'$ bzw. m und n zueinander gleiche oder voneinander verschiedene Bedeutungen besitzen können und die zweite Sulfogruppe in der Aminonaphthol-Komponente an den Naphthalinkern in meta- oder para-Stellung zur Aminogruppe gebunden ist.

15. Eine Verbindung nach Anspruch 14, in welcher $R^6$ ein Wasserstoffatom oder ein Chloratom bedeutet, $R'_6$ ein Wasserstoffatom ist, n die Zahl 1 oder 2 bedeutet und $R^5$, $R'_5$, m Z und X'' wie in Anspruch 14 definiert sind.

16. Eine Verbindung nach einem der Ansprüche 1 bis 15, dadurch gekennzeichnet, daß Y eine Gruppe der allgemeinen Formel $-NR^2R^3$ bedeutet, in welcher $R^2$ ein Wasserstoffatom oder eine Alkylgruppe von 1 bis 4 C-Atomen ist, die durch 1 oder 2 Substituenten substituiert sein kann, die der Gruppe Acetylamino, Hydroxy, Sulfato, Alkoxy von 1 bis 4 C-Atomen, Sulfo, Carboxy, Phenyl, Naphthyl, durch Sulfo, Carboxy, Methyl, Äthyl, Methoxy, Äthoxy, Chlor, Carbamoyl und/oder Sulfamoyl substituiertes Phenyl und durch Chlor, Methyl, Methoxy, Äthoxy, Sulfo und/oder Carboxy substituiertes Naphthyl angehören, oder $R^2$ eine Cyclohexylgruppe bedeutet, $R^3$ ein Wasserstoffatom oder eine Alkylgruppe von 1 bis 4 C-Atomen ist, die durch 1 oder 2 Substituenten substituiert sein kann, die der Gruppe Acetylamino, Hydroxy, Sulfato, Alkoxy von 1 bis 4 C-Atomen, Sulfo, Carboxy, Phenyl, Naphthyl, durch Sulfo, Carboxy, Methyl, Äthyl, Methoxy, Äthoxy, Chlor, Carbamoyl und/oder Sulfamoyl substituiertes Phenyl und durch Chlor, Methyl, Methoxy, Äthoxy, Sulfo und/oder Carboxy substituiertes Naphthyl angehören, oder $R^3$ ein Phenyl- oder Naphthylrest, die beide unsubstituiert oder durch Carboxy, Sulfo, Alkyl von 1 bis 4 C-Atomen, Alkoxy von 1 bis 4 C-Atomen, Hydroxy und/oder Chlor substituiert sein können, oder in welcher $R^2$ und $R^3$ zusammen mit dem Stickstoffatom den Morpholin-, Piperidin- oder Piperazin-Rest bilden.

17. Verfahren zur Herstellung der Verbindungen von Anspruch 1, dadurch gekennzeichnet, daß man eine Verbindung der allgemeinen Formel (2)

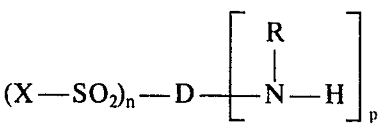

(2)

in welcher D, R, X, n und p die in Anspruch 1 genannten Bedeutungen haben, mit einer Difluortriazin-Verbindung der allgemeinen Formel (3)

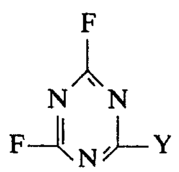

(3)

in welcher Y die in Anspruch 1 genannte Bedeutung hat, unter Abspaltung eines Mols Fluorwasserstoff miteinander umsetzt, oder daß man
eine Verbindung der allgemeinen Formel (2) zunächst mit 2,4,6-Trifluor-1,3,5-triazin zur Difluortriazin-Verbindung der allgemeinen Formel (4)

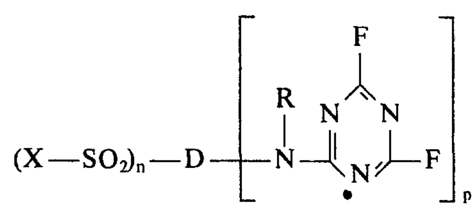

(4)

in welcher D, R, X, n und p die in Anspruch 1 genannten Bedeutungen haben, umsetzt und diese Verbindung der Formel (4) nachfolgend mit der äquimolaren Menge eines Amins der allgemeinen Formel (5)

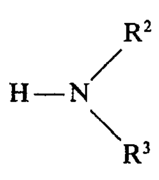

(5)

in welcher $R^2$ und $R^3$ die in Anspruch 1 genannten Bedeutungen haben, umsetzt, oder daß man
eine Ausgangskomponente des Farbstoffrestes D, die die oben definierte Gruppe der Formel $-SO_2-X$ ein- oder zweimal enthält, mit einer zweiten Ausgangskomponente des Farbstoffmoleküls D, die den Monofluortriazinylaminorest der Formel (3a)

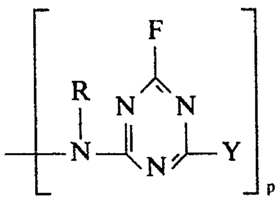

(3a)

mit R, Y und p der in Anspruch 1 angegebenen Bedeutungen enthält, miteinander umsetzt, oder eine Ausgangskomponente des Farbstoffrestes D, die die oben definierte Gruppe $-SO_2-X$ ein- oder zweimal und den Monofluortriazinylaminorest der Formel (3a) ein- oder zweimal enthält, mit einer zweiten Ausgangskomponente von D, miteinander umsetzt.

18. Verwendung der Verbindungen von Anspruch 1 als Farbstoffe.

19. Präparationen, enthaltend eine Verbindung von Anspruch 1.

**Claims**

1. Sulfo-group containing compounds of the general formula (1)

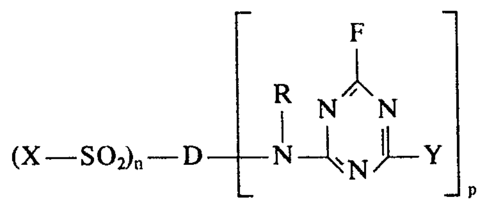

(1)

wherein:

D is the radical of an organic dye molecule;
X is the vinyl, the β-thiosulfatoethyl, the β-sulfatoethyl or the β-chloroethyl group;
R is a hydrogen atom or an alkyl group of from 1 to 4 C-atoms;
n is the number 1 or 2;
p is the number 1 or 2;
Y is a radical of the formula $-O-R^1$ or of the formula $-S-R^1$ or of the formula

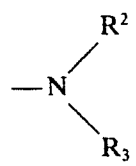

in which

$R^1$ represents an optionally substituted alkyl radical of from 1 to 4 C-atoms or an aromatic carbocyclic or aromatic heterocyclic radical,
$R^2$ is a hydrogen atom or an optionally substituted alkyl or alkenyl radical of from 1 to 4 or of from 2 to 4 C-atoms, respectively, or a cycloaliphatic radical and
$R^3$ denotes a hydrogen atom or an optionally substituted alkyl or alkenyl radical of from 1 to 4 C-atoms or 2 to 4 C-atoms, respectively, or an optionally substituted aromatic carbocyclic radical or an alkoxy group of from 1 to 4 C-atoms or the cyano group or the group of the formula $-CS-NH_2$ or an optionally substituted amino group, or
$R^2$ and $R^3$,
conjointly with the nitrogen atom, form a ring which contains alkylene of 1 to 4 C-atoms and optionally further heteroatomes.

2. Compounds according to claim 1, characterized in that D contains one or more sulfonic acid groups.

3. Compounds according to claim 1, characterized in that D is the radical of a sulfo-group containing, metal-free or metal-containing monoazo or disazo dyestuff.

4. Compounds according to claim 1 and 3, characterized in that D is a radical of the formula (6), (7), (8 a), (8 b) or (9)

$$-[A-N=N-K_1]- \quad (6)$$

$$-[K_2-N=N-A_x]- \quad (7)$$

$$-[A-N=N-T-N=N-K_1]- \quad (8a)$$

$$-[A-N=N-K-N=N-A_x]- \quad (8b)$$

$$-[K_2-N=N-E-N=N-K_1]- \quad (9)$$

in which

A and $A_x$
being indentical to or different from one another each denotes, as the radical of a diazo component, the phenylene or a naphthylene radical, which can be substituted by substituents customary in azo chemistry,

$K_1$ and $K_2$
being identical to or different from one another each denotes the radical of a coupling component from the benzene, naphthalene or ketomethylene series, which can be substituted by substituents customary in azo chemistry,

K represents the bivalent radical of a bivalent coupling component from the benzene or naphthalene series, which radical can be substituted by substituents customary in azo chemistry,

T is the bivalent radical of a middle component which, in the synthesis of the compounds of the formula (1), serves first as a coupling component and then as a diazo component and which denotes the phenylene radical which can be substituted by a substituent from the group comprising alkyl of from 1 to 4 C-atoms, alkoxy of from 1 to 4 C-atomes, chlorine, optionally substituted alkanoylamino having an alkyl radical of from 1 to 4 C-atoms, optionally substituted benzoylamino, amino, methylamino, ethylamino, dimethylamino, diethylamino and ureido, or which denotes the naphthylene radical which is substituted by an amino or hydroxy group in the ortho-position or para-position relative to the first azo group and can be substituted by an alkyl group of from 1 to 4 C-atoms, a nitro or acetylamino group and/or by one or two sulfonic acid groups, and

E denotes the phenylene radical which can be substituted by a sulfo or methyl group, or is a radical of the formula

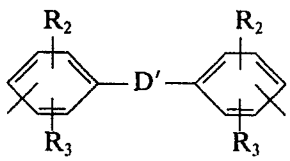

in which

D' represents a direct bond or a group $-NH-CO-$, $-CO-NH-$, $-CO-$, $-SO_2-$, $-CH=CH-$, $-N=N-$, $-O-$ or $-CH_2-$,

$R_2$ is a hydrogen atom or an alkyl group of from 1 to 4 C-atoms, an alkoxy group of from 1 to 4 C-atoms, a chlorine or bromine atom or a sulfonic acid group and

$R_3$ represents a hydrogen atom, an alkyl group of from 1 to 4 C-atoms, an alkoxy group of from 1 to 4 C-atoms or a chlorine or bromine atom,

and the groups of the formulae

$-SO_2-X$ and 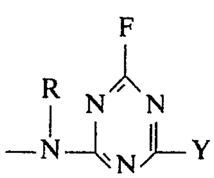

in these formula moieties (6) to (9) can be bonded each separately to A, $A_x$, $K_1$ and $K_2$ or optionally simultaneously to these radicals, and the group of the formula $-SO_2-X$ in the disazo compounds can also be bonded to the radical T, the formula moieties A, $A_x$, K, $K_1$, $K_2$, T and E containing a total of two or more sulfonic acid groups.

5. Compounds according to claim 4 of the formulae (6), (7), (8 a), (8 b) or (9) indicated and defined there, characterized in that

A and $A_x$
being identical to or different from one another each denotes the phenylene radical which can be substituted by substituents belonging to the group comprising alkyl of from 1 to 4 C-atoms, alkoxy of from 1 to 4 C-atoms, carboxy, optionally substituted alkanoylamino having an alkyl radical of

from 1 to 4 C-atoms, optionally substituted benzoylamino, phenylamino, sulfophenylamino, carbamoyl, carbamoyl monosubstituted or disubstituted by alkyl of from 1 to 4 C-atoms and/or phenyl, sulfamoyl, sulfamoyl monosubstituted or disubstituted by alkyl of from 1 to 4 C-atoms and/or phenyl, cyano, nitro, chlorine, bromine, fluorine, trifluoromethyl, hydroxy and sulfo, or each denotes a naphthylene radical which can be substituted by substituents belonging to the group comprising sulfo, carboxy, methyl, ethyl, methoxy, ethoxy, optionally substituted alkanoylamino having an alkyl radical of from 1 to 4 C-atoms, optionally substituted benzoylamino, chlorine, hydroxy and nitro,

K represents the 1-hydroxy-8-amino-naphth-2,7-ylene radical which can be substituted by one or two sulfo groups in the 3-, 5- and 6-position, or denotes the 1-amino-8-hydroxy-naphth-2,7-ylene radical which can be substituted by one or two sulfo groups in the 3-, 4- and 6-position,

$K_1$ and $K_2$
being identical to or different from one another each denotes a 1-hydroxy- or 2-hydroxy-naphthylene radical, which can be substituted by one or two sulfonic acid groups, or denotes a 1-amino- or 2-amino-naphthylene radical or the naphthylene radical, which can be substituted by one or two sulfonic acid groups and/or one hydroxy group, and

T represents the phenylen radical which can be substituted by an substituent from the group comprising alkyl of from 1 to 4 C-atoms, alkoxy of from 1 to 4 C-atoms, chlorine, optionally substituted alkanoylamino having an alkyl radical of from 1 to 4 C-atoms, optionally substituted benzoylamino, amino, methylamino, ethylamino, dimethylamino, diethylamino and ureido, or represents the naphthylene radical which is substituted by an amino- or hydroxy-group in the ortho- or para-position relative to the first azo group, and can be substituted by an alkyl group of from 1 to 4 C-atoms, a nitro or acetylamino group and/or by 1 or 2 sulfonic acid groups.

6. A compound according to claim 4 of the formulae (6) to (9) indicated there, characterized in that A, $A_x$, E and T have the meanings given there and $K_1$ and $K_2$ being identical to or different from one another each denotes the radical of 5-aminopyrazol-4-yl or 5-pyrazolon-4-yl, which are substituted in the 3-position by methyl, carboxy, carbamoyl, carbalkoxy with an alkyl radical of from 1 to 4 C-atoms or phenyl and contain bonded in the 1-position the phenyl nucleus or the naphthyl nucleus, it being possible for the phenyl radical to be substituted by 1 or 2 sulfonic acid groups and/or 1 or 2 substituents from the group comprising alkyl of from 1 to 4 C-atoms, alkoxy of from 1 to 4 C-atoms, chlorine, bromine, nitro, optionally substituted alkanoylamino having an alkyl radical of from 1 to 4 C-atoms, optionally substituted benzoylamino and carboxy, and for the naphthyl nucleus to be substituted by 1, 2 or 3 sulfo groups and/or one substituent from the group comprising alkyl of from 1 to 4 C-atoms, alkoxy of from 1 to 4 C-atoms, nitro, optionally substituted alkanoylamino having an alkyl radical of from 1 to 4 C-atoms, optionally substituted benzoylamino and carboxy, the fluorotriazinylamino radical being bonded to this phenyl or naphthyl radical.

7. Compounds according to claim 4 of the formulae (6) to (9) indicated there, characterized in that A, $A_x$, E and T have the meanings given there and $K_1$ and $K_2$ being identical to or different from one another each denotes the bivalent acetoacetylanilide or acetoacetylnaphthylamide radical, it being possible for the phenyl radical to be substituted by 1 or 2 substituents belonging to the group comprising alkyl of from 1 to 4 C-atoms, alkoxy of from 1 to 4 C-atoms, carboxy, optionally substituted alkanoylamino having an alkyl radical of from 1 to 4 C-atoms, optionally substituted benzoylamino, carbamoyl, carbamoyl monosubstituted or disubstituted by alkyl of from 1 to 4 C-atoms and/or phenyl, sulfamoyl, sulfamoyl monosubstituted or disubstituted by alkyl of from 1 to 4 C-atoms and/or phenyl, cyano, nitro, chlorine, bromine, fluorine, trifluoromethyl and sulfo, and it being possible for the naphthyl radical to be substituted by 1 or 2 substituents from the group comprising sulfo, carboxy, methyl, methoxy, ethoxy, chlorine, hydroxy or nitro, the fluorotriazinylamino radical being bonded to the phenyl or naphthyl radical.

8. Compounds according to claim 4, 5, 6 or 7 of the formula (8 a)

$$-\!\![A-N=N-T-N=N-K_1]\!\!- \qquad (8a)$$

indicated and defined there, characterized in that T denotes the radical of the formula

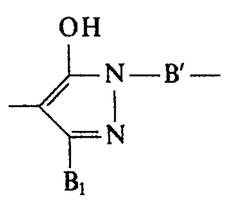

in which $B_1$ represents the methyl or carboxy group and B′ represents the phenylene or naphthylene radical, which can be substituted by 1 or 2 substitutents from the group comprising sulfo, carboxy, alkyl of from 1 to 4 C-atoms, alkoxy of from 1 to 4 C-atoms and chlorine.

9. Compounds according to claim 4, 5, 6, 7 or 8 of the formulae (6), (7), (8 a) and (9) indicated and defined there, characterized in that $K_1$ and/or $K_2$ each are the radical of a coupling component from the 6-hydroxy-pyrid-2-one series.

10. The heavy-metal complex compounds of the compounds of claim 4, 5, 6, 7 or 8.

11. Compounds according to claim 1 of the general formula, written in the form of the free acid,

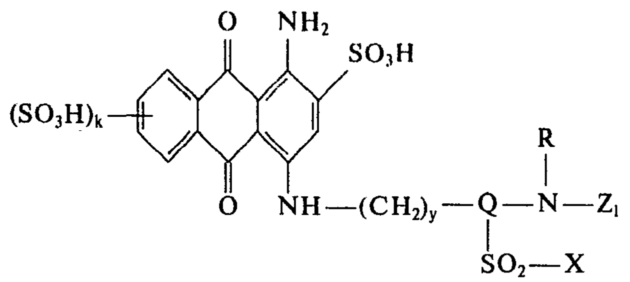

in which R and X have the meanings given in claim 1 and k represents the number zero or 1, y denotes the number zero, 1 or 2, Q represents the benzene nucleus which can be substituted additionally by one or two substituents from the group comprising methyl, ethyl, methoxy, ethoxy, chlorine, bromine, sulfo and carboxy and $Z_1$ represents a radical of the general formula (3 b)

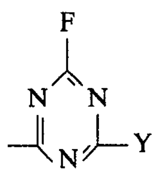

(3 b)

in which Y has the meaning given in claim 1.

12. Compounds according to claim 1 of the general formula, written in the form of the free acid,

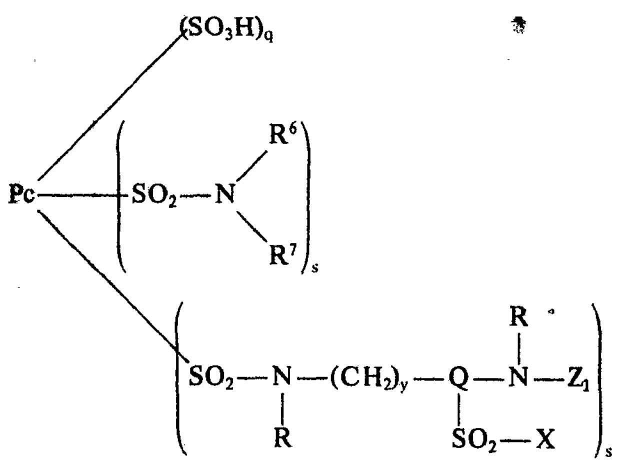

or

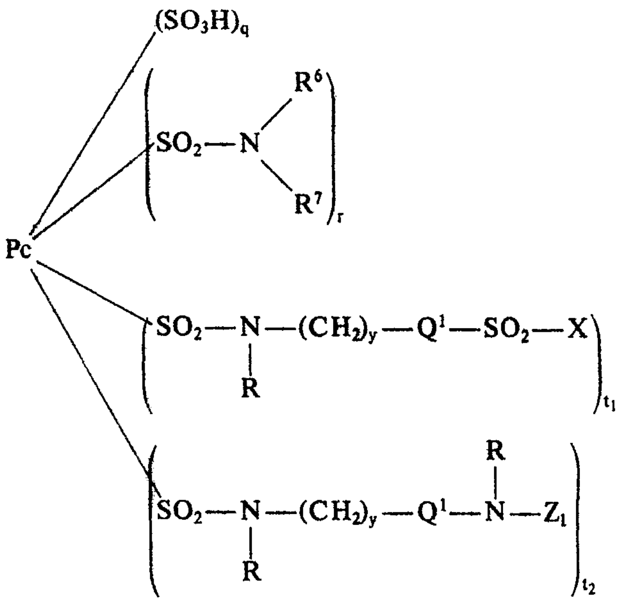

in which Pc represents the radical of copper-phthalocyanine or nickel-phthalocyanine, the sulfo groups and sulfonamide groups being bonded to the phthalocyanine radical in the 3- or 4-position, and $R^6$, $R^7$ and R are identical or different and each represents a hydrogen atom or an alkyl group of from 1 to 4 C-atoms, y is the number zero, 1 or 2, Q denotes the benzene or naphthalene nucleus, which can be substituted additionally by 1 or 2 substituents from the group comprising methyl, ethyl, methoxy, ethoxy, chlorine, bromine, sulfo and carboxy, the $Q^1$ being identical to or different from one another denote the phenylene or naphthylene radical, which can be substituted by 1 or 2 substituents from the group comprising methyl, ethyl, methoxy, ethoxy, chlorine, bromine, sulfo and carboxy, q represents a numerical value of from 0 to 3, r represents a numerical value of from 0 to 2, and s represents a numerical value between 1 and 2, and $t_1$ and $t_2$ being identical to or different from one another each represents an numerical value of from 1 to 1.5, the sum of $(t_1 + t_2)$ being at most 2.5 and the sum of $(q + r + s)$ or that of $(q + r + t_1 + t_2)$ each being at most 4, and in which R and X have the meanings given in claim 1 and $Z_1$ represents a radical of the general formula (3 b)

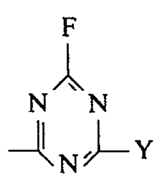

(3 b)

in which Y has the meaning given in claim 1.

13. Compounds according to claim 1, of the general formula

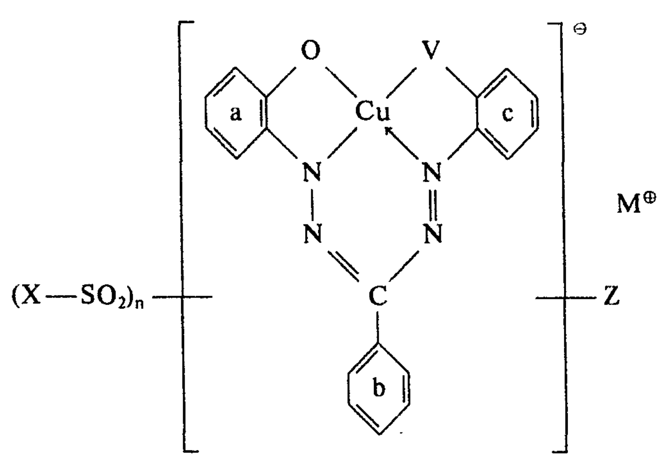

in which the benzene nuclei a, b and c are unsubstituted or can be substituted by substituents from the

group comprising sulfo, carboxy, halogeno, acetylamino, nitro, hydroxy, alkyl of 1 to 4 C-atoms, alkoxy of 1 to 4 C-atoms, alkylsulfonyl of 1 to 4 C-atoms, sulfamoyl, N-monoalkyl- and N,N-dialkyl-sulfamoyl having alkyl groups of 1 to 4 C-atoms, V is an oxygen atom or the group of the formula —O—OC—, M represents a hydrogen atom or the equivalent of a metal, Z is a group of the formula (3 a)

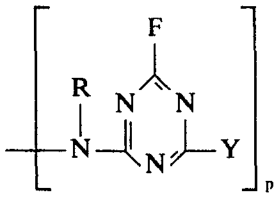

(3 a)

with R, Y and p having the meaning given in claim 1 and n has the meanings given in claim 1.

14. Compounds according to claim 1 of the general formula

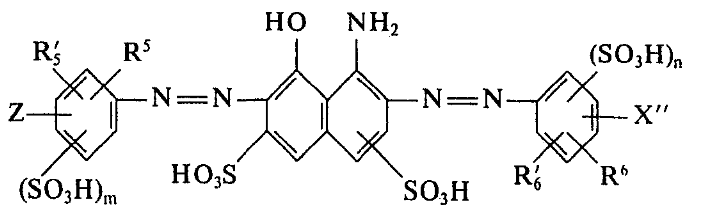

or of the general formula

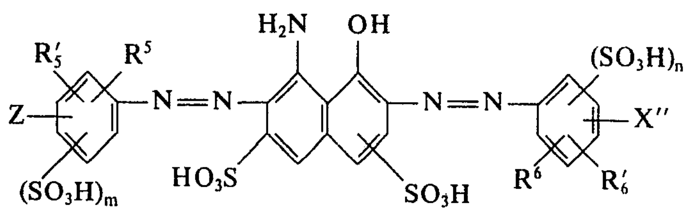

or their salts, in which

$R^5$ is a hydrogen atom or a methyl, methoxy, ethyl, ethoxy, hydroxy or carboxy group,
$R_5'$ is a hydrogen atom or a methyl, methoxy, ethyl, ethoxy, hydroxy or carboxy group,
$R^6$ is a hydrogen atom or a chlorine atom or a methyl, methoxy, ethyl, ethoxy, hydroxy or carboxy group,
$R_6'$ is a hydrogen atom or a chlorine atom or a methyl, methoxy, ethyl, ethoxy, hydroxy or carboxy group,
m represents the number zero or 1,
n is the number zero, 1 or 2,
Z is the vinylsulfonyl, β-thiosulfatoethylsulfonyl, β-sulfatoethylsulfonyl or β-chloroethylsulfonyl group and
X″ is a group of the general formula

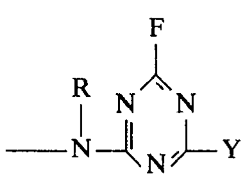

wherein Y has the meaning mentioned in claim 1 and R is a hydrogen atom or the methyl group, and the formula moieties $R^5$, $R_5'$, $R^6$ and $R_6'$ and, respectively, m and n can have identical or different meanings to or from each other, and the second sulfo group in the aminonaphthol moiety is bound to the naphthalene nucleus in the meta- or para-position relative to the amino group.

15. A compound according to claim 14, wherein $R^6$ is a hydrogen atom or a chlorine atom, $R_6'$ is a hydrogen atom, n is the number 1 or 2, and $R^5$, $R_5'$, m, Z and X″ are defined as in claim 14.

16. A compound according to one of the claims 1 to 15, characterized in that Y is a group of the general formula $-NR^2R^3$ wherein $R^2$ is a hydrogen atom or an alkyl group of 1 to 4 C-atoms which can be substituted by 1 or 2 substituents which belong to the group comprising acetylamino, hydroxy, sulfato,

alkoxy of 1 to 4 C-atoms, sulfo, carboxy, phenyl, naphthyl, phenyl substituted by sulfo, carboxy, methyl, ethyl, methoxy, ethoxy, chloro, carbamoyl and/or sulfamoyl, and naphthyl substituted by chloro, methyl, methoxy, ethoxy, sulfo and/or carboxy, or $R^2$ is a cyclohexyl group, $R^3$ is a hydrogen atom or an alkyl group of 1 to 4 C-atoms which can be substituted by 1 or 2 substituents belonging to the group comprising acetylamino, hydroxy, sulfato, alkoxy of 1 to 4 C-atoms, sulfo, carboxy, phenyl, naphthyl, phenyl substituted by sulfo, carboxy, methyl, ethyl, methoxy, ethoxy, chloro, carbamoyl and/or sulfamoyl, and naphthyl substituted by chloro, methyl, methoxy, ethoxy, sulfo and/or carboxy, or $R^3$ is a phenyl or naphthyl radical which both can be unsubstituted or substituted by carboxy, sulfo, alkyl of 1 to 4 C-atoms, alkoxy of 1 to 4 C-atoms, hydroxy and/or chloro, or wherein $R^2$ and $R^3$ together with the nitrogen atom form the morpholino, piperidino or piperazino radical.

17. A process for the preparation of the compounds of claim 1, characterized by that a compound of the general formula (2)

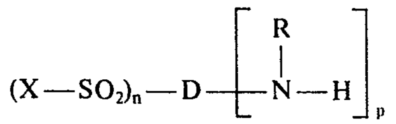

(2)

in which D, R, X, n and p have the meanings given in claim 1, is reacted with a difluorotriazine compound of the general formula (3)

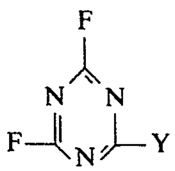

(3)

in which Y has the meaning given in claim 1, with elimination of one mole of hydrogen fluoride, or that a compound of the general formula (2) is reacted initially with 2,4,6-trifluoro-1,3,5-triazine to give the difluorotriazine compound of the general formula (4)

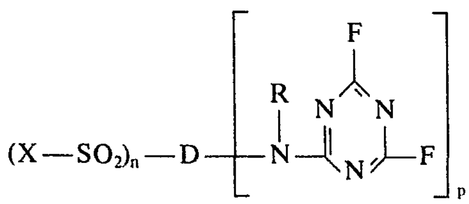

(4)

in which D, R, X, n and p have the meanings given in claim 1, and that this compound of the formula (4) is subsequently reacted with an equimolar amount of an amine of the general formula (5)

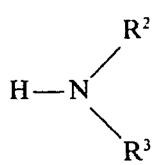

(5)

in which $R^2$ and $R^3$ have the meanings given in claim 1, or that a starting component of the dye radical D which contains the above-defined group of the formula $-SO_2-X$ once or twice, is reacted with a second starting component of the dye molecule D which contains the monofluorotriazinylamino radical of the formula (3 a)

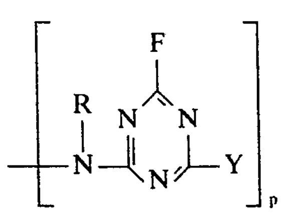

(3 a)

with R, Y and p having the meanings given in claim 1, or that a starting component of the dye radical D which contains the above-defined group $-SO_2-X$ once or twice and the monofluorotriazinylamino radical of formula (3 a) once or twice, is reacted with a second starting component of D.

18. Use of the compounds of claim 1 as dyestuffs.

19. Compositions containing a compound of claim 1.

**Revendications**

1. Composés contenant des groupes sulfo, de formule générale (1)

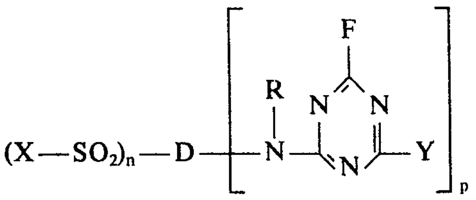

(1)

où:

D est le radical d'une molécule organique d'un colorant;
X est le groupe vinyle, $\beta$-thiosulfatoéthyle, $\beta$-sulfatoéthyle ou $\beta$-chloréthyle;
R est un atome d'hydrogène ou un groupe alkyle à 1 à 4 atomes de carbone;
n est le nombre 1 ou 2;
p est le nombre 1 ou 2;
y est un radical de formule $-O-R^1$ ou de formule $-S-R^1$ ou de formule

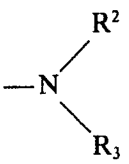

dans lesquelle:

$R^1$ est un radical alkyle éventuellement substitué à 1 à 4 atomes de carbone, ou un radical carbocyclique aromatique ou hétérocyclique aromatique,
$R^2$ est un atome d'hydrogène ou un radical alkyle ou alcényle éventuellement substitué, respectivement à 1 à 4 et à 2 à 4 atomes de carbone, ou un radical cycloaliphatique et
$R^3$ est un atome d'hydrogène ou un radical alkyle ou alcényle éventuellement substitué à 1 à 4 atomes de carbone, ou à 2 à 4 atomes de carbone ou un radical carbocyclique aromatique éventuellement substitué, ou un groupe alcoxy à 1 à 4 atomes de carbone, ou le groupe cyano, ou le groupe de formule $-CS-NH_2$, ou un groupe amino éventuellement substitué, ou bien
$R^2$ et $R^3$
forment ensemble avec l'atome d'azote un noyau contenant un alkylène à 1 à 4 atomes de carbone et éventuellement d'autres hétéroatomes.

2. Composés selon la revendication 1, caractérisés en ce que D contient un ou plusiers groupes sulfo.
3. Composés selon la revendication 1, caractérisés en ce que D est le radical d'un colorant mono- ou disazoïque contenant des groupements sulfo, sans métal ou contenant un métal.
4. Composés selon les revendications 1 et 3, caractérisés en ce que D est un radical de formule (6), (7), (8 a), (8 b) ou (9)

$$-[A-N=N-K_1]- \qquad (6)$$

$$-[K_2-N=N-A_x]- \qquad (7)$$

$$-[A-N=N-T-N=N-K_1]- \qquad (8a)$$

$$-[A-N=N-K-N=N-A_x]- \qquad (8b)$$

$$-[K_2-N=N-E-N=N-K_1]- \qquad (9)$$

où:

A et $A_x$
identiques l'un à l'autre ou différents l'un de l'autre, sont chacun, en tant que radical d'un composant diazoïque, le radical phénylène ou un radical naphthylène, qui peuvent être substitués par les substituants courants dans la chimie des azoïques,

$K_1$ et $K_2$,

identiques l'un à l'autre ou différents l'un de l'autre, sont chacun le radical d'un composant de copulation de la série benzène, naphthalène ou oxométhylène, qui peut être substitué par des substituants courants dans la chimie des azoïque,

K est le radical bivalent d'un composant de copulation bivalent de la série benzène ou naphthalène, qui peut être substitué par des substituants courants dans la chimie des azoïques,

T est le radical bivalent d'un composant central qui, lors de la synthèse des composés de formule (1) sert d'abord de composant de copulation, puis d'agent de diazotation, et est le radical phénylène, qui peut être substitué par un substituant du groupe comprenant les radicaux alkyle à 1 à 4 atomes de carbone, alcoxy à 1 à 4 atomes de carbone, chloro, alcanoylamino éventuellement substitué ayant une partie alkyle à 1 à 4 atomes de carbone, benzoylamino éventuellement substitué, amino, méthylamino, éthylamino, diméthylamino, diéthylamino et uréido, ou bien est le radical naphthylène, qui est substitué par un groupe amino ou hydroxy se trouvant en position ortho ou para par rapport ou premier groupe azo et peut être substitué par un groupe alkyle à 1 à 4 atomes de carbone, un groupe nitro ou acétylamino et/ou par 1 ou 2 groupes sulfo, et

E est un radical phénylène que peut être substitué par un groupe sulfo ou méthyle, ou bien est un radical de formule

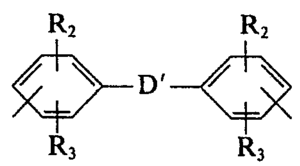

dans laquelle

D' est une liaison directe ou le groupe $-NH-CO-$, $-CO-NH-$, $-CO-$, $-SO_2-$, $-CH{=}CH-$, $-N{=}N-$, $-O-$ ou $-CH_2-$,

$R_2$ est un atome d'hydrogène ou un groupe alkyle à 1 à 4 atomes de carbone, un groupe alcoxy à 1 à 4 atomes de carbone, un atome de chlore ou de brome, ou un groupe sulfo, et

$R_3$ est un atome d'hydrogène, un groupe alkyle à 1 à 4 atomes de carbone, un groupe alcoxy, un atome de chlore ou de brome,

tandis que, dans ces radicaux (6) à (9), les groupes de formules

$-SO_2-X$ et 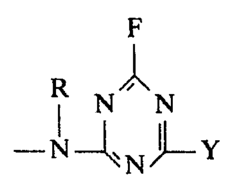

peuvent se trouver sur ces radicaux, séparés les uns des autres en A, $A_x$, $K_1$ et $K_2$, ou bien aussi, éventuellement, simultanément, et le groupe de formule $-SO_2-X$ peut, dans les composés disazoïques, être aussi fixé au radical T, et que les radicaux A, $A_x$, K, $K_1$, $K_2$, T et E contiennent, ensemble, deux ou plusieurs groupes sulfo.

5. Composés selon la revendication 4, ayant les formules (6), (7), (8 a), (8 b) ou (9) qui y sont indiquées et définies, caractérisés en ce que, ici,

A et $A_x$,

identiques l'un à l'autre ou différents l'un de l'autre, sont chacun le radical phénylène, qui peut être substitué par des substituants du groupe comprenant les radicaux alkyle à 1 à 4 atomes de carbone, alcoxy à 1 à 4 atomes de carbone, carboxy, alcanoylamino éventuellement substitué ayant une partie alkyle à 1 à 4 atomes de carbone, benzoylamino éventuellement substitué, phénylamino, sulfophénylamino, carbamoyle, carbamoyle mono- ou bisubstitué par un radical alkyle à 1 à 4 atomes de carbone et/ou phényle, sulfamoyle, sulfamoyle mono- ou bisubstitué par un radical alkyle à 1 à 4 atomes de carbone et/ou phényle, cyano, nitro, chloro, bromo, fluoro, trifluorométhyle, hydroxy et sulfo, ou bien sont chacun un radical naphtylène pouvant être substitué par des substituants du groupe comprenant les radicaux sulfo, carboxy, méthyle, éthyle, méthoxy, éthoxy, alcanoylamino éventuellement substitué ayant une partie alkyle à 1 à 4 atomes de carbone, benzoylamino éventuellement substitué, chloro, hydroxy ou nitro,

K représente le radical hydroxy-1 amino-8 naphtylène-2,7 qui peut, en position 3, 5 et 6, être substitué par un ou deux groupes sulfo, ou bien le radical amino-1 hydroxy-8 naphtylène-2,7, qui peut être substitué en position 3, 4 et 6 par un ou deux groupes sulfo,

$K_1$ et $K_2$
identiques l'un à l'autre ou différents l'un de l'autre, sont chacun le radical hydroxy-1 ou hydroxy-2 naphtylène, et peuvent être substitués par un ou deux groupes sulfo, ou bien sont le radical amino-1 ou amino-2 naphtylène ou le radical naphtylène, qui peuvent être substitués par un ou deux groupes sulfo et/ou un groupe hydroxy, et

T est le radical phénylène, qui peut être substitué par un substituant du groupe comprenant les radicaux alkyle à 1 à 4 atomes de carbone, alcoxy à 1 à 4 atomes de carbone, chloro, alcanoylamino éventuellement substitué ayant une partie alkyle à 1 à 4 atomes de carbone, benzoylamino éventuellement substitué, amino, méthylamino, éthylamino, diméthylamino, diéthylamino et uréido, ou bien est le radical naphtylène qui est substitué par un groupe amino ou hydroxy en position ortho ou para par rapport au premier groupe azo, et peut être substitué par un groupe alkyle à 1 à 4 atomes de carbone, un groupe nitro ou acétylamino et/ou par 1 ou 2 groupes sulfo.

6. Composés selon la revendication 4, ayant les formules (6) à (9) qui y sont indiquées, caractérisés en ce que A, $A_x$, E et T ont la signification qui est indiquée, et $K_1$ et $K_2$, identiques l'un à l'autre ou différents l'un de l'autre, sont chacun le radical amino-5 pyrazolyle-4 ou pyrazolone-5 yle-4, qui sont substitués en position 3 par les radicaux méthyle, carboxy, carbamoyle, carbalcoxy ayant une partie alkyle à 1 à 4 atomes de carbone, ou phényle, et contiennent, fixé en position 1, le noyau phényle ou le noyau naphtyle, le radical phényle pouvant être substitué par 1 ou 2 groupes acide sulfonique et/ou 1 ou 2 substituants du groupe comprenant les radicaux alkyle à 1 à 4 atomes de carbone, alcoxy à 1 à 4 atomes de carbone, chloro, bromo, nitro, alcanoylamino éventuellement substitué dont la partie alkyle a 1 à 4 atomes de carbone, benzoylamino éventuellement substitué et carboxy, et le noyau naphtyle pouvant être substitué par 1, 2 ou 3 groupes sulfo et/ou un substituant du groupe comprenant les radicaux alkyle à 1 à 4 atomes de carbone, alcoxy à 1 à 4 atomes de carbone, nitro, alcanoylamino éventuellement substitué ayant une partie alkyle à 1 à 4 atomes de carbone, benzoylamino éventuellement substitué et carboxy, le radical fluorotriazinylamino étant fixé sur ce radical phényle ou naphtyle.

7. Composés selon la revendication 4, ayant les formules (6) à (9) qui y sont indiquées, caractérisés en ce que A, $A_x$, E et T ont la signification qui y est indiquée, et $K_1$ et $K_2$, identiques l'un à l'autre ou différents l'un de l'autre, sont chacun le radical bivalent acétoacétylanilide ou acétonaphtylamide, où le radical phényle peut être substitué par. 1 ou 2 substituants qui appartiennent au groupe comprenant les radicaux alkyle à 1 à 4 atomes de carbone, alcoxy à 1 à 4 atomes de carbone, carboxy, alcanoylamino éventuellement substitué ayant une partie alkyle à 1 à 4 atomes de carbone, benzoylamino éventuellement substitué, carbamoyle, carbamoyle mono- ou bisubstitué par un radical alkyle à 1 à 4 atomes de carbone et/ou phényle, sulfamoyle, sulfamoyle mono- ou bisubstitué par un radical alkyle à 1 à 4 atomes de carbone et/ou phényle, cyano, nitro, chloro, bromo, fluoro, trifluorométhyle et sulfo, le radical naphtyle pouvant être substitué par 1 ou 2 substituants du groupe comprenant les radicaux sulfo, carboxy, méthyle, méthoxy, éthoxy, chloro, hydroxy ou nitro, le radical fluorotriazinylamino étant fixé au radical phényle ou naphtyle.

8. Composés selon les revendications 4, 5, 6 ou 7, ayant la formule (8 a) qui y est indiquée et définie

$$-\!\!\left[A-N=N-T-N=N-K_1\right]\!\!- \qquad (8a)$$

caractérisés en ce que, ici, T est le radical de formule

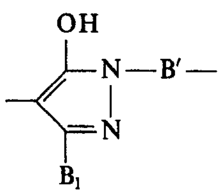

dans laquelle $B_1$ est le groupe méthyle ou carboxy et B' est le radical phénylène ou naphtylène, qui peut encore être substitué par 1 ou 2 substituants du groupe comprenant les radicaux sulfo, carboxy, alkyle à 1 à 4 atomes de carbone, alcoxy à 1 à 4 atomes de carbone et chloro.

9. Composés selon la revendication 4, 5, 6, 7 ou 8, ayant les formules (6), (7), (8 a) et (9) qui y sont indiquées et définies, caractérisés en ce que, ici, $K_1$ et/ou $K_2$ sont chacun le radical d'un composant de copulation de la série hydroxy-6 pyridone-2.

10. Composés de complexes de métaux lourds et composés selon les revendications 4, 5, 6, 7 ou 8.

11. Composés selon la revendication 1, ayant la formule générale

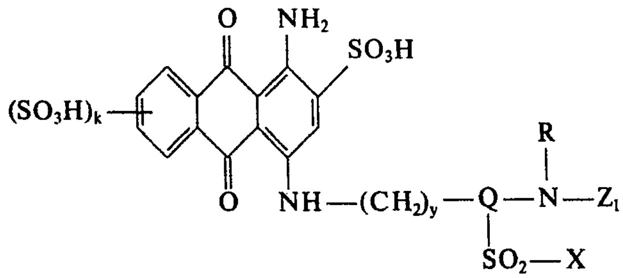

écrite sous la forme de l'acide libre dans laquelle R et X ont la signification donnée dans la revendication 1 et k est le nombre 0 ou 1, y est le nombre 0, 1 ou 2, Q est le noyau benzène, qui peut encore être en outre substitué par 1 ou 2 substituants du groupe comprenant les radicaux méthyle, éthyle, méthoxy, éthoxy, chloro, bromo, sulfo et carboxy, et $Z_1$ est un radical de formule générale (3 b)

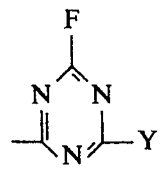

(3 b)

dans laquelle Y a la signification donnée dans la revendication 1.

12. Composés selon la revendication 1, ayant la formule générale, écrite sous la forme de l'acide libre,

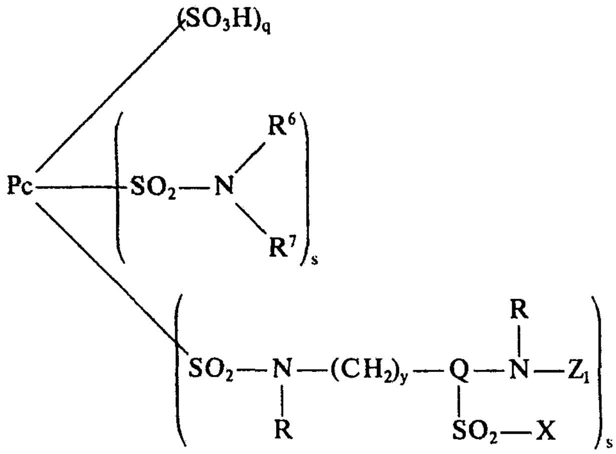

ou

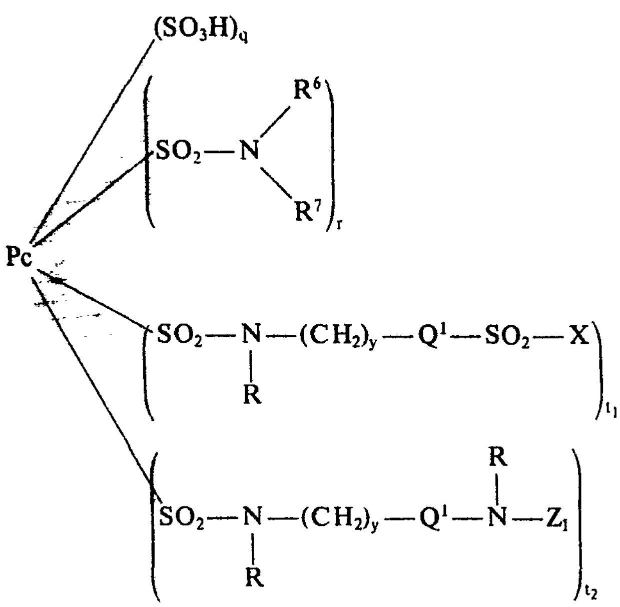

où Pc est le radical de la cuivre-phtalocyanine ou de la nickelphtalocyanine, les groupes sulfo et sulfoamido étant fixés au radical phtalocyanine en position 3 ou 4, $R^6$, $R^7$ et R étant identiques ou différents et chacun d'eux étant un atome d'hydrogène ou un groupe alkyle à 1 à 4 atomes de carbone, Y est le nombre 0, 1 ou 2, Q est le noyau benzène ou le noyau naphtalène, qui peut encore être en outre substitué par 1 ou 2 substituants du groupe comprenant les radicaux méthyle, éthyle, méthoxy, éthoxy, chloro, bromo, sulfo et carboxy, les $Q^1$, identiques ou différents les uns des autres, étant le radical phénylène ou le radical naphtylène, qui peuvent être substitués par 1 ou 2 substituants du groupe comprenant les radicaux méthyle, éthyle, méthoxy, éthoxy, chloro, bromo, sulfo et carboxy, q étant un nombre compris entre 0 et 3, r un nombre compris entre 0 et 2 et s un nombre compris entre 1 et 2, $t_1$ et $t_2$, identiques ou différents l'un de l'autre, étant chacun un nombre compris entre 1 et 1,5, tandis que la somme $(t_1 + t_2)$ est au maximum égale à 2,5 et que les sommes $(q + r + s)$ ou $(q + r + t_1 + t_2)$ sont chacunes égales au maximum à 4, et où R et X ont la signification donnée dans la revendication 1 et $Z_1$ est un radical de formule générale (3 b)

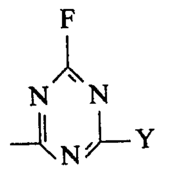

(3 b)

dans laquelle Y a la signification donnée dans la revendication 1.

13. Composés selon la revendication 1, de formule générale

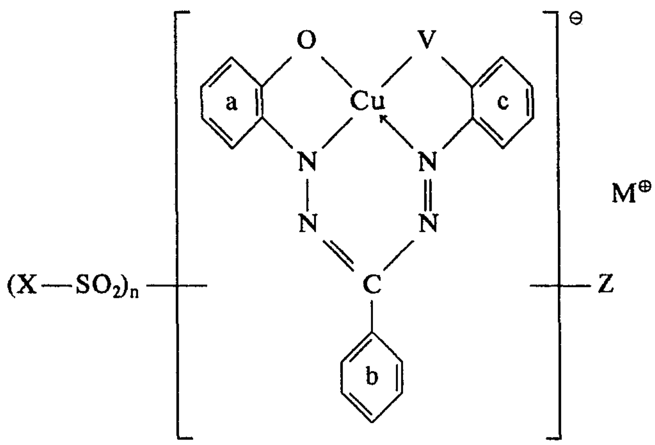

dans laquelle les noyaux benzéniques a, b et c sont nonsubstitués ou peuvent être substitués par des substituants du groupe comprenant les radicaux sulfo, carboxy, halogène, acétylamino, nitro, hydroxy, alkyle à 1 à 4 atomes de carbone, alcoxy à 1 à 4 atomes de carbone, alkylsulfonyle à 1 à 4 atomes de carbone, sulfamoyle, N-monoalkyle et N,N-dialkylsulfamoyle ayant des parties alkyle à 1 à 4 atomes de carbone, V est un atome d'oxygène ou le groupe de formule —O—OC—, M est un atome d'hydrogène ou l'équivalent d'un métal, Z est un groupe de formule (3 a)

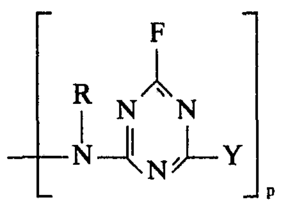

(3 a)

R, Y et p ayant la signification donnée dans la revendication 1 et n ayant la signification donnée dans la revendication 1.

14. Composés selon la revendication 1, de formule générale

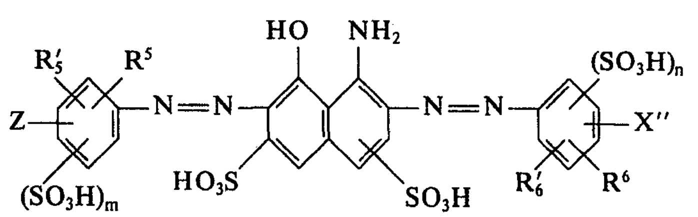

ou de formule générale

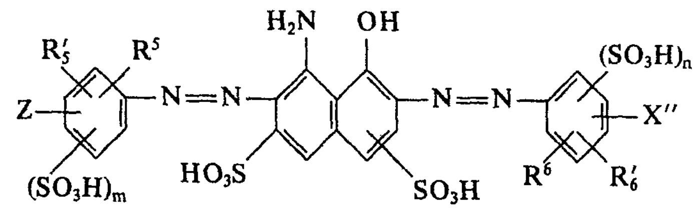

ou leurs sels, où

$R^5$ est un atome d'hydrogène ou un groupe méthyle, méthoxy, éthyle, éthoxy, hydroxy ou carboxy,
$R'_5$ est un atome d'hydrogène ou un groupe méthyle, méthoxy, éthyle, éthoxy, hydroxy ou carboxy,
$R^6$ est un atome d'hydrogène ou un atome de chlore ou un groupe méthyle, méthoxy, éthyle, éthoxy, hydroxy ou carboxy,
$R'_6$ est un atome d'hydrogène ou un atome de chlore ou un groupe méthyle, méthoxy, éthyle, éthoxy, hydroxy ou carboxy,
m est le nombre 0 ou 1,
n est le nombre 0, 1 ou 2,
Z est le groupe vinylsulfonyle, β-thiosulfatoéthylsulfonyle, β-sulfatoéthylsulfonyle ou β-chloréthylsulfonyle et
X″ est un groupe de formule générale

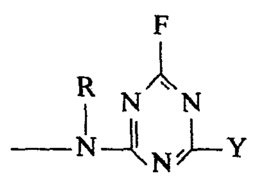

dans laquelle Y a la signification donnée dans la revendication 1 et R est un atome d'hydrogène ou le groupe méthyle, les radicaux $R^5$, $R'_5$, $R^6$ et $R'_6$ d'une part, m et n d'autre part, peuvent avoir des significations identiques entre eux ou différentes les unes des autres, le deuxième groupe sulfo du composant aminonaphtol étant fixé au noyau naphtalène en position méta ou para par rapport au groupe amino.

15. Composé selon la revendication 14, dans lequel $R^6$ est un atome d'hydrogène ou un atome de chlore, $R'_6$ est un atome d'hydrogène, n est le nombre 1 ou 2 et $R^5$, $R'_5$, m, Z et X″ sont définis comme dans la revendication 14.

16. Composition selon l'une des revendications 1 à 15, caractérisée en ce que Y un groupe de formule générale $-NR^2R^3$, dans laquelle $R^2$ est un atome d'hydrogène ou un groupe alkyle à 1 à 4 atomes de carbone pouvant être substitué par 1 ou 2 substituants qui appartiennent au groupe comprenant les radicaux acétylamino, hydroxy, sulfato, alcoxy à 1 à 4 atomes de carbone, sulfo, carboxy, phényle, naphtyle, phényle substitué par les radicaux sulfo, carboxy, méthyle, éthyle, méthoxy, éthoxy, chloro, carbamoyle et/ou sulfamoyle, et naphtyle substitué par les radicaux chloro, méthyle, méthoxy, éthoxy, sulfo et/ou carboxy, ou bien $R^2$ est un groupe cyclohexyle, $R^3$ est un atome d'hydrogène ou un groupe alkyle à 1 à 4 atomes de carbone pouvant être substitué par 1 ou 2 substituants qui appartiennent au groupe comprenant les radicaux acétylamino, hydroxy, sulfato, alcoxy à 1 à 4 atomes de carbone, sulfo, carboxy, phényle, naphtyle, phényle substitué par les radicaux sulfo, carboxy, méthyle, éthyle, méthoxy, éthoxy, chloro, carbamoyle et/ou sulfamoyle, et naphtyle substitué par les radicaux chloro, méthyle, méthoxy, éthoxy, sulfo et/ou carboxy, ou bien $R^3$ est un radical phényle ou naphtyle, les deux étant nonsubstitués ou pouvant être substitués par les radicaux carboxy, sulfo, alkyle à 1 à 4 atomes de carbone, alcoxy à 1 à 4 atomes de carbone, hydroxy et/ou chloro, ou bien où $R^2$ et $R^3$ forment, ensemble avec l'atome d'azote, le radical morpholine, pipéridine ou pipérazine.

17. Procédé de préparation des composés selon la revendication 1, caractérisé en ce qu'on fait réagir un composé de formule générale (2)

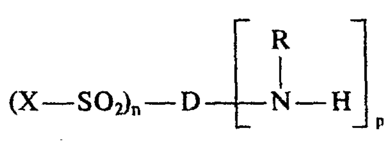

(2)

dans laquelle D, R, X, n et p ont la signification donnée dans la revendication 1, sur un composé de difluorotriazine de formule générale (3)

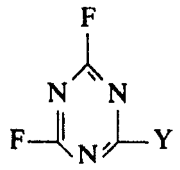

(3)

dans laquelle Y a la signification donnée dans la revendication 1, avec élimination d'une mole d'acide fluorhydrique, ou bien que l'on fait réagir un composé de formule générale (2), tout d'abord sur de la trifluoro-2,4,6 triazine-1,3,5 pour obtenir le composé de difluorotriazine de formule générale (4)

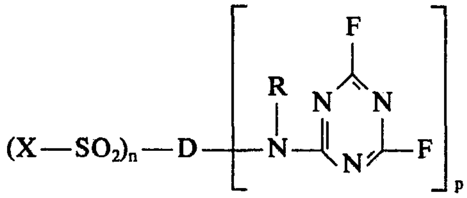

(4)

dans laquelle D, R, X, n et p ont la signification donnée dans la revendication 1, ce composé de formule (4) étant ensuite mis à réagir sur la quantité équimolaire d'une amine de formule générale (5)

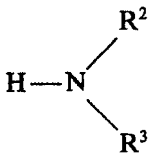

(5)

dans laquelle $R^2$ et $R^3$ ont la signification donnée dans la revendication 1, ou bien que l'on fait réagir un composant de départ du radical colorant D, qui contient en un ou deux exemplaires le groupe défini ci-dessus de formule $-SO_2-X$, sur un deuxième composant de départ de la molécule de colorant D, qui contient le radical monofluorotriazinylamino de formule (3 a)

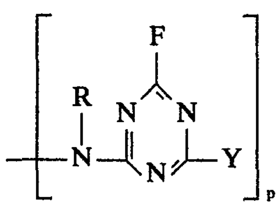

(3 a)

R, Y et p ayant la signification donnée dans la revendication 1, ou bien que l'on fait réagir un composant de départ du radical colorant D, qui contient en un ou deux exemplaires le groupe ci-dessus défini $-SO_2-X$ et, en un ou deux exemplaires, le radical monofluorotriazinylamino de formule (3 a), sur un deuxième composant de départ de D.

18. Utilisation des composés selon la revendication 1 en tant que colorants.

19. Préparations contenant un composé selon la revendication 1.